(19) Europäisches Patentamt
European Patent Office
Office européen des brevets

(11) **EP 4 505 655 B1**

(12) **EUROPEAN PATENT SPECIFICATION**

(45) Date of publication and mention
of the grant of the patent:
**22.07.2026 Bulletin 2026/30**

(21) Application number: **23721006.7**

(22) Date of filing: **06.04.2023**

(51) International Patent Classification (IPC):
*H04L 5/00* $^{(2006.01)}$   *H04L 25/02* $^{(2006.01)}$

(52) Cooperative Patent Classification (CPC):
**H04L 5/0051; H04L 5/0016; H04L 5/0021;
H04L 5/0053; H04L 5/0094; H04L 25/0232;**
H04L 5/001; H04L 5/0023

(86) International application number:
**PCT/IB2023/053547**

(87) International publication number:
**WO 2023/194955 (12.10.2023 Gazette 2023/41)**

(54) **DEMODULATION REFERENCE SIGNAL IN A COMMUNICATION NETWORK**

DEMODULATIONSREFERENZSIGNAL IN EINEM KOMMUNIKATIONSNETZ

SIGNAL DE RÉFÉRENCE DE DÉMODULATION DANS UN RÉSEAU DE COMMUNICATION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.04.2022 US 202263328224 P**

(43) Date of publication of application:
**12.02.2025 Bulletin 2025/07**

(73) Proprietor: **Telefonaktiebolaget LM Ericsson
(publ)
164 83 Stockholm (SE)**

(72) Inventors:
• **MURUGANATHAN, Siva
Stittsville, Ontario K2S 0R3 (CA)**
• **ERNSTRÖM, Per
117 50 Stockholm (SE)**
• **NILSSON, Andreas
413 13 Göteborg (SE)**
• **FRENNE, Mattias
754 43 Uppsala (SE)**
• **ZHANG, Jianwei
170 62 Solna (SE)**

(74) Representative: **Ericsson
Patent Development
Torshamnsgatan 21-23
164 80 Stockholm (SE)**

(56) References cited:
**EP-A1- 3 591 881      WO-A1-2020/227139
US-A1- 2021 045 101**

• **QUALCOMM INCORPORATED: "Remaining
details on DMRS based semi-open-loop", vol.
RAN WG1, no. Athens, Greece; 20170213 -
20170217, 7 February 2017 (2017-02-07),
XP051221395, Retrieved from the Internet
<URL:http://www.3gpp.org/ftp/tsg_ran/
WG1_RL1/TSGR1_88/Docs/> [retrieved on
20170207]**
• **ERICSSON: "On Remaining Issues of DMRS
Based Semi-Open-Loop", vol. RAN WG1, no.
Athen, Greece; 20170213 - 20170217, 12 February
2017 (2017-02-12), XP051209520, Retrieved from
the Internet <URL:http://www.3gpp.org/ftp/
Meetings_3GPP_SYNC/RAN1/Docs/> [retrieved
on 20170212]**

**Description**

TECHNICAL FIELD

The present application relates generally to a communication network and relates more particularly to a demodulation reference signal in such a network.

BACKGROUND

A demodulation reference signal is a reference signal used for demodulation of an associated data channel. A receiver calculates channel estimates from the demodulation reference signal and uses those channel estimates to demodulate the associated data channel.

For multi-user multiple-input multiple-output (MU-MIMO), in which multiple communication devices are scheduled simultaneously to receive a shared data channel, multiple demodulation reference signals must be transmitted for the respective communication devices. The number of demodulation reference signals that can be transmitted while maintaining orthogonality between those signals limits the number of communication devices that can be scheduled simultaneously in MU-MIMO and therefore in turn limits system throughput.

Known approaches increase the number of demodulation reference signals that can be transmitted on the same time-frequency resources by applying a frequency-domain orthogonal cover code (OCC) to the demodulation reference signals. Challenges exist, though, in using such an OCC for some types of demodulation reference signal transmission schemes and/or for some frequency bandwidth allocations. Patent document US2021/045101A1 discloses a method to minimise the overhead of a reference signal by providing a method for allowing a terminal to configure necessary information and feed it back such that a base station selects a DMRS suitable for a transmission environment from among a plurality of DMRS structures.

SUMMARY

The invention is solely defined by appended claims 1-15.

BRIEF DESCRIPTION OF THE DRAWINGS

Figure 1 is a block diagram of a communication network according to some embodiments.
Figure 2 is a block diagram of a communication device configured to demodulate a data channel using a demodulation reference signal according to some embodiments.
Figure 3 is a block diagram of a demodulator according to some embodiments.
Figure 4 is a block diagram of a demodulator according to other embodiments.
Figure 5 is a block diagram of a demodulator according to yet other embodiments.
Figure 6A is a block diagram of DM-RS mapping for type-1 DM-RS according to some embodiments.
Figure 6B is a block diagram of DM-RS mapping for type-2 DM-RS according to some embodiments.
Figure 7 is a block diagram of single-symbol and double-symbol DM-RS with 2 and 1 additional DM-RS symbol(s) according to some embodiments.
Figure 8 is a block diagram of a bandwidth part when both first and last resource block groups of the bandwidth part have only 1 resource block.
Figure 9 is a block diagram of orphan resource elements according to some embodiments.
Figure 10 is a block diagram of orphan resource elements according to some other embodiments.
Figure 11 is a block diagram of resource allocation according to some embodiments that allocate orphan resource elements to DMRS and other embodiments that allocate orphan resource elements to PDSCH.
Figure 12 is a block diagram of channel estimation with orphan DMRS resource elements according to some embodiments.
Figure 13 is a block diagram of channel estimation with orphan DMRS resource elements according to other embodiments.
Figure 14 is a block diagram of channel estimation with orphan DMRS resource elements according to yet other embodiments.
Figure 15 is a block diagram of channel estimation with orphan DMRS resource elements according to still other embodiments.
Figure 16 is a block diagram of channel estimation with orphan DMRS resource elements according to further embodiments.

Figure 17 is a block diagram of channel estimation with orphan DMRS resource elements according to other embodiments.

Figure 18 is a block diagram of channel estimation with orphan DMRS resource elements according to yet other embodiments.

Figure 19 is a logic flow diagram of a method performed by a communication device according to some embodiments.

Figure 20 is a logic flow diagram of a method performed by a communication device according to other embodiments.

Figure 21 is a logic flow diagram of a method performed by a communication device according to yet other embodiments.

Figure 22 is a logic flow diagram of a method performed by a communication device according to still other embodiments.

Figure 23 is a logic flow diagram of a method performed by a communication device according to some embodiments.

Figure 24 is a logic flow diagram of a method performed by a network node according to some embodiments.

Figure 25 is a logic flow diagram of a method performed by a network node according to other embodiments.

Figure 26 is a logic flow diagram of a method performed by a network node according to yet other embodiments.

Figure 27 is a logic flow diagram of a method performed by a network node according to still other embodiments.

Figure 28 is a logic flow diagram of a method performed by a network node according to some embodiments.

Figure 29 is a block diagram of a communication device according to some embodiments.

Figure 30 is a block diagram of a network node according to some embodiments.

Figure 31 is a block diagram of a communication system in accordance with some embodiments.

Figure 32 is a block diagram of a user equipment according to some embodiments.

Figure 33 is a block diagram of a network node according to some embodiments.

Figure 34 is a block diagram of a host according to some embodiments.

Figure 35 is a block diagram of a virtualization environment according to some embodiments.

Figure 36 is a block diagram of a host communicating via a network node with a UE over a partially wireless connection in accordance with some embodiments.

## DETAILED DESCRIPTION

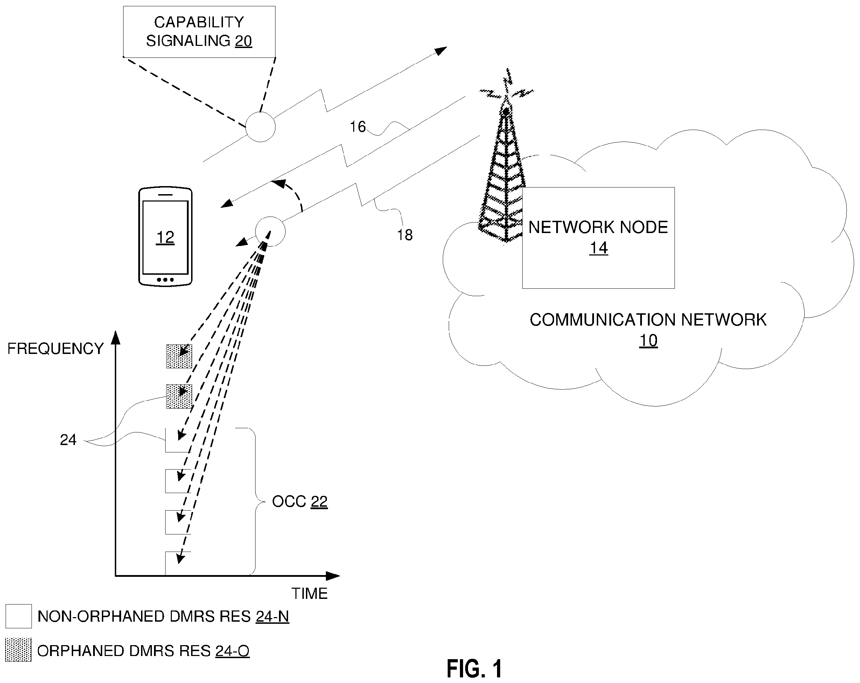

Figure 1 shows a communication network 10 configured to provide communication service to a communication device 12, e.g., a user equipment (UE). The communication network 10 includes a network node 14 in this regard, e.g., a radio network node.

The network node 14 as shown is configured to transmit a data channel 16 to the communication device 12, e.g., for conveying user data to the communication device 12. The data channel 16 may for example be a shared data channel shared by multiple communication devices. In one such embodiment, the data channel 16 may be a Physical Downlink Shared Channel (PDSCH).

The network node 14 also transmits a demodulation reference signal 18 to the communication device 12. The communication device 12 is configured to use the demodulation reference signal 18 to demodulate the data channel 16. The communication device 12 for example calculates channel estimates from the demodulation reference signal 18 and demodulates the data channel 16 using those channel estimates.

The network node 14 as shown maps the demodulation reference signal 18 to demodulation reference signal resource elements 24. These demodulation reference signal resource elements 24 are resource elements (e.g., time-frequency resources) allocated for the demodulation reference signal 18. The network node 14 then transmits the demodulation reference signal 18 on those demodulation reference signal resource elements 24. In some embodiments, as shown, the demodulation reference signal 18 is mapped to demodulation reference signal resource elements 24 in the frequency domain according to a frequency comb pattern, e.g., according to a type 1 frequency-domain mapping scheme.

In some embodiments, such as where the data channel 16 is shared by multiple communication devices (not shown), the network node 14 applies an orthogonal cover code (OCC) 22 to the demodulation reference signal 18, e.g., a frequency-domain OCC with a length of 4. In this case, different demodulation reference signals for different communication devices may be separated in the code domain via different OCCs, so that the multiple different demodulation reference signals can be transmitted on the same demodulation reference signal resource elements 24.

Depending on the frequency bandwidth allocation of the data channel 16 and/or the demodulation reference signal 18, though, the demodulation reference signal 18 may be mapped in the frequency domain to a number of demodulation reference signal resource elements 24 that is not a multiple of the length of the OCC 22 applied in the frequency domain to the demodulation reference signal 18. In this case, one or more of the demodulation reference signal resource elements 24 (e.g., on an edge of the frequency bandwidth allocation) are "orphaned" and are therefore appropriately referred to as one or more "orphaned" demodulation reference signal resource elements 24-O. In some embodiments, an orphaned demodulation reference signal resource element does not belong to any set of demodulation reference signal resource elements 24 to which the full OCC 22 has been applied, e.g., at least for a given cyclic shift of the OCC 22. An orphaned demodulation reference signal resource element may thereby only belong to a set of one or more demodulation reference signal resource elements 24 to which only a portion of the OCC 22 has been applied, e.g., at least for a given cyclic shift of the OCC 22.

As shown in the example of Figure 1, for instance, the demodulation reference signal 18 is mapped to 6 demodulation reference signal resource elements 24, whereas the length of the OCC is 4. Since the number of demodulation reference signal resource elements 24 to which the demodulation reference signal 18 is mapped (6) is not a multiple of the length of the OCC 22 (4), two of the demodulation reference signal resource elements 24 are orphaned demodulation reference signal resource elements 24-O. Indeed, the full length-4 OCC 22 is applied to the demodulation reference signal 18 as mapped to a set of non-orphaned demodulation reference signal resource elements 24-N, at least for a given cyclic shift of the OCC 22, whereas only a portion (2 elements) of the OCC 22 is applied to the demodulation reference signal 18 as mapped to the 2 orphaned demodulation reference signal elements 24-O.

Some embodiments herein introduce capability signaling 20 related to the capability of the communication device 12 to handle orphaned demodulation reference signal elements 24-O. Some embodiments in this regard equip the communication device 12 with the capability to demodulate the data channel 16 using the demodulation reference signal 18, even if the demodulation reference signal 18 is mapped to one or more orphaned demodulation reference signal reference elements 24-O. In some embodiments, then, the network node 14 may condition mapping of the downlink reference signal 18 to one or more orphaned demodulation reference signal resource elements on the communication device 12 signaling that it has the capability to handle such orphaned element(s) 24-O. Otherwise, if the communication device 12 does not signal such capability, the network node 14 may restrict scheduling of the data channel 16 and/or the demodulation reference signal 18, such that the network node 14 refrains from mapping the demodulation reference signal 18 to orphaned demodulation reference signal resource elements 24-O, e.g., in favor of mapping the data channel 16 to such elements 24-O.

More particularly, as shown in Figure 1, the communication device 12 transmits capability signaling 20 to the communication network 10, e.g., to the network node 14. The capability signaling 20 indicates the communication device's capability with regard to demodulation of the data channel 16 using the demodulation reference signal 18.

In some embodiments, the capability signaling 20 indicates that the communication device 12 is capable of demodulating the data channel 16 using a demodulation reference signal 18 that is mapped to orphaned demodulation reference signal resource elements 24-O. In other embodiments, the capability signaling 20 indicates that the communication device 12 is capable of demodulating the data channel 16 using a demodulation reference signal 18 that is mapped in the frequency domain to a number of demodulation reference signal resource elements 24 that is not a multiple of the length of the OCC 22 applied in the frequency domain to the demodulation reference signal 18. In yet other embodiments, the capability signaling 20 indicates that the communication device 12 is capable of demodulating the data channel 16 using a demodulation reference signal 18 that is scheduled without restriction on the number of resource elements, resource blocks, or resource block groups to which the demodulation reference signal 18 is mapped.

In some embodiments, resource elements 24 are grouped into blocks referred to as resource blocks, e.g., where each resource block includes a certain number (e.g., 6) of demodulation reference signal reference elements 24. In one embodiment, mapping the demodulation reference signal 18 to an even number of resource blocks means that the demodulation reference signal 18 will be mapped to a number of demodulation reference signal resource elements 24 that is a multiple of the length of the OCC 22. That is, in this case, the demodulation reference signal 18 is not mapped to any orphaned demodulation reference signal resource elements 24-O. On the contrary, mapping the demodulation reference signal 18 to an odd number of resource blocks means that the demodulation reference signal 18 will be mapped to a number of demodulation reference signal resource elements 24 that is not a multiple of the length of the OCC 22. That is, in this case, the demodulation reference signal 18 is mapped to at least some orphaned demodulation reference signal resource element(s) 24-O.

Accordingly, in some embodiments, the capability signaling 20 may be framed in terms of resource blocks. For example, the capability signaling 20 may indicate that the communication device 12 is capable of demodulating the data channel 16 using a demodulation reference signal 18 mapped in the frequency domain to an odd number of resource blocks or to a set of resource block groups that includes a resource block group with an odd number of resource blocks. As another example, the capability signaling 20 may indicate that the communication device 12 is capable of demodulating the data channel 16 using a demodulation reference signal 18 mapped in the frequency domain to an odd number of contiguous resource blocks or to an odd number of contiguous resource blocks within any given resource block group.

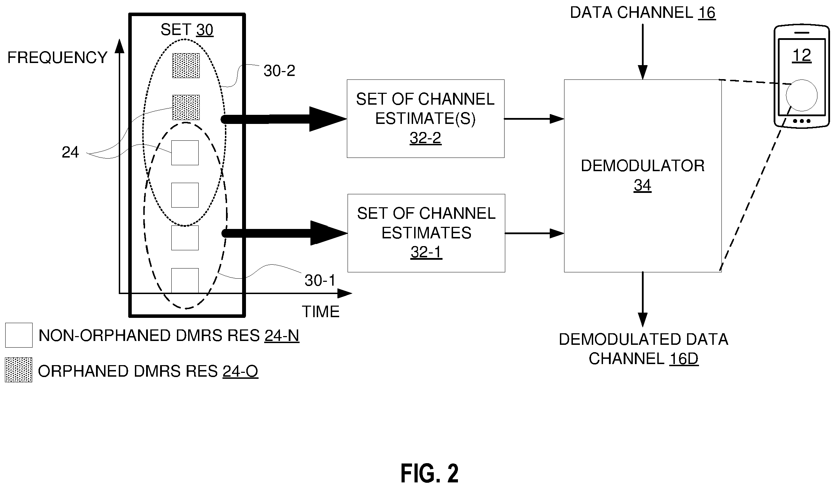

Figure 2 now shows some embodiments for equipping the communication device 12 with the capability to demodulate the data channel 16 using the demodulation reference signal 18, even if the demodulation reference signal 18 is mapped to one or more orphaned demodulation reference signal reference elements 24-O. According to Figure 2, the communication device 12 receives the demodulation reference signal 18 on a set 30 of demodulation reference signal resource elements 24. This set 30 of demodulation reference signal resource elements 24 includes a set of one or more orphaned demodulation reference signal resource elements 24-O. As shown, for example, the set of one or more orphaned demodulation reference signal resource elements 24-O includes one or more demodulation reference signal resource elements 24 at an edge of a frequency range spanned by the demodulation reference signal 18.

In some embodiments, this set of one or more orphaned demodulation reference signal resource elements 24-O includes a number of demodulation reference signal resource elements 24 equal to a remainder left after dividing the number of demodulation reference signal resource elements 24 in the set 30 on which the demodulation reference signal 18 is received by the length of the OCC 22. In other embodiments, the set of one or more orphaned demodulation reference signal resource elements 24-O includes a number of demodulation reference signal resource elements 24 that is less than the length of the OCC 22.

In this context, the communication device 12 forms a first set 32-1 of channel estimates from the demodulation reference signal 18 as received on a first portion 30-1 of the demodulation reference signal resource elements 24 in the set 30. Here, the first portion 30-1 excludes the set of one or more orphaned demodulation reference signal resource elements 24-O. In some embodiment, forming the first set 32-1 of channel estimates entails applying the OCC 22 to the demodulation reference signal 18 received on the first portion 30-1 of the demodulation reference signal resource elements 24 in the set 30.

The communication device 12 also forms a second set 32-2 of one or more channel estimates from the demodulation reference signal 18 as received on a second portion 30-2 of the demodulation reference signal resource elements 24 in the set 30. Here, the second portion 30-2 includes the set of one or more orphaned demodulation reference signal resource elements 24-O. In some embodiments, forming the second set 32-2 of one or more channel estimates entails applying a cyclically shifted version of the OCC 22 to the demodulation reference signal 18 received on the second portion 30-2 of the demodulation reference signal resource elements 24 in the set 30. This cyclically shifted version of the OCC 22 may for example be cyclically shifted by a remainder left after dividing the number of demodulation reference signal resource elements 24 to which the demodulation reference signal 18 is mapped (e.g., 6) by the length of the OCC 22 (e.g., 4). In the example of Figure 2, then, the cyclically shifted version of the OCC 22 is cyclically shifted by 2.

In some embodiments, the second set 32-2 of one or more channel estimates includes only one channel estimate. This may be the case, for example, where the second portion 30-2 of the demodulation reference signal resource elements 24 in the set 30 spans only a number of demodulation reference signal resource elements 24 equal to the length of the OCC 22.

In other embodiments, the second set 32-2 of one or more channel estimates includes multiple channel estimates. This may be the case, for example, where the second portion 30-2 of the demodulation reference signal resource elements 24 in the set 30 spans a number of demodulation reference signal resource elements 24 that is more than the length of the OCC 22.

Having formed the first and second sets 32-1, 32-2, the communication device 12 as shown demodulates the data channel 16 using the first set 32-1 of channel estimates and the second sets 32-2 of one or more channel estimates. As shown, for instance, the communication device 12 includes a demodulator 34 that receives the first and second sets 32-1, 32-2 of channel estimates as input, and demodulates the data channel 16 using those sets 32-1, 32-2 to produce a demodulated data channel 16D.

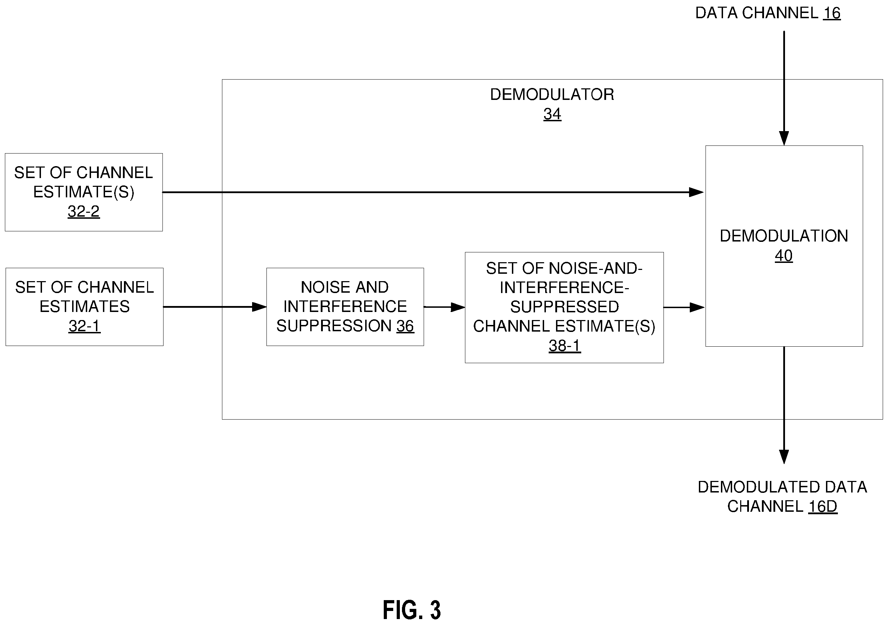

Figure 3 shows additional details of such demodulation according to one embodiment. As shown, the demodulator 34 performs noise and interference suppression 36 for the first set 32-1 of channel estimates to obtain a first set 38-1 of noise-and-interference-suppressed channel estimates. However, the demodulator 34 refrains from performing noise and interference suppression for the second set 32-2 of one or more channel estimates. The demodulator 34 then demodulates the data channel 16 using the first set 38-1 of noise-and-interference-suppressed channel estimates and using the second set 32-2 of one or more channel estimates.

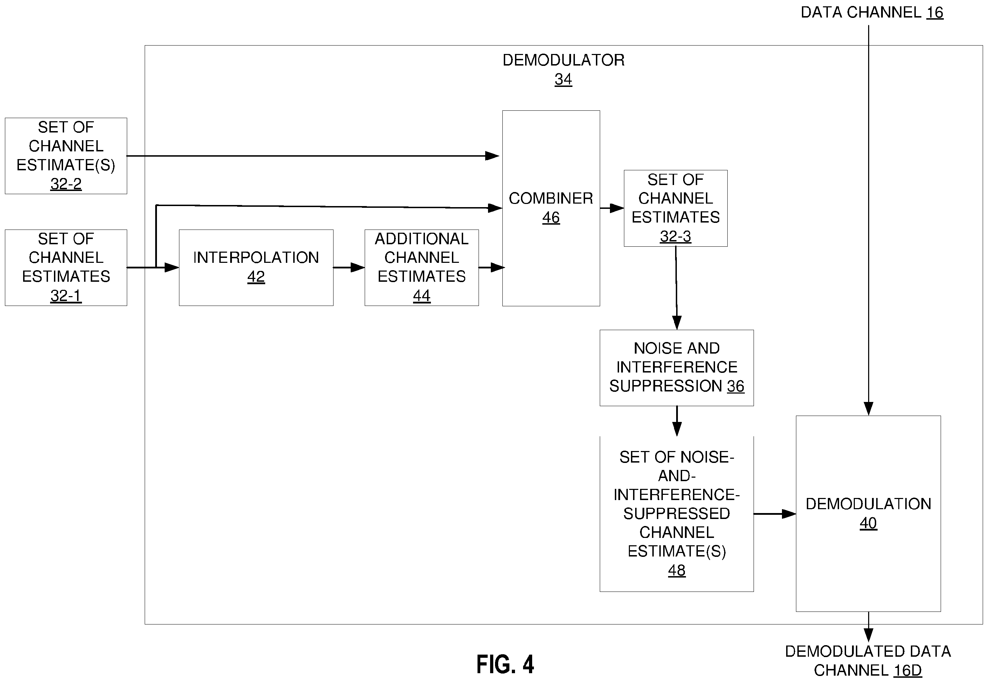

Figure 4 shows additional details of demodulation according to another embodiment. As shown, the demodulator 34 obtains additional channel estimates 44 by performing interpolation 42 between successive channel estimates in the first set 32-1 of channel estimates. The demodulator 34 (e.g., via combiner 46) then obtains a third set 32-3 of channel estimates that includes the first set 32-1 of channel estimates, the second set 32-2 of one or more channel estimates, and the additional channel estimates 44. In some embodiments, channel estimates in the third set 32-3 are for respective resource elements that are equally spaced in the frequency domain.

The demodulator 34 then performs noise and interference suppression 36 for the third set 32-3 of channel estimates to obtain a third set 48 of noise-and-interference-suppressed channel estimates. The demodulator 34 performs demodulation 40 of the data channel 16 using this third set 48 of noise-and-interference-suppressed channel estimates.

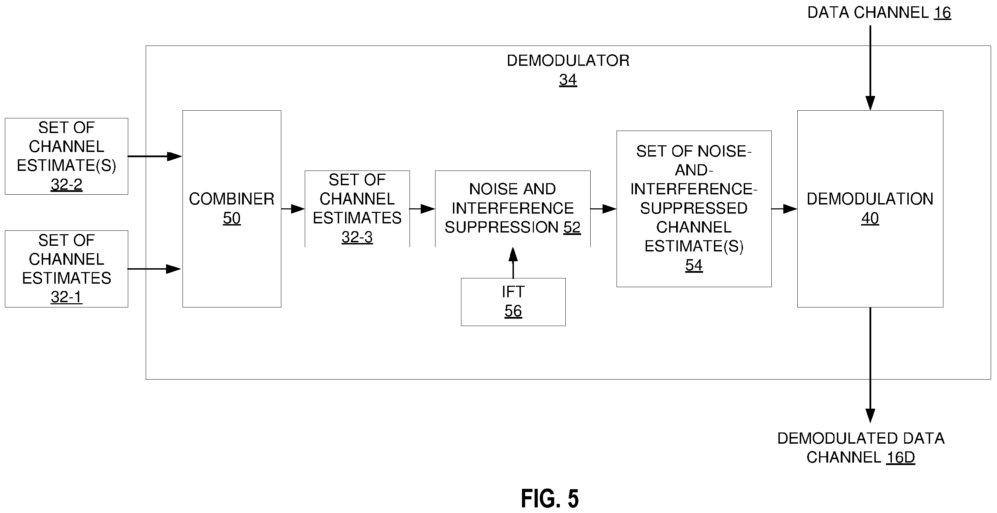

Figure 5 shows additional details of demodulation according to yet another embodiment. As shown, the demodulator 34 obtains a third set 32-2 of channel estimates that includes the first set 32-1 of channel estimates and the second set 32-2 of one or more channel estimates. Then, using an inverse Fourier transform (IFT) 56 that transforms input samples non-equally spaced in the frequency domain, the demodulator 34 performs noise and interference suppression 52 for the third set 32-3 of channel estimates to obtain a third set 54 of noise-and-interference-suppressed channel estimates. The demodulator 34 performs demodulation 40 of the data channel 16 using this third set 54 of noise-and-interference-suppressed channel estimates.

As an example, some embodiments herein are applicable in the following context where the communication network is a New Radio (NR) network, the communication device 12 is a user equipment (UE), the network node 14 is a gNB, the data channel 16 is a Physical Downlink Shared Channel (PDSCH), the demodulation reference signal 18 is a Demodulation Reference Signal (DMRS or DM-RS), resource elements 24 are Resource Elements (REs), and resource blocks are Physical Resource Blocks (PRBs) or Virtual Resource Blocks (VRBs).

NR numerology

In the time domain, NR downlink (DL) and uplink (UL) transmissions are organized into equally sized subframes of 1 ms each. A subframe is further divided into multiple slots of equal duration. The slot length depends on subcarrier spacing. For 15 kHz subcarrier spacing, there is only one slot per subframe. In general, for $15 \cdot 2^\mu$ kHz subcarrier spacing, where $\mu \in \{0,1,2,3,4\}$, there are $2^\mu$ slots per subframe. Finally, each slot consists of 14 symbols (unless extended cyclic prefix is configured).

In the frequency domain, a system bandwidth is divided into RBs each corresponding to 12 contiguous subcarriers. One subcarrier during one symbol interval forms one resource element (RE).

DM-RS for PUSCH

The DeModulation Reference Signal (DM-RS) for the Physical Uplink Shared Channel (PUSCH) is an UL reference signal that consists of a pseudo-random Quadrature Phase Shift Keying (QPSK) sequence for Cyclic Prefix Orthogonal Frequency Division Multiplexing (CP-OFDM) or low Peak-to-Average-Power Ratio (low-PAPR) sequences for Discrete Fourier Transform Spread OFDM (DFT-S-OFDM). The DM-RS is used for demodulating of a PUSCH such that the receiver (i.e., the gNB) can handle time-varying and frequency-selective channels. DM-RS is confined to the scheduled PUSCH bandwidth and duration.

The mapping of DM-RS to REs is configurable in both frequency and time domain. In the frequency domain, there are two mapping types: type 1 (comb based) or type 2 (non-comb based). In the time-domain, DM-RS can be either single symbol or double symbol, where the latter means that DM-RS is mapped in pairs of two adjacent symbols. Furthermore, a UE can be configured with one, two, three, or four single-symbol DM-RS and one or two double-symbol DM-RS. In low-Doppler scenarios, one DM-RS symbol may be sufficient whereas in high-Doppler scenarios, additional DM-RS symbols are required.

The frequency-domain starting position of DM-RS is the same as the frequency-domain starting position of PUSCH. The time-domain starting position of DM-RS depends on the PUSCH mapping type. For PUSCH mapping type A (slot-based scheduling), the first DM-RS symbol is in the third or fourth symbol (i.e., symbol 2 or 3) of a slot, configured by higher-layer parameter *dmrs-TypeA-Position* in the Master Information Block (MIB). For PUSCH mapping type B (non-slot-based scheduling), the first DM-RS symbol of a slot is the same as the first PUSCH symbol of a slot.

DM-RS for PUSCH is Radio Resource Control (RRC) configured through the *DMRS-UplinkConfig* IE, for PUSCH scheduled by Downlink Control Information (DCI) format 0_1 or DCI format 0_2.

*DM-RS configuration*

DM-RS for PUSCH is configured with the following in RRC (see ASN code in 3GPP TS 38.331 version 16.1.0).

```
DMRS-UplinkConfig ::=           SEQUENCE {
    dmrs-Type                   ENUMERATED {type2}                OPTIONAL,  -- Need S
    dmrs-AdditionalPosition     ENUMERATED {pos0, pos1, pos3}     OPTIONAL,  -- Need S
    phaseTrackingRS             SetupRelease { PTRS-UplinkConfig } OPTIONAL,  -- Need M
    maxLength                   ENUMERATED {len2}                 OPTIONAL,  -- Need S
    transformPrecodingDisabled    SEQUENCE {
        scramblingID0           INTEGER (0..65535)                OPTIONAL,  -- Need S
        scramblingID1           INTEGER (0..65535)                OPTIONAL,  -- Need S
        ...,
        [[
        dmrs-Uplink-r16         ENUMERATED {enabled}              OPTIONAL   -- Need R
        ]]
    }                                                             OPTIONAL,  -- Need R

    transformPrecodingEnabled     SEQUENCE {
        nPUSCH-Identity         INTEGER(0..1007)                  OPTIONAL,  -- Need S
        sequenceGroupHopping    ENUMERATED {disabled}             OPTIONAL,  -- Need S
        sequenceHopping         ENUMERATED {enabled}              OPTIONAL,  -- Need S
        ...,
        [[
        dmrs-UplinkTransformPrecoding-r16   SetupRelease {DMRS
                                        UplinkTransformPrecoding-r16}
                                                                  OPTIONAL   -- Need M
        ]]
    }                                                             OPTIONAL,  -- Need R
    ...
}
DMRS-UplinkTransformPrecoding-r16  ::=  SEQUENCE {
    pi2BPSK-ScramblingID0       INTEGER(0..65535)                 OPTIONAL,  -- Need S
    pi2BPSK-ScramblingID1       INTEGER(0..65535)                 OPTIONAL   -- Need S
}
```

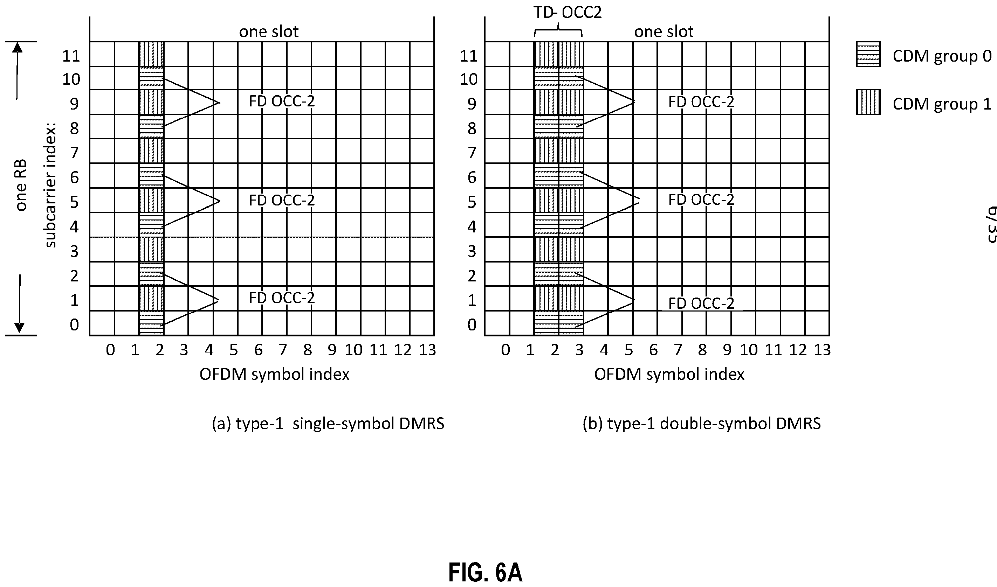

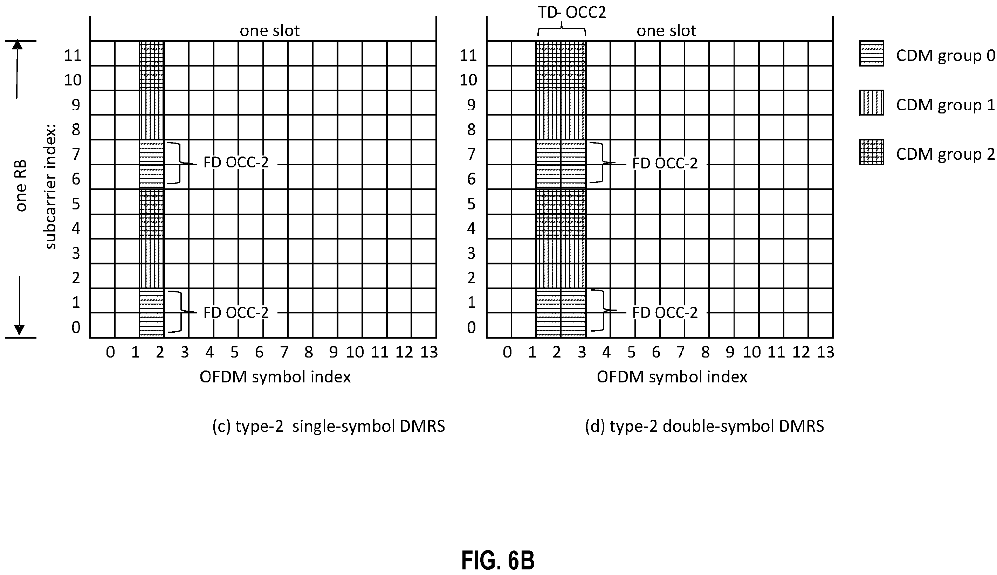

DM-RS for PUSCH is configurable with respect to, e.g., the DM-RS frequency-domain mapping type (type 1 or type 2), configured by the RRC parameter *dmrs-Type.* Type 1 is comb based with 2 code division multiplexing (CDM) groups, whereas type 2 is non-comb based with 3 CDM groups. For DFT-S-OFDM, only type 1 is supported. In Figures 6A-6B, an illustration of the two DM-RS types is provided. Note that there are multiple DM-RS ports per CDM group, which are separated using frequency-domain (and time-domain, for double-symbol DM-RS) orthogonal cover code(s) (OCC(s)).

For single-symbol DM-RS, there exist 4 and 6 orthogonal DM-RS ports (2 DM-RS ports per CDM group, separated using a length-2 FD-OCC) for type 1 and type 2, respectively.

For double-symbol DM-RS, there exist 8 and 12 orthogonal DM-RS ports (4 DM-RS ports per CDM group, separated using a length-2 FD-OCC combined with a length-2 TD-OCC) for type 1 and type 2, respectively.

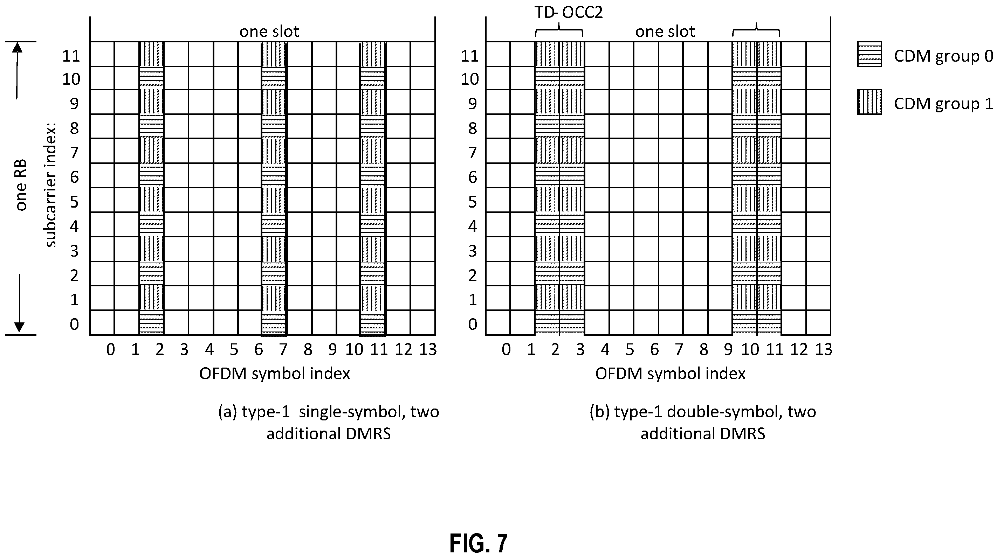

In some embodiments, DM-RS for PUSCH is alternatively or additionally configurable with respect to any additional DM-RS symbols (0, 1, 2 or 3 for single-symbol DM-RS and 0 or 1 for double-symbol DM-RS), configured by the RRC parameter *dmrs-AdditionalPosition.* The position of additional DM-RS depends on the PUSCH mapping type and PUSCH duration according to a predefined table. Note that it is not possible to configure a TD-OCC over additional (i.e., noncontiguous) DM-RS. In Figure 7, an example is shown of single-symbol (left part of the figure) and double-symbol (right part of the figure) DM-RS with 2 and 1 additional DM-RS symbol(s), respectively. Figure 7 is valid for DM-RS type 1 and front-loaded PUSCH (i.e., PUSCH mapping type A) of duration 14 symbols.

In some embodiments, DM-RS for PUSCH is alternatively or additionally configurable with respect to the associated Phase Tracking Reference Signal (PT-RS) (if any), e.g., as configured by the RRC parameter *phaseTrackingRS.*

In some embodiments, DM-RS for PUSCH is alternatively or additionally configurable with respect to the maximum number of adjacent DM-RS symbols (1 or 2), e.g., as configured by the RRC parameter *maxLength.*

If transform precoding is disabled (i.e., if the waveform is CP-OFDM), DM-RS for PUSCH can be additionally and optionally configured with respect to scrambling ID 0 and 1, configured by RRC parameters *scramblingID0* and *scramblingID1,* respectively, which are used for generating the pseudo-random DM-RS sequence.

*DM-RS port mapping*

DM-RS ports are mapped to resource elements within one CDM group. DM-RS ports that belong to the same CDM group are separated by a length-2 FD-OCC (FD-OCC-2) (and a length-2 TD-OCC (TD-OCC-2), for double-symbol DM-RS). In NR Rel-16, the DM-RS sequence is mapped to the following subcarriers (for DFT-S-OFDM, only DM-RS type 1 is supported):

$$k = \begin{cases} 4n + 2k' + \Delta, & \text{for type 1,} \\ 6n + k' + \Delta, & \text{for type 2.} \end{cases}$$

Here, $k$ is the subcarrier index (which starts/ends at the first/last subcarrier within the scheduled PUSCH bandwidth), $n \in \{0,1,2,...\}$, $k' \in \{0,1\}$, and $\Delta$ is an offset that depends on the CDM group.

Table 1 and Table 2 show port-specific parameters for DM-RS type 1 and type 2. Here, $w_f(k')$, where $k' \in \{0,1\}$, is the FD-OCC and $w_t(l')$, where $l' = 0$ for single-symbol DM-RS and $l' \in \{0,1\}$ for double-symbol DM-RS, is the TD-OCC. Note that DM-RS ports in different CDM groups are separated by different offsets and that DM-RS ports within the same CDM group are separated through coding.

**Table 1: Parameters for PUSCH DM-RS configuration type 1 (reproduced from Table 6.4.1.1.3-1 of 3GPP TS 38.211). Here, $\tilde{p}$ denotes the DM-RS port.**

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

**Table 2: Parameters for PUSCH DM-RS configuration type 2 (reproduced from Table 6.4.1.1.3-2 of 3GPP TS 38.211). Here, $\tilde{p}$ denotes the DM-RS port.**

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |

(continued)

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

From the transmitter's perspective, the number of DM-RS ports used for PUSCH transmission coincides with the transmission rank, i.e., one DM-RS port per transmitted layer. The DM-RS port mapping is signaled to the UE from the gNB via DCI in Table 3 and Table 4. It is shown how such indication looks like for DCI format 0_1, CP-OFDM, single-symbol DM-RS type 1, and for transmission rank 1 and 2, respectively. Similar tables can be found in 3GPP 38.212 v17.1.0 for rank 3 and 4, double-symbol DM-RS, and for DM-RS type 2. Subcarriers, which are associated with a CDM group, that are not used for DM-RS can be used for PUSCH. After layer mapping, the DM-RS and the associated PUSCH are mapped to physical antennas through precoding.

**Table 3: Antenna ports for single-symbol DM-RS type 1, transform precoding is disabled, rank-1 transmission (reproduced from Table 7.3.1.1.2-8 of 3GPP 38.212).**

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

**Table 4: Antenna ports for single-symbol DM-RS type 1, transform precoding is disabled, rank-2 transmission (reproduced from Table 7.3.1.1.2-9 of 3GPP 38.212).**

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

DM-RS for PDSCH

DM-RS for the Physical Downlink Shared Channel (PDSCH) is a DL reference signal used for demodulating PDSCH. It is the DL counterpart to DM-RS for PUSCH and is similar, e.g., in terms of RRC configuration and port mapping to DM-RS for PUSCH except it is supported for CP-OFDM only (since DFT-S-OFDM is not supported in the DL of NR).

Resource blocks and resource allocation in frequency domain

A resource block in NR is defined as 12 consecutive subcarriers in the frequency domain. Point A serves as a common reference point for resource block grids. Common resource blocks are numbered from 0 and upwards in the frequency domain. Bandwidth part start is defined by common resource block number relative to common resource block 0. Virtual resource blocks are defined within a bandwidth part and numbered from 0 to the bandwidth part size, where the bandwidth part size is the number of resource blocks in a bandwidth part.

NR supports 2 downlink resource allocation schemes, type 0 and type 1. Frequency domain resource allocation is indicated in DCI field "Frequency domain resource assignment" for DCI formats 1_1/1_2.

*Type 0 resource allocation*

Type 0 is a bitmap-based allocation scheme. In type 0, the resource block assignment information includes a bitmap indicating the resource block groups (RBGs) used for PDSCH transmission. The RBG is a set of consecutive virtual resource blocks with rbg-Size configured as 2, 4, 8, or 16 resource blocks (denoted by P) depending on the bandwidth part size as specified in 3GPP TS 38.214 V17.0.0. Each bit in the bitmap maps to 1 RBG. The total number of RBGs for a downlink BWP is determined based on P, the start PRB of the BWP, and the size of BWP in number of PRBs.

For Type 0 resource allocation, non-interleaved VRB-to-PRB mapping is used (i.e., a VRB #k is mapped to PRB #k directly). The total number of RBGs ($N_{RBG}$) for downlink bandwidth part $i$ of size $N_{BWP,i}^{size}$ PRBs is given by

$$N_{RBG} = \left\lceil \left( N_{BWP,i}^{size} + \left( N_{BWP,i}^{start} \bmod P \right) \right) / P \right\rceil,$$

where $N_{BWP,i}^{size}$ and $N_{BWP,i}^{start}$ respectively denote the number of PRBs in downlink bandwidth part $i$ and the starting PRB of downlink bandwidth part (BWP) $i$. The sizes of the different RBGs are given as follows:

- the size of the first RBG is $RBG_0^{size} = P - N_{BWP,i}^{start} \bmod P$ ,

- the size of last RBG is $RBG_{last}^{size} = \left( N_{BWP,i}^{start} + N_{BWP,i}^{size} \right) \bmod P$ if $\left( N_{BWP,i}^{start} + N_{BWP,i}^{size} \right) \bmod P > 0$ and $P$ otherwise,

- the size of all other RBGs is $P$.

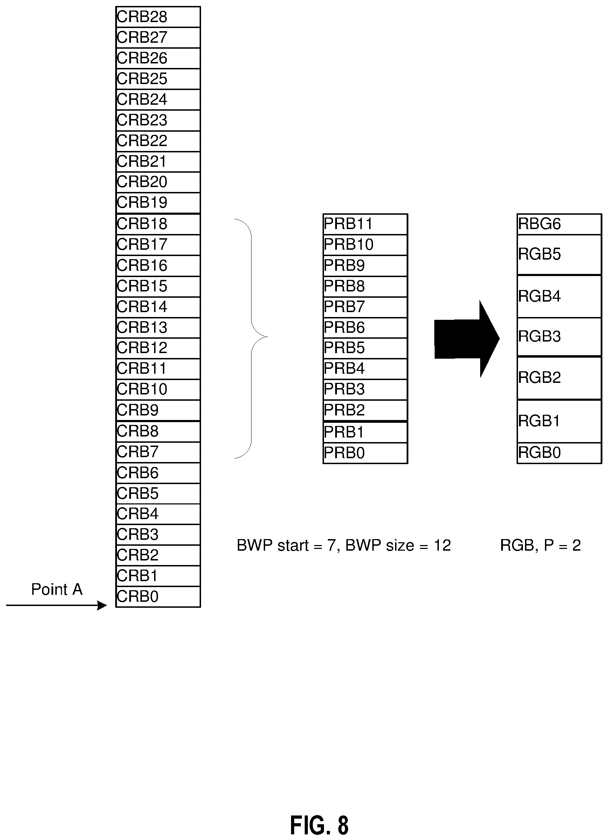

The grid of RBG in a BWP is based on the bandwidth part start, which is defined by common resource block (CRB). If for a BWP the bandwidth part start is configured with an odd CRB number, then the start RBG of this BWP consists of an odd number of RBs. And dependent on the bandwidth part start and bandwidth part size, the end RBG of a BWP can also be odd number of RBs. Figure 8 shows an example when both first and last RBG of a BWP have only 1 RB. In Figure 8, the bandwidth part start is CRB7, nominal RBG size is 2, and BWP size is 12.

*Type 1 resource allocation*

Type 1 uses resource indication value (RIV) to encode the resource allocation as a start position and length of the resource-block allocation. A set of contiguously allocated VRBs is indicated to the UE for PDSCH reception. For Type 1 resource allocation, VRB-to-PRB mapping can be either non-interleaved or interleaved as specified in 3GPP TS 38.211 V17.0.0.

For DCI format 1_2, in order to reduce the length of DCI field for frequency domain resource allocation, a higher layer parameter resourceAllocationType1GranularityDCI-1-2 can be configured as one of the values from {2,4,8,16}. When resourceAllocationType1GranularityDCI-1-2 is configured, the RIV is encoded according to the start and length of resource block group (RBS) as defined in Type 0, and with nominal RBG size P set as the configured granularity by resourceAllocationType1GranularityDCI-1-2.

When scheduling grant is received via DCI format 1_1, the RIV is defined using a starting VRB $RB_{start}$ and a length of contiguously allocated resource blocks $L_{RBs} \geq 1$ in an activated bandwidth part with size of $N_{BWP}^{size}$ resource blocks as defined in 3GPP TS 38.214 v17.1.0. if

$$(L_{RBs} - 1) \leq \text{floor}(N_{BWP}^{size}/2), \text{ then } RIV = N_{BWP}^{size}(L_{RBs} - 1) + RB_{start}$$

else,

$$RIV = N_{BWP}^{size}(N_{BWP}^{size} - L_{RBs} + 1) + (N_{BWP}^{size} - 1 - RB_{start})$$

When scheduling grant is received via DCI format 1_2, the RIV is defined using a starting RBG $RBG_{start}$ and a length in terms of virtually contiguously allocated resource blocks $L_{RBGs} \geq 1$ as defined in 3GPP TS 38.214. For this case, the RIVs are defined as follows: if

$$(L_{RBGs} - 1) \leq floor(N_{RBG}/2), \text{ then } RIV = N_{RBG}(L_{RBGs} - 1) + RBG_{start}$$

else,

$$RIV = N_{RBG}(N_{RBG} - L_{RBGs} + 1) + (N_{RBG} - 1 - RBG_{start})$$

For uplink resource allocation in frequency domain, 3 schemes have been defined in NR. Type 0 and Type 1 schemes are similar as downlink. Type 2 is used for interlaced PUSCH resource allocation which is used in unlicensed spectrum. The DCI formats 0_1/0_2 contain a "Frequency domain resource allocation" field to indicate the PUSCH transmission allocation. For a Type 1 configured grant, a higher layer parameter "frequencyDomainParameter" is used to configure the frequency resource allocation for PUSCH transmission with a Type1 configured grant.

For DCI format 0_2, similar as DCI format 1_2, a higher layer parameter resourceAllocationType1GranularityDCI-0-2 can be configured as one of the values from {2,4,8,16}.

<u>PRB bundling</u>

In NR, PRB bundling is defined using the precoding granularity $P'_{BWP,i}$ which is the number of consecutive resource blocks over which the UE may assume the precoder does not change. $P'_{BWP,i}$ can be equal to one of the values among {2, 4, wideband}.

If $P'_{BWP,i}$ is determined as "wideband", the UE is not expected to be scheduled with noncontiguous PRBs and the UE may assume that the same precoding is applied to the allocated resource associated with a same Transmission Configuration Indicator (TCI) state or a same Quasi-Colocation (QCL) assumption.

If $P'_{BWP,i}$ is determined as one of the values among {2, 4}, Precoding Resource Block Group (PRGs) partitions the bandwidth part *i* with $P'_{BWP,i}$ consecutive PRBs. The actual number of consecutive PRBs in each PRG could be one or more. The UE may assume the same precoding is applied for any downlink contiguous allocation of PRBs in a PRG.

The first PRG size is given by $P'_{BWP,i} - N_{BWP,i}^{start} \bmod P'_{BWP,i}$ .

The last PRG size given by $(N_{BWP,i}^{start} + N_{BWP,i}^{size}) \bmod P'_{BWP,i}$ if $(N_{BWP,i}^{start} + N_{BWP,i}^{size}) \bmod P'_{BWP,i} \neq 0$ , and the last PRG size is $P'_{BWP,i}$ if $(N_{BWP,i}^{start} + N_{BWP,i}^{size}) \bmod P'_{BWP,i} = 0$ .

The other PRGs have PRG size $P'_{BWP,i}$ . In the above equations, $N_{BWP,i}^{start}$ is the starting PRB of BWP *i*.

In NR, one or two PDSCHs may be scheduled with two allocations divided in the frequency domain called *FDMSchemeA* and *FDMSchemeB* as specified in 3GPP TS 38.214 V17.0.0. In the case of *FDMSchemeA,* a single PDSCH is scheduled with two different TCI states indicated in the scheduling DCI. In the case of *FDMSchemeB,* two PDSCHs carrying the same TB (with different redundancy versions scheduled scheduled with two different TCI states (one TCI state applicable per PDSCH) indicated in the scheduling DCI. For *FDMSchemeA* and *FDMSchemeB,* two resource allocations corresponding to the two TCI states indicated in the scheduling DCI are determined as follows.

If $P'_{BWP,i}$ is determined as "wideband", the first $\left\lceil \frac{n_{PRB}}{2} \right\rceil$ PRBs are assigned to the first TCI state and the remaining $\left\lfloor \frac{n_{PRB}}{2} \right\rfloor$ PRBs are assigned to the second TCI state, where $n_{PRB}$ is the total number of allocated PRBs for the UE.

If $P'_{BWP,i}$ is determined as one of the values among {2, 4}, even PRGs within the allocated frequency domain resources are assigned to the first TCI state and odd PRGs within the allocated frequency domain resources are assigned to the second TCI state, wherein the PRGs are numbered continuously in increasing order with the first PRG index equal to 0.

Some embodiments herein address certain challenge(s) in this context.

Heretofore, in NR, a maximum of 8 or 12 orthogonal DM-RS ports are supported for type 1 and type 2 DM-RS, respectively (this holds for both PUSCH in the UL and for PDSCH in the DL). For Multi-User Multiple Input Multiple Output (MU-MIMO), where several UEs are scheduled simultaneously, the maximum number of orthogonal DM-RS is a limiting factor, since heretofore at most 8 or 12 layers can be scheduled simultaneously unless non-orthogonal DM-RS ports are used (which results in worse channel-estimation performance compared to orthogonal DM-RS). To address this limitation, a larger number of orthogonal DMRS ports for downlink and uplink MU-MIMO (without increasing the DM-RS overhead) may be supported, only for CP-OFDM. Such support may strive for a common design between DL and UL DMRS and strive for up to 24 orthogonal DM-RS ports, where for each applicable DMRS type, the maximum number of orthogonal ports is doubled for both single- and double-symbol DMRS.

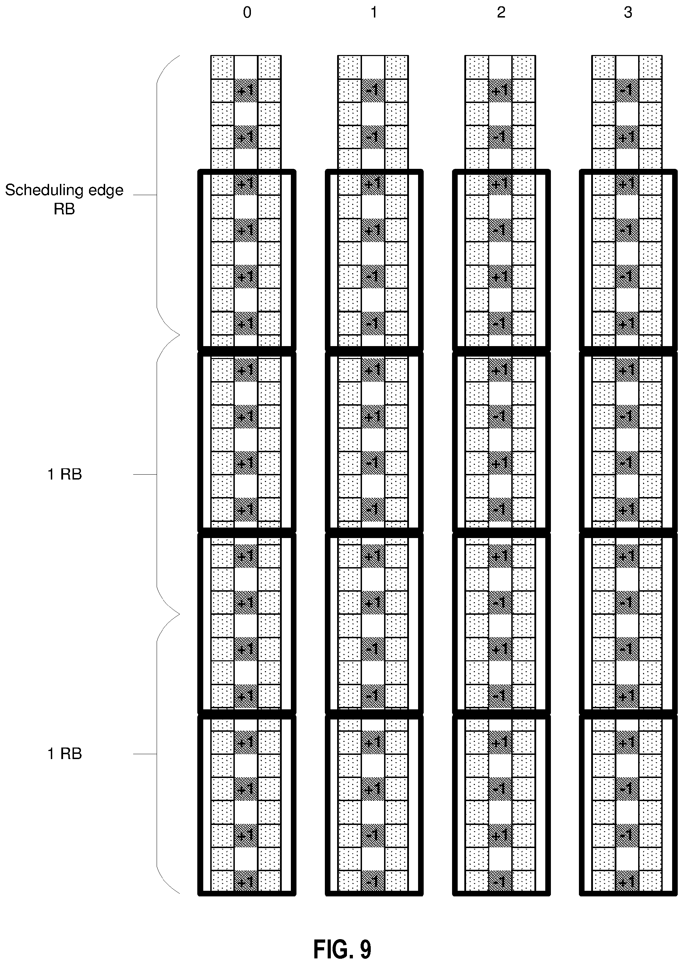

In one approach to solve the above problem, FD-OCCs of length 4 (FD-OCC-4) may be used in each code division multiplexing (CDM) group to support 4 DM-RS ports in each CDM group. However, in case of type-1 DM-RS, there are 6 REs in each CDM group per resource block (RB). Given FD-OCC-4 codes are orthogonal only when the number of DM-RS REs is a multiple of 4 REs, if the FD-OCC-4 solution is applied in case of type-1 DM-RS, 2 REs in one or many RBs would become "orphan" REs, which is a problem for channel estimation, as schematically illustrated in Figure 9. Figure 9 in particular shows an example of orphan REs at the scheduling edge for a new Type 1 Rel-18 DMRS design with increased FD-OCC length from 2 to 4. Here, three RBs are scheduled but the orphan problem at the scheduling edge would be the same for any odd number of scheduled RBs.

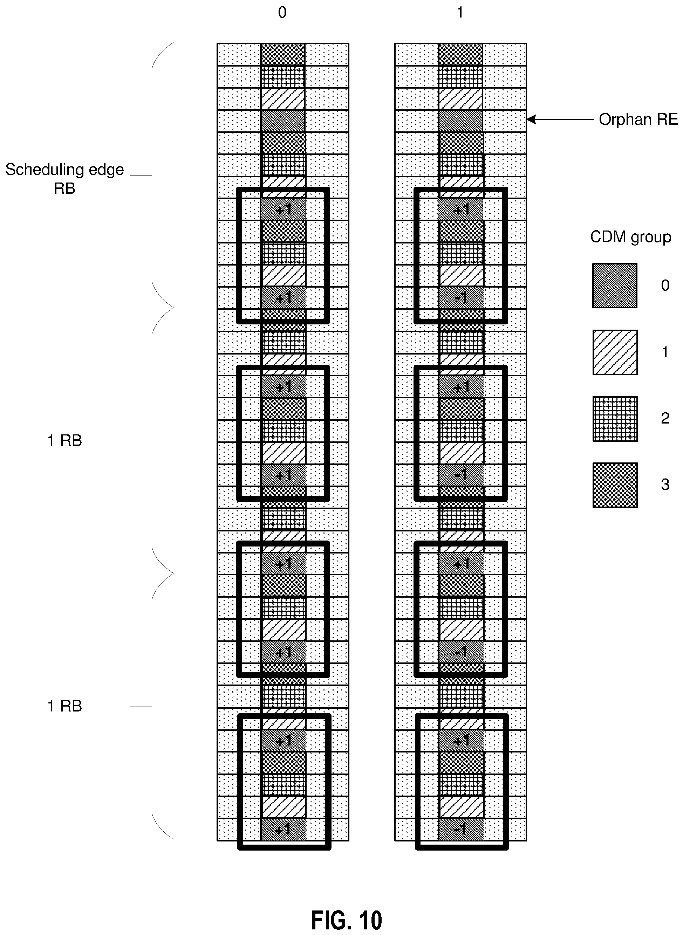

The same issue occurs for another approach where for DMRS Type-1 the number of CDM groups is increased to 4 from 2, which means that each CDM group is associated with every fourth sub-carrier instead of every second sub-carrier. This is schematically illustrated in Figure 10. In particular, Figure 10 shows an example of orphan RE at the scheduling edge for a new Rel-18 Type 1 DMRS design with increased number of CDM groups. Here three RBs are scheduled but the orphan problem at the scheduling edge would be the same for any odd number of scheduled RBs.

Certain aspects of the disclosure and their embodiments may provide solutions to these or other challenges. As an example of the capability signaling 20 in Figure 1, some embodiments herein introduce signaling from the UE to the network indicating if the UE can handle orphan FD-OCC or not. Alternatively or additionally, some embodiments herein introduce a network scheduling restriction for UEs without orphan FD-OCC capability: Scheduled over a number of PRBs such that there is no orphan OCC problem (this may correspond to scheduling an even number of PRBs). Alternatively or additionally, some embodiments herein provide solutions for how the receiving node can handle orphan FD-OCC groups, e.g., as an example of Figures 2-5.

Some embodiments may provide one or more of the following technical advantage(s). Both UEs with and without orphan FD-OCC capability are allowed, thus allowing a choice between high performance (UE with orphan FD-OCC capability) and low UE complexity (UE without orphan FD-OCC capability). Note that orphan FD-OCC capability may have quite high complexity, especially if high performance noise and interference suppression is required. Alternatively or additionally, some embodiments solve the orphan DMRS RE problem while still allowing for noise and interference suppression of channel estimates based on DMRS including orphan DMRS REs based on standard transforms (e.g., Inverse Fast Fourier Transform (IFFT) and Fast Fourier Transform (FFT)) requiring regularly spaced inputs. Some embodiments provide improved channel estimation due to (i) noise and interference suppression of channel estimates based on DMRS including orphan DMRS REs based on standard transforms requiring regularly spaced input; and/or (ii) increased granularity of raw channel estimates.

**UE capability embodiments**

In some embodiments, a UE signals one or more UE capabilities to the network for new Rel-18 Type-1 DMRS design, e.g., as an example of capability signaling 20 in Figure 1.

In one embodiment, for example, a UE signals, to the network, a UE capability indicating that the UE can handle orphan DMRS REs (henceforth referred to as orphan RE handling capability), e.g., for PDSCH reception. This is an example of capability signaling 20 in Figure 1.

In some embodiments, this is an optional UE capability. So, the UE will indicate that it has this capability via capability signaling a feature group. But when the UE does not have this capability, the UE will exclude signaling the feature group.

In some embodiments, if the UE indicates it has the orphan RE handling capability, there is no restriction by the network in PDSCH scheduling the UE when it comes to PRB allocation.

Otherwise, if or when the UE does not indicate the orphan RE handling capability, the UE monitors for the DMRS or the PDSCH according to one or more expectations. For example, in some embodiments, the UE expects to be scheduled with an even number of PRBs for PDSCH when using the new Rel-18 Type 1 DMRS design. Alternatively or additionally, the UE does not expect to be scheduled with multiple groups of consecutive groups of PRBs belonging to the same PDSCH, where the groups are using non-consecutive PRBs and where at least one of these groups of PRBs has an odd number of PRBs for PDSCH when using the new Rel-18 Type 1 DMRS design. In one such embodiment, the group of consecutive PRBs is an RBG.

Alternatively or additionally, the UE expects to be scheduled PDSCH with one or multiple groups of PRBs, where each group consists of consecutive PRBs and all of these groups have an even number of PRBs for PDSCH when using the new Rel-18 Type 1 DMRS design. Alternatively or additionally, the UE expects to be scheduled with RBGs containing an even number of PRBs for scheduling PDSCH when the UE is using Rel-18 Type 1 DMRS.

Alternatively or additionally, the UE does not expect to be scheduled with RBGs containing an odd number of PRBs for scheduling PDSCH when the UE is using Rel-18 Type 1 DMRS design. For instance, if the first RBG or the last RBG has an odd number of PRBs, then these two RBGs are not expected to be allocated when scheduling PDSCH. In one embodiment, the starting PRB of the BWP $N_{BWP,i}^{start}$ is selected as an even number, such that the first RBG will always have an even number of PRBs (recall that size of first RBG is given as $P - N_{BWP,i}^{start} \bmod P$, where the nominal RBG size $P$ can take values of 2, 4, 8, or 16; hence, choosing an even $N_{BWP,i}^{start}$ will ensure the first RBG is even). To ensure the last RBG has an even number of PRBs, in another embodiment, the sum of the starting PRB of the BWP and the size of the BWP can be selected as an even number.

Alternatively or additionally, when the UE is scheduled PDSCH via either *FDMSchemeA* or *FDMSchemeB,* the UE expects to be scheduled with an even number of PRBs associated with the first TCI state indicated in the scheduling DCI. Similarly, the UE expects to be scheduled with an even number of PRBs associated with the second TCI state indicated in the scheduling DCI.

Alternatively or additionally, the UE does not expect to be scheduled with an odd number of PRBs for PDSCH when using the new Rel-18 Type 1 DMRS design, as long as any other DMRS ports belonging to the same CDM group are scheduled over the same RB as the RB containing the orphan DMRS REs (i.e., the UE does not expect any other DMRS ports to be interfering with the DMRS port on an orphan RE).

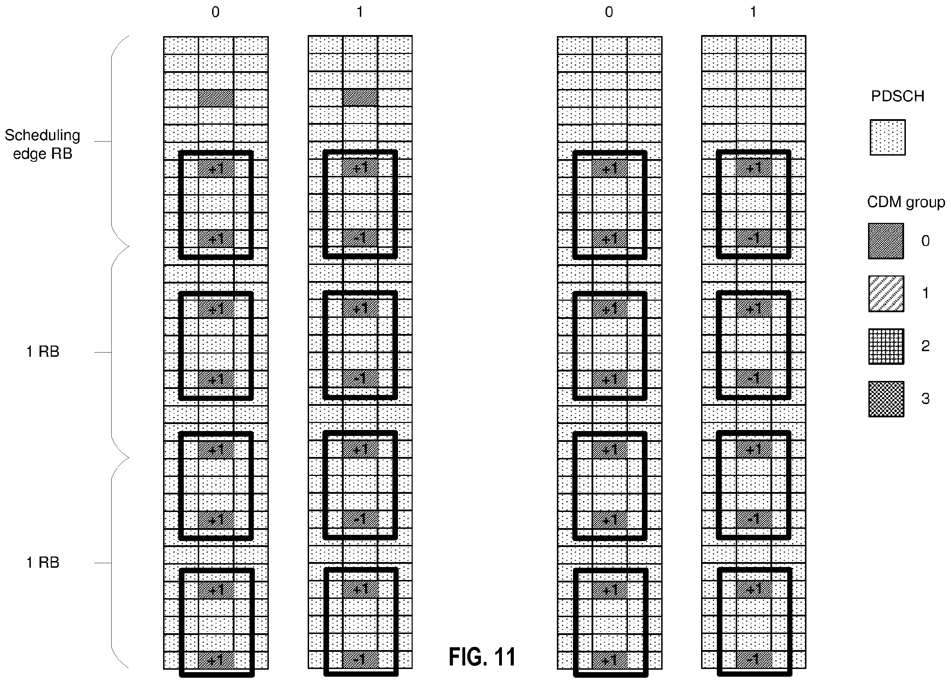

Alternatively or additionally, when the UE is scheduled with an odd number of PRBs for PDSCH, the UE expects that PDSCH will be transmitted on the orphan DMRS REs (instead of the DMRS). The UE can in this case extrapolate the channel estimates from the remaining closest DMRSs (in frequency domain) to demodulate the PDSCH on and in close vicinity of the orphan REs. One example is illustrated in Figure 11 for the case where the number of CDM groups has been increased from 2 to 4 for Type 1 DMRS. A UE is scheduled with two layers PDSCH transmission on the antenna (DMRS) ports 0 and 1, which are associated with CDM group 0. In the example to the left of Figure 11, DMRS port 0 and 1 are still allocating the orphan REs, while on the example to the right of Figure 11, PDSCH is allocated on the orphan REs instead. The main purpose of scheduling PDSCH instead of DMRS on orphan REs, is that these REs can then be used to transmit data (instead of being unused). In one embodiment, the network can indicate to the UE whether PDSCH or DMRS will be transmitted on the orphan RE(s). The indication can with be RRC configured, or dynamically indicate in MAC-CE and/or DCI.

In some embodiments, if the UE doesn't indicate the capability of handling such orphan RBs, it does not expect gNB to configure a related information element (IE) if there is one, or the UE does not expect the network to schedule it with the combination of DRMS Type and RB allocation that is not supported by its capability.

In still other embodiments, the UE signals a UE capability indicating that the UE can handle orphan DMRS REs, if all co-scheduled DMRS ports belonging to the same CDM group are super orthogonal to each other. If the UE does not indicate this capability, the UE does not expect to be scheduled with an un-even number (i.e., odd number) of PRBs for PDSCH when using the new Rel-18 Type 1 DMRS design, if not all the DMRS ports belonging to the same CDM group are super orthogonal to each other.

As used herein in this regard, the term "super-orthogonality" has the following definition: ***Definition: If two*** *orthogonal vectors* $v_1 = \begin{bmatrix} v_{1,1} \\ ... \\ v_{1,K} \end{bmatrix}$ *and* $v_2 = \begin{bmatrix} v_{2,1} \\ ... \\ v_{2,K} \end{bmatrix}$ *where* ( $v_1^H v_2 = 0$ ) *of sequence length N are orthogonal over every K sequence parts of length N'<N (where N=N'*K), i.e.,* $v_{1,i}^H v_{2,i} = 0, i = 1, ..., K$ *, the vectors $v_1$ and $v_2$ are said to be super-orthogonal.*

So, for example, the vectors of orthogonal cover codes [1 1 1 1] and [1 -1 1 -1] of length four are super-orthogonal as they are also orthogonal over the partial length two ([1 1] and [1 - 1]).

In the NR specification, the OCC vectors are typically not directly defined. Instead, the mapping from ports directly to OCC factors (or equivalently OCC vector elements) $w_f(k')$, $w_t(l')$ is given (i.e. tabulated as in e.g. table 5 an 6 herein). Based on the mapping of ports to OCC vector elements, super-orthogonal OCC vectors can be constructed by the following two simple steps (example for $\overline{w}_f$ case):

1. For each port, construct the corresponding OCC vector $\overline{w}_f$ with elements $k'$ equal to the weight $w_f(k')$ to which the port is mapped (e.g., as given by tabulated $w_f(k')$ per port).

2. Among the vectors for all ports identify all unique vectors. This is the set of OCC vectors.

The length of the FD-OCC is simply the number of allowed $k'$ values.

**Receiver DMRS orphan RE handling solutions**

Consider now some examples of the embodiments in Figures 2-5.

*Some nomenclature and observations*

Given a set of $N$ length M orthogonal FD-OCC vectors $\boldsymbol{w_n}$ with elements $w_n(k)$ (where $n \in \{0, 1, \ldots, N-1\}$ and $k \in \{0, 1, \ldots, M-1\}$), then any reordering of the elements (i.e., any permutation of the vector element) will maintain the orthogonality of the vectors. Let $\boldsymbol{v_n}$ be the vector with elements $v_n(k) = w_n(\sigma(k))$ where $\sigma$ is a permutation of the integers $\{0, 1, \ldots, M-1\}$. Then

$$\boldsymbol{v_n}°\boldsymbol{v_m} = \sum_{k\in\{0,1,\ldots,M-1\}} v_n(k)\overline{v_m(k)} = \sum_{k\in\{0,1,\ldots,M-1\}} w_n(\sigma(k))\overline{w_m(\sigma(k))} = \{l = \sigma(k)\}$$

$$= \sum_{l\in\{0,1,\ldots,M-1\}} w_n(l)\overline{w_m(l)} = \boldsymbol{w_n}°\boldsymbol{w_m}$$

This is true for the specific case of a permutation which is also a cyclic shift of the vector elements. Let $v_n$ be the vector with elements $v_n(k) = w_n(\sigma(k))$ where $\sigma(k) = (k+s) \bmod M$ is the cyclic shift with s steps of the integers $\{0, 1, \ldots, M-1\}$. Then,

$$\boldsymbol{v_n}°\boldsymbol{v_m} = \sum_{k=0}^{M-1} v_n(k)\overline{v_m(k)} = \sum_{k=0}^{M-1} w_n(\sigma(k))\overline{w_m(\sigma(k))} = \{l = (k+s) \bmod M\} = \sum_{l=0}^{M-1} w_n(l)\overline{w_m(l)}$$

$$= \boldsymbol{w_n}°\boldsymbol{w_m}$$

Let the subcarrier position of length M FD-OCC groups be given by $f_n(k)$ then define the subcarrier positions of s step shifted FD-OCC groups as

$$g_n(k) = f_{n+\left\lfloor\frac{k+s}{M}\right\rfloor}((k+s) \bmod M)$$

*Single additional orphan raw channel estimate*

Consider now an example of embodiments in Figures 2-5, where the second set 32-2 of one or more channel estimates includes only a single channel estimate.

Assume that s orphan DMRS REs are at the scheduling edge. Form the s step cyclically shifted FD-OCC vectors $\boldsymbol{v_n}$ with elements $v_n(k) = w_n((k+s) \bmod M)$.

The receiver applies the FD-OCC vectors $\boldsymbol{w_n}$ to all complete FD-OCC groups within the scheduled PRBs as normal, to calculate raw channel estimates which we will refer to as regular raw channel estimates.

The receiver applies the FD-OCC vectors $\boldsymbol{v_n}$ to the M DMRS elements closest to the scheduling edge with the orphan DMRS resource elements to calculate an additional raw channel estimate, which we will refer to as the orphan raw channel estimate. That is, the receiver applies shifted FD-OCC vectors to the DMRS elements closest to the scheduling edge with the orphan DMRS resource elements, to calculate one additional raw channel estimate per port.

In some embodiments, the receiver suppresses noise and interference by:

1. making an IFFT transform to the time domain (or some other similar transform)
2. setting samples that are judged to be dominated by noise and/or interference to zero, using e.g., a noise threshold or an Akaike criteria to judge what samples to put to zero.

3. making the inverse transform back to the frequency domain

The receiver interpolates, extrapolates, and filters the raw (or possibly the noise and interference suppressed) channel estimates to the resource elements in which PUSCH/PDSCH is received, i.e., to the resource elements for which channel estimates are needed for PUSCH/PDSCH demodulation.

For the noise and interference suppression step, however, there is a problem since the orphan raw channel estimate is not regularly spaced relative to the regular raw channel estimates while standard transforms typically require regularly spaced inputs. According to some embodiments, this is solved in one of the following ways:

1. Noise and interference suppression is performed only for the regular raw channel estimates and not for the orphan raw channel estimate.
2. Additional channel estimates are calculated based on interpolation between the regular raw channel estimates to achieve regularly spaced channel estimates including the orphan raw channel estimate. The transform is then applied to the regularly spaced combination of raw and interpolated channel estimates. In this embodiment, then, additional channel estimates are calculated based on interpolation between the regular raw channel estimates to achieve regularly spaced channel estimates including the orphan raw channel estimate (This allows noise and interference suppression in the time domain based on IFFT and FFT transforms).
3. A non-standard transform adapted for the non-regularly spaced input is used.

Below some explicit example embodiments are described.

### *Explicit example with real valued FD-OCC weights*

This example uses a length-4 real valued FD-OCC codes (see also Table 5). For scheduled blocks of an odd number of contiguous PRBs, there will be two orphan DMRS REs at one of the scheduling edges.

The unshifted FD-OCC vectors are

$$w_0 = [+1, +1, +1, +1]^T$$

$$w_1 = [+1, +1, -1, -1]^T$$

$$w_2 = [+1, -1, +1, -1]^T$$

$$w_3 = [+1, -1, -1, +1]^T$$

The shifted FD-OCC vectors (with vector elements shifted cyclically two steps) are

$$v_0 = [+1, +1, +1, +1]^T$$

$$v_1 = [-1, -1, +1, +1]^T$$

$$v_2 = [+1, -1, +1, -1]^T$$

$$v_3 = [-1, +1, +1, -1]^T$$

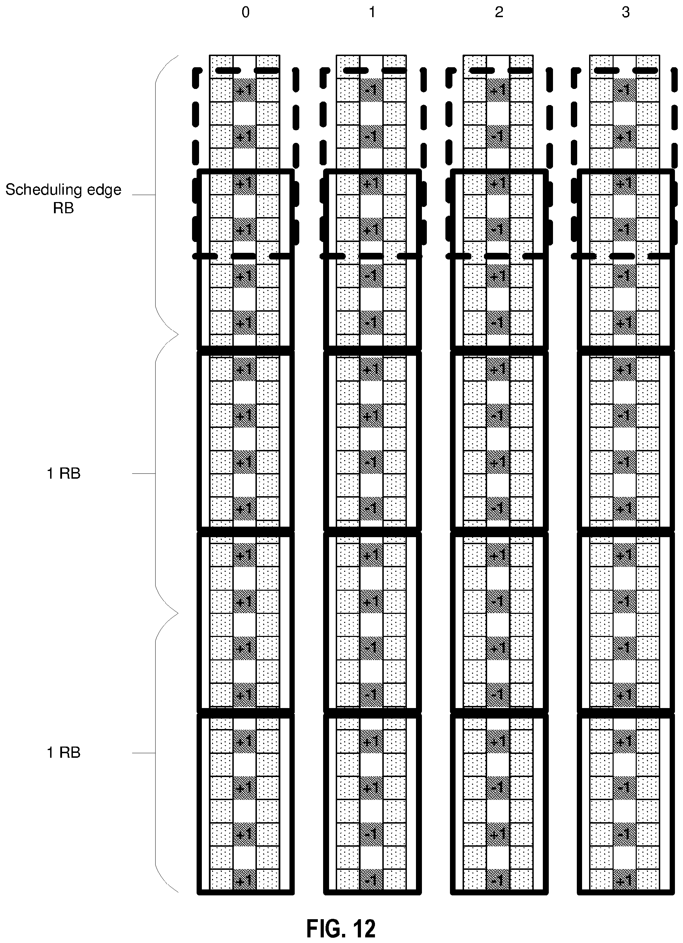

The receiver applies the FD-OCC vectors $w_n$ to all complete FD-OCC groups (illustrated by solid boxes in Figure 12) within the scheduled PRBs as normal, to calculate raw channel estimates.

The receiver applies the shifted FD-OCC vectors $v_n$ to the 4 DMRS elements (illustrated by dashed boxes in Figure 12) closest to the scheduling edge with the orphan DMRS resource elements, to calculate an additional raw channel estimate.

In some embodiments, the receiver suppresses noise and interference by:

1. making an IFFT transform to the time domain (or some other similar transform)
2. setting samples that are judged to be dominated by noise and/or interference to zero, using e.g., a noise threshold or an Akaike criteria to judge what samples to put to zero.

3. making the inverse transform back to the frequency domain.

The receiver interpolates, extrapolates, and filters the raw (or possibly the noise and interference suppressed) channel estimates to the resource elements in which PUSCH/PDSCH is received, i.e., to the resource elements for which channel estimates are needed for PUSCH/PDSCH demodulation.

For the noise and interference suppression step, however, there is a problem since the orphan raw channel estimate is only 4 subcarriers from the closest regular raw channel estimates while the regular raw channel estimates are regularly spaced every 8th subcarrier. Standard transforms (e.g., the IFFT and the FFT) typically require regularly spaced inputs. This is solved in one of the following ways in this example:

1. Noise and interference suppression is performed only for the regular raw channel estimates and not for the orphan raw channel estimate.

2. Additional channel estimates are calculated based on interpolation to the middle between each two consecutive regular raw channel estimates, e.g., as the average of the two consecutive raw channel estimates. The combination of raw channel estimates and interpolated channel estimates thus becomes regularly spaced every 4th subcarrier. The transform is then applied to the regularly spaced combination of raw and interpolated channel estimates.

3. A non-standard transform adapted for the non-regularly spaced input is used.

**Table 5 Parameters for PDSCH/PUSCH DM-RS configuration (as they may be tabulated in 3GPP NR specifications), for a real-valued length-4 FD-OCC code. Here, $\tilde{p}$ denotes the DM-RS port. The mapping to subcarriers is done as $k = 8n + 2k' + \Delta$.**

| $\tilde{p}$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +1 | -1 | -1 | +1 | +1 |
| 9 | 0 | 0 | +1 | -1 | -1 | +1 | +1 | +1 |
| 10 | 1 | 1 | +1 | +1 | -1 | -1 | +1 | +1 |
| 11 | 1 | 1 | +1 | -1 | -1 | +1 | +1 | +1 |
| 12 | 0 | 0 | +1 | +1 | -1 | -1 | +1 | -1 |
| 13 | 0 | 0 | +1 | -1 | -1 | +1 | +1 | -1 |
| 14 | 1 | 1 | +1 | +1 | -1 | -1 | +1 | -1 |
| 15 | 1 | 1 | +1 | -1 | -1 | +1 | +1 | -1 |

***Explicit example with complex valued FD-OCC weights***

This example uses a length-4 complex-valued FD-OCC codes (see also Table 6). For scheduled blocks of an odd number of contiguous PRBs, there will be two orphan DMRS REs at one of the scheduling edges.

The unshifted FD-OCC vectors are

$$\boldsymbol{w_0} = [+1, +1, +1, +1]^T$$

$$\boldsymbol{w_1} = [+1, +j, -1, -j]^T$$

$$w_2 = [+1, -1, +1, -1]^T$$

$$w_3 = [+1, -j, -1, +j]^T$$

The shifted FD-OCC vectors (with vector elements shifted cyclically two steps) are

$$v_0 = [+1, +1, +1, +1]^T$$

$$v_1 = [-1, -j, +1, +j]^T$$

$$v_2 = [+1, -1, +1, -1]^T$$

$$v_3 = [-1, +j, +1, -j]^T$$

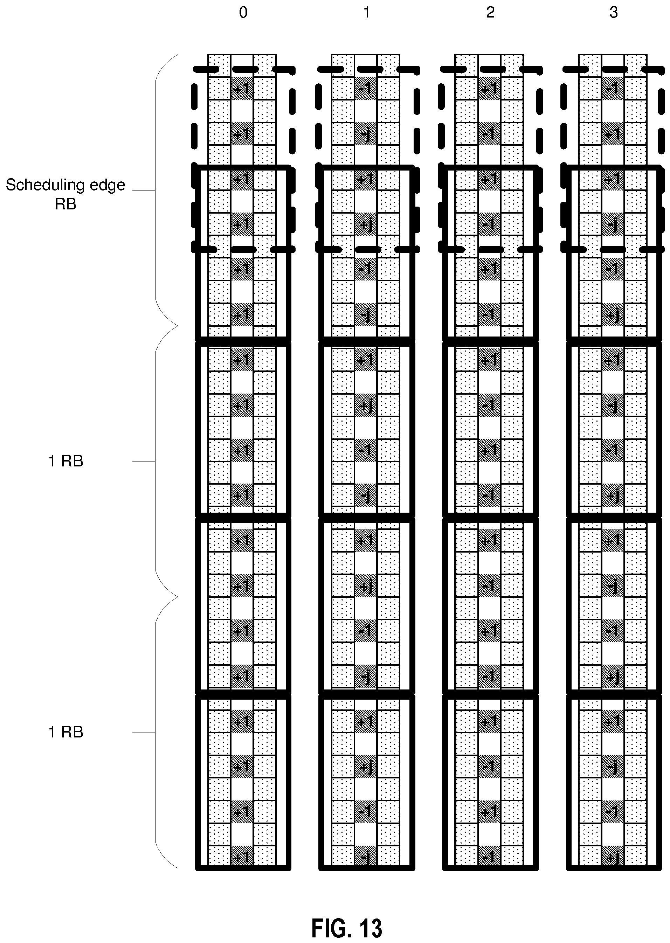

The receiver applies the FD-OCC vectors $w_n$ to all complete FD-OCC groups (illustrated by solid boxes in Figure 13) within the scheduled PRBs as normal, to calculate raw channel estimates.

The receiver applies the shifted FD-OCC vectors $v_n$ to the 4 DMRS elements (illustrated by dashed boxes in Figure 13**Error! Reference source not found**.) closest to the scheduling edge with the orphan DMRS resource elements, to calculate an additional raw channel estimate.

In some embodiments the receiver suppresses noise and interference by:

1. making an IFFT transform to the time domain (or some other similar transform)
2. setting samples that are judged to be dominated by noise and/or interference to zero, using e.g., a noise threshold or an Akaike criteria to judge what samples to put to zero.
3. making the inverse transform back to the frequency domain.

The receiver interpolates, extrapolates, and filters the raw (or possibly the noise and interference suppressed) channel estimates to the resource elements in which PUSCH/PDSCH is received, i.e., to the resource elements for which channel estimates are needed for PUSCH/PDSCH demodulation.

For the noise and interference suppression step, however, there is a problem since the orphan raw channel estimate is only 4 subcarriers from the closest regular raw channel estimates while the regular raw channel estimates are regularly spaced every $8^{th}$ subcarrier. Standard transforms (e.g., the IFFT and the FFT) typically require regularly spaced inputs. This is solved in one of the following ways in this example:

1. Noise and interference suppression is performed only for the regular raw channel estimates and not for the orphan raw channel estimate.

2. Additional channel estimates are calculated based on interpolation to the middle between each two consecutive regular raw channel estimates, e.g., as the average of the two consecutive raw channel estimates. The combination of raw channel estimates and interpolated channel estimates thus becomes regularly spaced every $4^{th}$ subcarrier. The transform is then applied to the regularly spaced combination of raw and interpolated channel estimates.

3. A non-standard transform adapted for the non-regularly spaced input is used.

**Table 6 Parameters for PDSCH/PUSCH DM-RS configuration (as they may be tabulated in 3GPP NR specifications), for a complex-valued length-4 FD-OCC code. Here, $\tilde{p}$ denotes the DM-RS port. The mapping to subcarriers is done as $k = 8n + 2k' + \Delta$.**

| $\tilde{p}$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 0 | 0 | 0 | +1 | +1 | +1 | +1 | +1 | +1 |
| 1 | 0 | 0 | +1 | -1 | +1 | -1 | +1 | +1 |
| 2 | 1 | 1 | +1 | +1 | +1 | +1 | +1 | +1 |
| 3 | 1 | 1 | +1 | -1 | +1 | -1 | +1 | +1 |
| 4 | 0 | 0 | +1 | +1 | +1 | +1 | +1 | -1 |
| 5 | 0 | 0 | +1 | -1 | +1 | -1 | +1 | -1 |

(continued)

| $\tilde{p}$ | CDM group $\lambda$ | $\Delta$ | $w_f(k')$ | | | | $w_t(l')$ | |
|---|---|---|---|---|---|---|---|---|
| | | | $k' = 0$ | $k' = 1$ | $k' = 2$ | $k' = 3$ | $l' = 0$ | $l' = 1$ |
| 6 | 1 | 1 | +1 | +1 | +1 | +1 | +1 | -1 |
| 7 | 1 | 1 | +1 | -1 | +1 | -1 | +1 | -1 |
| 8 | 0 | 0 | +1 | +j | -1 | -j | +1 | +1 |
| 9 | 0 | 0 | +1 | -j | -1 | +j | +1 | +1 |
| 10 | 1 | 1 | +1 | +j | -1 | -j | +1 | +1 |
| 11 | 1 | 1 | +1 | -j | -1 | +j | +1 | +1 |
| 12 | 0 | 0 | +1 | +j | -1 | -j | +1 | -1 |
| 13 | 0 | 0 | +1 | -j | -1 | +j | +1 | -1 |
| 14 | 1 | 1 | +1 | +j | -1 | -j | +1 | -1 |
| 15 | 1 | 1 | +1 | -j | -1 | +j | +1 | -1 |

Set of additional shifted raw channel estimates

Consider next an example of embodiments in Figures 2-5, where the second set 32-2 of one or more channel estimates includes multiple channel estimates.

Assume that for some scheduling cases there are s orphan DMRS REs at the scheduling edge. Form the s step cyclically shifted FD-OCC vectors $v_n$ with elements $v_n(k) = w_n((k + s) \bmod M)$.

The receiver applies the FD-OCC vectors $w_n$ to all complete FD-OCC groups within the scheduled PRBs as normal, to calculate raw channel estimates.

The receiver applies the FD-OCC vectors $v_n$ to all complete s shifted FD-OCC groups within the scheduled PRBs, to calculate raw channel estimates. This is done also for scheduling cases that don't result in any orphan DMRS REs. That is, the receiver applies shifted FD-OCC vectors to all complete shifted FD-OCC groups, to calculate an additional set of raw channel estimates. (Note that this gives regularly spaced raw channel estimates suitable for time domain noise and interference suppression using IFFT and FFT transforms.)

In some embodiments the receiver suppresses noise and interference by:

1. making an IFFT transform to the time domain (or some other similar transform).
2. setting samples that are judged to be dominated by noise and/or interference to zero, using e.g., a noise threshold or an Akaike criteria to judge what samples to put to zero.
3. making the inverse transform back to the frequency domain.

The receiver interpolates, extrapolates, and filters the raw (or possibly the noise and interference suppressed) channel estimates to the resource elements in which PUSCH/PDSCH is received, i.e., to the resource elements for which channel estimates are needed for PUSCH/PDSCH demodulation.

Note that by calculating raw channel estimates both for unshifted and shifted complete OCC groups the raw estimates are regularly spaced. Thus, an IFFT (or some other transform relying on regularly spaced inputs) can be used in the noise and interference suppression step, for all raw estimates, including the raw estimate closest to the scheduling edge with the orphan DMRS REs.

This solves the orphan RE problem, allows for noise and interference suppression using standard transforms and in addition it gives a more granular set of raw channel estimates which gives improved channel estimation.

Below an explicit example embodiment is described.

***Explicit example with real valued FD-OCC weights***

This example uses a length-4 real valued FD-OCC codes (see also Table 5). For scheduled blocks of an odd number of contiguous PRBs, there will be two orphan DMRS REs at one of the scheduling edges.

The unshifted FD-OCC vectors are

$$w_0 = [+1, +1, +1, +1]^T$$

$$w_1 = [+1, +1, -1, -1]^T$$

$$w_2 = [+1, -1, +1, -1]^T$$

$$w_3 = [+1, -1, -1, +1]^T$$

The shifted FD-OCC vectors (with vector elements shifted cyclically two steps) are

$$v_0 = [+1, +1, +1, +1]^T$$

$$v_1 = [-1, -1, +1, +1]^T$$

$$v_2 = [+1, -1, +1, -1]^T$$

$$v_3 = [-1, +1, +1, -1]^T$$

The position in frequency of the REs of a FD-OCC group $n$ is given by

$$k = 8n + 2k' + \Delta$$

for

$$k' \in \{0, 1, 2, 3\}$$

The position in frequency of the REs of shifted FD-OCC group $n$ is given by

$$k = 8n + 2(k' + 2) + \Delta$$

for

$$k' \in \{0, 1, 2, 3\}$$

In this case, it may be calculated using the general formula:

$$g_n(k) = f_{n + \left\lfloor \frac{k+s}{M} \right\rfloor}\big((k + s) \bmod M\big)$$

with

$$f_n(k') = 8n + 2k' + \Delta$$

giving

$$k = g_n(k') = f_{n + \left\lfloor \frac{k'+s}{M} \right\rfloor}\big((k' + s) \bmod M\big) = 8\left(n + \left\lfloor \frac{k' + 2}{4} \right\rfloor\right) + 2\big((k' + 2) \bmod 4\big) + \Delta$$

$$= 8n + 2\left(4\left\lfloor \frac{k' + 2}{4} \right\rfloor + (k' + 2) \bmod 4\right) + \Delta = 8n + 2(k' + 2) + \Delta$$

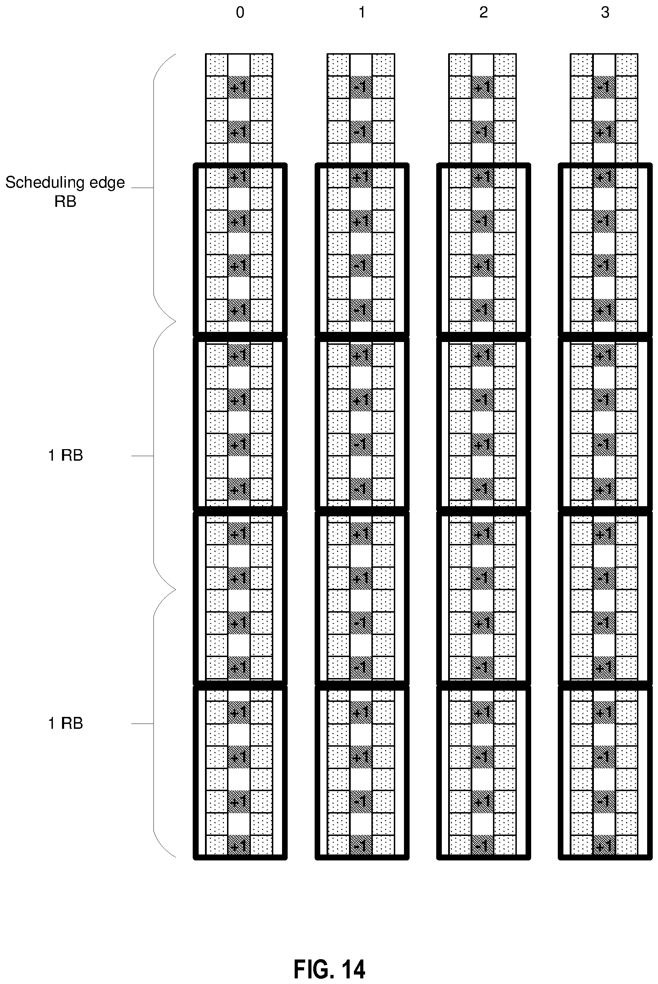

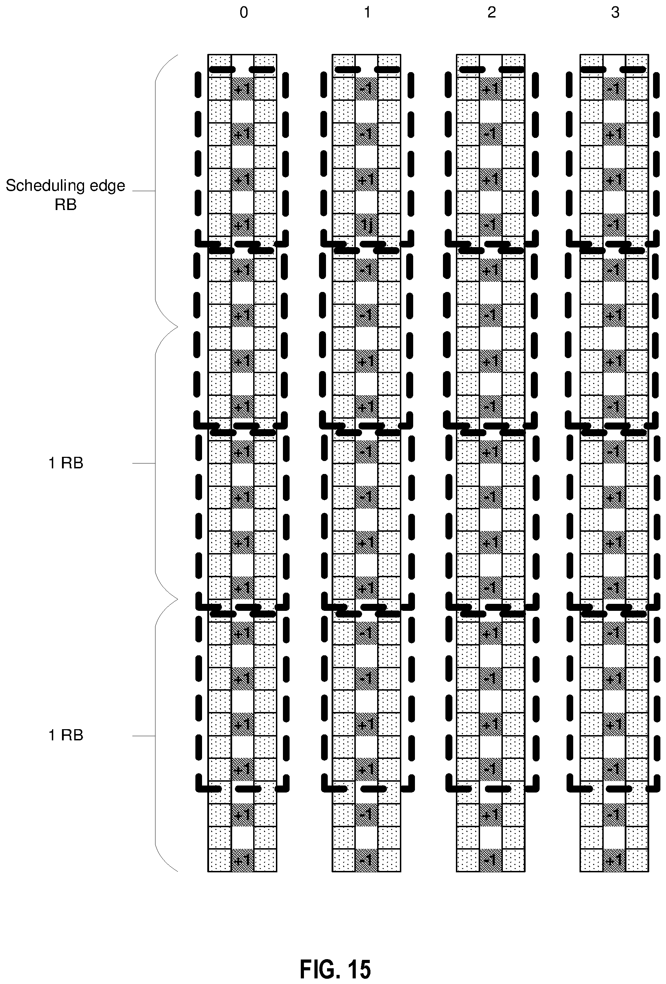

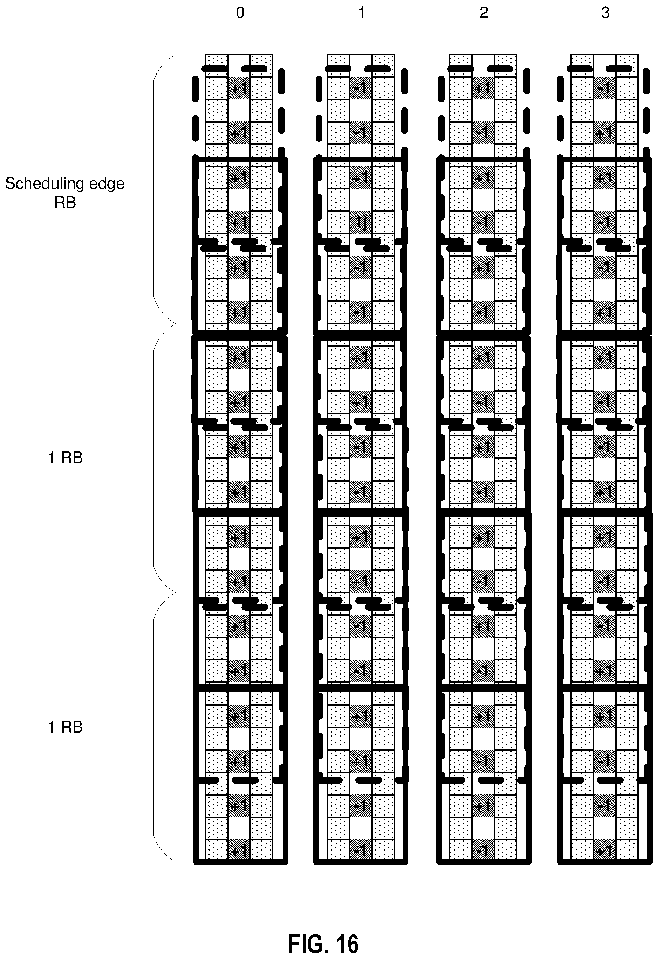

An FD-OCC group is referred to as complete if all it's REs are within scheduled PRBs.
The receiver applies the FD-OCC vectors $w_n$ to all complete FD-OCC groups (illustrated by solid boxes in Figure 14 and Figure 16) within the scheduled PRBs as normal, to calculate raw channel estimates.
The receiver applies the shifted FD-OCC vectors $v_n$ to all complete shifted FD-OCC groups (illustrated by dashed boxes in Figure 15 and Figure 16**Error! Reference source not found**.), to calculate an additional set of raw channel estimates.

In some embodiments the receiver suppresses noise and interference by:

1. making an IFFT transform to the time domain (or some other similar transform).
2. setting samples that are judged to be dominated by noise and/or interference to zero, using e.g., a noise threshold or an Akaike criteria to judge what samples to put to zero.
3. making the inverse transform back to the frequency domain.

The receiver interpolates, extrapolates, and filters the raw (or possibly the noise and interference suppressed) channel estimates to the resource elements in which PUSCH/PDSCH is received, i.e., to the resource elements for which channel estimates are needed for PUSCH/PDSCH demodulation.

Note that by calculating raw channel estimates both for unshifted and shifted complete OCC groups the raw estimates are regularly spaced every 4$^{th}$ subcarrier. Thus, an IFFT can be used in the noise and interference suppression step, for in all raw estimates, including the raw estimate closest to the scheduling edge with the orphan DMRS REs.

Solution for handling of orphan DMRS REs at PRG edges and for handling a combination of orphan DMRS REs at PRG edges with resulting orphan DMRS REs at the scheduling edge.

When FD-OCC groups don't match the PRG borders there can be orphan DMRS RE problems also at the edges of a PRG. For the FD-OCC examples, this happens when the offset between the BWP and the PRGs is an odd number of subcarriers.

In one embodiment, the receiver uses shifted FD-OCC vectors applied to shifted FD-OCC groups of REs when the offset between the BWP and the PRGs is an odd number of subcarriers while the receiver uses unshifted FD-OCC vectors applied to unshifted FD-OCC groups of REs when the offset between the BWP and the PRGs is an even number of subcarriers. This results in no orphan REs at the edges of the PRGs.

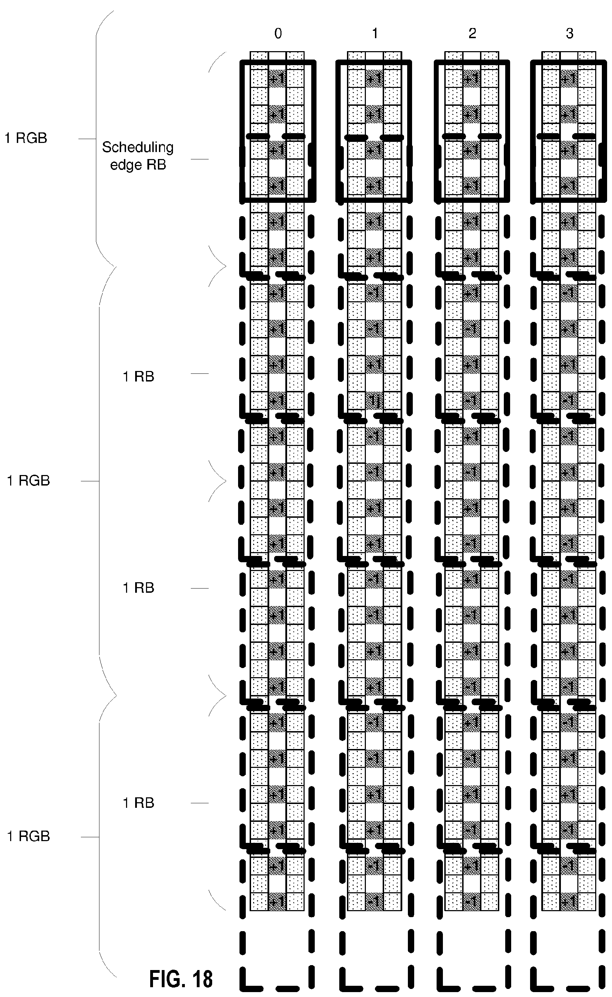

The use of shifted FD-OCC groups can, however, result in orphan DMRS REs at the scheduling edge (see Figures 18). Note that this can happen even when an even number of contiguous PRBs are scheduled. In this case, the solution above can be combined with the solutions described above for handling orphan REs at the scheduling edge but with shifted and unshifted FD-OCC vectors and groups being interchanged as needed, e.g., as in the following embodiment.

In one embodiment, when the offset between the BWP and the PRGs is an odd number of subcarriers, the receiver uses shifted FD-OCC vectors applied to all shifted FD-OCC groups that are complete within a given PRG and in case of orphan DMRS REs at the scheduling edge the receiver applies in addition also the unshifted FD-OCC vectors to the unshifted FD-OCC group at the scheduling edge. In the same embodiment, when the offset between the BWP and the PRGs is an even number of subcarriers, the receiver uses unshifted FD-OCC vectors applied to all unshifted FD-OCC groups that are complete within a given PRG and in case of orphan DMRS REs at the scheduling edge the receiver applies in addition also the shifted FD-OCC vectors to the shifted FD-OCC group at the scheduling edge.

Note that, in some embodiments, resource block groups always consist of an even number of Resource Blocks but it may be so that only an odd number of the RBs in a PRG is occupied by PDSCH and PDSCH-DMRS (i.e. PDSCH is scheduled on an odd number of RBs within that PRG).

Below an explicit example embodiment is described.

***Explicit example with complex valued FD-OCC weights***

This example uses length-4 real valued FD-OCC codes (see also Table 6).

The unshifted FD-OCC vectors are:

$$w_0 = [+1, +1, +1, +1]^T$$

$$w_1 = [+1, +j, -1, -j]^T$$

$$w_2 = [+1, -1, +1, -1]^T$$

$$w_3 = [+1, -j, -1, +j]^T$$

The shifted FD-OCC vectors (with vector elements shifted cyclically two steps) are:

$$\boldsymbol{v_0} = [+1, +1, +1, +1]^T$$

$$\boldsymbol{v_1} = [-1, -j, +1, +j]^T$$

$$\boldsymbol{v_2} = [+1, -1, +1, -1]^T$$

$$\boldsymbol{v_3} = [-1, +j, +1, -j]^T$$

The position in frequency of the REs of a FD-OCC group *n* is given by

$$k = 8n + 2k' + \Delta$$

for

$$k' \in \{0, 1, 2, 3\}$$

The position in frequency of the REs of shifted FD-OCC group n is given by

$$k = 8n + 2(k' + 2) + \Delta$$

for

$$k' \in \{0, 1, 2, 3\}$$

When the offset between the BWP and the PRGs is an odd number of subcarriers, the receiver uses the shifted FD-OCC vectors applied to shifted FD-OCC groups.

When the offset between the BWP and the PRGs is an even number of subcarriers, the receiver uses the unshifted FD-OCC vectors applied to unshifted FD-OCC groups.

This results in no orphan REs at the edges of the PRGs.

In an alternative embodiment, the receiver uses both shifted FD-OCC vectors applied to shifted FD-OCC groups and unshifted FD-OCC vectors applied to unshifted FD-OCC groups. This gives a more granular set of raw channel estimates within each PRG and also solves any problems with orphan DMRS REs at the scheduling edge.

In yet another embodiment, when the offset between the BWP and the PRGs is an odd number of subcarriers, the receiver uses shifted FD-OCC vectors applied to all shifted FD-OCC groups that are complete within a given PRG and in case of orphan DMRS REs at the scheduling edge the receiver applies in addition also the unshifted FD-OCC vectors to the unshifted FD-OCC group at the scheduling edge (as illustrated in Figure 18). In the same embodiment, when the offset between the BWP and the PRGs is an even number of subcarriers, the receiver uses unshifted FD-OCC vectors applied to all unshifted FD-OCC groups that are complete within a given PRG and in case of orphan DMRS REs at the scheduling edge the receiver applies in addition also the shifted FD-OCC vectors to the shifted FD-OCC group at the scheduling edge.

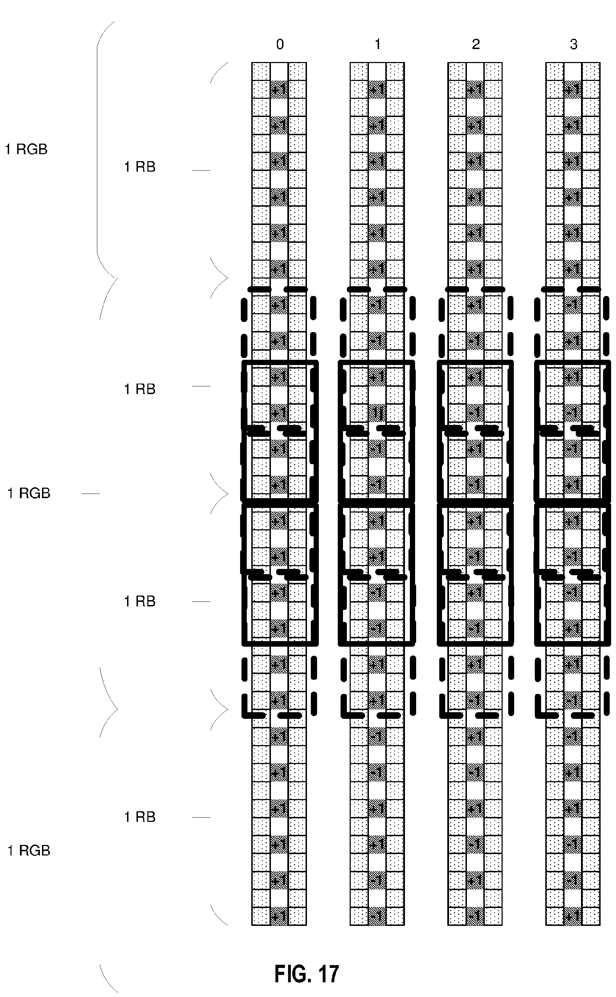

Generally, then, Figure 17 shows an example where the use of unshifted FD-OCC vectors applied to unshifted FD-OCC groups (solid boxes) results in orphan REs at both edges of the PRG while the use of shifted FD-OCC vectors applied to shifted FD-OCC groups (dashed boxes) doesn't result in any orphan REs at the PRG edges. The use both of unshifted FD-OCC vectors applied to unshifted FD-OCC groups (solid boxes) and of shifted FD-OCC vectors applied to shifted FD-OCC groups (dashed boxes) results in no orphan DMRS REs and a more granular set of raw channel estimates.

Figure 18 shows an example where shifted FD-OCC groups (dashed boxes) are used to fit with RBG borders and an additional unshifted FD-OCC group (solid boxes) is used at the scheduling edge to handle the resulting orphan DMRS REs.

Signaling for Type 1 frequency resource allocation

In one embodiment, when UE is configured with the new Rel-18 DMRS design, only an even number of PRBs can be scheduled to the UE. For Type 1 frequency resource allocation scheme, the indicated length L is expected to be an even number.

It means for dynamic scheduling of PUSCH/PDSCH with DCI 0_1/DCI 1_1, or DCI activation of type2 Configured grant or DL SPS, the length L encoded as RIV and indicated in resource allocation field is restricted to only even number of PRB lengths.

In one embodiment, when the new DMRS Type is configured for DCI 1_1 in corresponding PDSCH-Config and/or DCI 0_1 in PUSCH-Config/ConfiguredGrantConfig, and if type 1 resource allocation is configured, the RIV encodes an integer parameter L' with maximum value being equal to floor (Lmax/2), where Lmax is the size of the bandwidth part, and the length L is calculated as L=2*L'. The bit field length of the "Frequency domain resource assignment" is calculated based on the range of L'. In one embodiment the use of L' instead of L in RIV is implicit based on that the new DMRS Type is configured for DCI 1_1/DCI 0_1 in corresponding PDSCH-Config and PUSCH-Config/ConfiguredGrantConfig, and that type 1 resource allocation is configured. In an alternative embodiment, the use of L' instead of L in RIV is explicitly signaled by higher layers. Note that encoding L' requires one bit less than L. In either case, then, when only even number of PRBs can be indicated to a UE, the RIV can be encoded using L', and the actual length L = 2*L' is calculated by UE after it extracted the L' from the RIV.

In one embodiment, when the new DMRS Type is configured for DCI 1_1 in corresponding PDSCH-Config and/or DCI 0_1 in PUSCH-Config/ConfiguredGrantConfig, and if type 1 resource allocation is configured, the RIV encoding of L only takes even values. The bit field length of the "Frequency domain resource assignment" is calculated based on the range of L/2. In one embodiment, the RIV encoding only taking even values is implicit based on that the new DMRS Type is configured for DCI 1_1 in corresponding PDSCH-Config and/or DCI 0_1 in PUSCH-Config/ConfiguredGrantConfig, and that type 1 resource allocation is configured. In an alternative embodiment, the use of RIV encoding only taking even values is explicitly signaled by higher layers. Note that RIV encoding only taking even values requires one bit less than L.

For Type 1 Configured Grant, same restriction shall be applied for "frequencyDomainParameter". Only even number of PRB length is expected to be configured to UE under ConfiguredGrantConfig IE when new DMRS type is configured.

With short DCI format, DCI 1_2 and DCI 0_2, even number of PRB allocation can be achieved by configuring the resource allocation granularity reusing the higher layer parameters resourceAllocationType1GranularityDCI-1-2 and resourceAllocationType1GranularityDCI-0-2 respectively. Note that the configurable values for this PRB granularity are {2, 4, 8, 16}, thus only even numbers of PRBs are allocated to the UE.

In another embodiment, the resource allocation granularity is added and can be configured also for DCI 0_1 and DCI 1_1 under PUSCH-Config/ConfiguredGrantConfig and PDSCH-Config respectively, and it is expected that higher layer configuration would configure the granularity to even values when the new DMRS is configured. One example of these values is {2, 4, 8, 16}. Thus, the DCI field to indicate the frequency domain resource allocation can be further reduced if larger granularities can be configured.

Note that, although some embodiments herein were described as applicable for demodulation of a downlink data channel, embodiments herein may alternatively or additionally be applied for demodulation of an uplink data channel or a sidelink data channel.

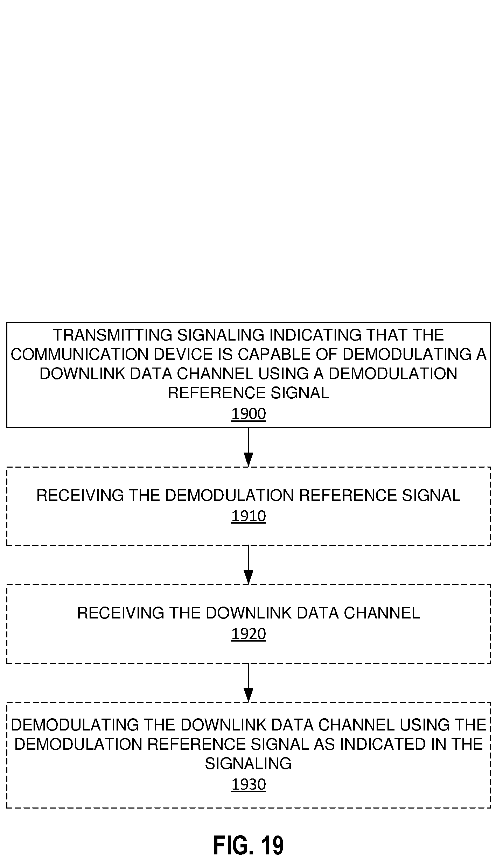

In view of the modifications and variations herein, Figure 19 depicts a method performed by a communication device 12 configured for use in a communication network 10. The method comprises transmitting signaling 20 indicating that the communication device 12 is capable of demodulating a data channel 16 using a demodulation reference signal 18 (Block 280).

More particularly, in some embodiments, the signaling 20 indicates that the communication device 12 is capable of demodulating a data channel 16 using a demodulation reference signal 18 mapped to orphaned demodulation reference signal resource elements 24-O.

Alternatively or additionally, in some embodiments, the signaling 20 indicates that the communication device 12 is capable of demodulating a data channel 16 using a demodulation reference signal 18 mapped in the frequency domain to a number of demodulation reference signal resource elements 24 that is not a multiple of a length of an orthogonal cover code 22 applied in the frequency domain to the demodulation reference signal 18.

Alternatively or additionally, in some embodiments, the signaling 20 indicates that the communication device 12 is capable of demodulating a data channel 16 using a demodulation reference signal 18 mapped in the frequency domain to an odd number of resource blocks or to a set of resource block groups that includes a resource block group with an odd number of resource blocks.

Alternatively or additionally, in some embodiments, the signaling 20 indicates that the communication device 12 is capable of demodulating a data channel 16 using a demodulation reference signal 18 mapped in the frequency domain to an odd number of contiguous resource blocks or to an odd number of contiguous resource blocks within any given resource block group.

Alternatively or additionally, in some embodiments, the signaling 20 indicates that the communication device 12 is capable of demodulating a data channel 16 using a demodulation reference signal 18 scheduled without restriction on the number of resource elements, resource blocks, or resource block groups to which the demodulation reference signal 18 is mapped.

In some embodiments, the signaling 20 indicates that the communication device 12 is capable of demodulating the data channel using a demodulation reference signal 18 scheduled without restricting the number of resource elements, resource blocks, or resource block groups to which the demodulation reference signal 18 scheduled is mapped to being a multiple of a length of a frequency-domain orthogonal cover code applied to the demodulation reference signal.

In some embodiments, the signaling 20 indicates that the communication device 12 is capable of demodulating the data channel using a demodulation reference signal 18 scheduled that is separated from one or more other demodulation reference signals using a frequency-domain orthogonal cover code of a certain length (e.g., 4) and that is scheduled without restriction on the number of resource elements, resource blocks, or resource block groups to which the demodulation reference signal 18 scheduled is mapped.

In some embodiments, the signaling 20 indicates that the communication device 12 is capable of demodulating the data channel using a demodulation reference signal 18 which is: (i) mapped to resource elements in the frequency domain according to a frequency comb pattern; and (ii) scheduled without restriction on a number of resource elements, resource blocks, or resource block groups to which the demodulation reference signal 18 is mapped.

In some embodiments, the signaling 20 indicates that the communication device 12 is capable of demodulating the data channel using the demodulation reference signal 18 scheduled, as mapped or scheduled, if co-scheduled demodulation reference signal ports belonging to the same code division multiplexing group are super orthogonal to each other.

In some embodiments, the method further comprises receiving the demodulation reference signal 18 on a set 30 of demodulation reference signal resource elements 24. In some embodiments, the set 30 of demodulation reference signal resource elements 24 includes a set of one or more orphaned demodulation reference signal resource elements 24-O. The method further comprises forming a first set 32-1 of channel estimates from the demodulation reference signal 18 as received on a first portion 30-1 of the demodulation reference signal resource elements 24 in the set 30. In some embodiments, the first portion 30-1 excludes the set of one or more orphaned demodulation reference signal resource elements 24-O. The method further comprises forming a second set 32-2 of one or more channel estimates from the demodulation reference signal 18 as received on a second portion 30-2 of the demodulation reference signal resource elements 24 in the set 30. In some embodiments, the second portion 30-2 includes the set of one or more orphaned demodulation reference signal resource elements 24-O. The method further comprises demodulating the data channel 16 using the first set 32-1 of channel estimates and the second set 32-2 of one or more channel estimates.

In one or more of these embodiments, forming the first set 32-1 of channel estimates comprises applying an orthogonal cover code 22 to the demodulation reference signal 18 received on the first portion 30-1 of the demodulation reference signal resource elements 24 in the set 30. In some embodiments, forming the second set 32-2 of one or more channel estimates comprises applying a cyclically shifted version of the orthogonal cover code 22 to the demodulation reference signal 18 received on the second portion 30-2 of the demodulation reference signal resource elements 24 in the set 30. In one or more of these embodiments, the cyclically shifted version of the orthogonal cover code 22 is cyclically shifted by a remainder left after dividing a number of demodulation reference signal resource elements 24 to which the demodulation reference signal 18 is mapped by the length of the orthogonal cover code 22.

In some embodiments, demodulating the data channel using the first set 32-1 of channel estimates and the second set 32-2 of one or more channel estimates comprises performing noise and interference suppression 36 for the first set 32-1 of channel estimates to obtain a first set 38-1 of noise-and-interference-suppressed channel estimates, but refraining from performing noise and interference suppression 36 for the second set 32-2 of one or more channel estimates. In some embodiments, demodulating the data channel 16 using the first set 32-1 of channel estimates and the second set 32-2 of one or more channel estimates comprises demodulating the data channel 16 using the first set 38-1 of noise-and-interference-suppressed channel estimates and using the second set 32-2 of one or more channel estimates.

In other embodiments, demodulating the data channel 16 using the first set 32-1 of channel estimates and the second set 32-2 of one or more channel estimates comprises obtaining a third set 32-3 of channel estimates that includes the first set 32-1 of channel estimates, the second set 32-2 of one or more channel estimates, and additional channel estimates 44 interpolated between successive channel estimates in the first set 32-1. In some embodiments, channel estimates in the third set 32-3 are for respective resource elements that are equally spaced in the frequency domain. In some embodiments, demodulating the data channel 16 using the first set 32-1 of channel estimates and the second set 32-2 of one or more channel estimates comprises performing noise and interference suppression 36 for the third set 32-3 of channel estimates to obtain a third set 48 of noise-and-interference-suppressed channel estimates. In some embodiments, demodulating the data channel 16 using the first set 32-1 of channel estimates and the second set 32-2 of one or more channel estimates comprises demodulating the data channel 16 using the third set 48 of noise-and-interference-suppressed channel estimates.

In yet other embodiments, demodulating the data channel 16 using the first and second sets 32-1, 32-2 of channel estimates comprises obtaining a third set 32-3 of channel estimates that includes the first set 32-1 of channel estimates and the second set 32-2 of one or more channel estimates. In some embodiments, demodulating the data channel 16 using the first and second sets 32-1, 32-2 of channel estimates comprises, using an inverse Fourier transform 56 that transforms input samples non-equally spaced in the frequency domain, performing noise and interference suppression 52 for the third set 32-3 of channel estimates to obtain a third set 54 of noise-and-interference-suppressed channel estimates. In some embodiments, demodulating the data channel 16 using the first and second sets 32-1, 32-2 of channel estimates comprises demodulating the data channel 16 using the third set 54 of noise-and-interference-suppressed channel estimates.

In some embodiments, the second set 32-2 of one or more channel estimates includes only one channel estimate. In some embodiments, for example, the second portion 30-2 of the demodulation reference signal resource elements in the set 30 spans only a number of demodulation reference signal resource elements equal to a length of an orthogonal cover code 22 applied in the frequency domain to the demodulation reference signal.

In other embodiments, the second set 32-2 of one or more channel estimates includes multiple channel estimates. In some embodiments, for example, the second portion 30-2 of the demodulation reference signal resource elements in the set 30 spans a number of demodulation reference signal resource elements that is more than a length of an orthogonal cover code 22 applied in the frequency domain to the demodulation reference signal.

In some embodiments, the set 30 of one or more orphaned demodulation reference signal resource elements includes a number of demodulation reference signal resource elements equal to a remainder left after dividing a number of demodulation reference signal resource elements in the set 30 on which the demodulation reference signal is received by the length of an orthogonal cover code 22 applied in the frequency domain to the demodulation reference signal.

In some embodiments, the set 30 of one or more orphaned demodulation reference signal resource elements includes a number of demodulation reference signal resource elements less than the length of an orthogonal cover code 22 applied in the frequency domain to the demodulation reference signal.

In some embodiments, the set 30 of one or more orphaned demodulation reference signal resource elements includes one or more demodulation reference signal resource elements at an edge of a frequency range spanned by the demodulation reference signal.

In some embodiments, the demodulation reference signal 18 is mapped to resource elements in the frequency domain according to a frequency comb pattern.

In some embodiments, the demodulation reference signal 18 is mapped to resource elements in the frequency domain according to a type 1 frequency-domain mapping scheme.

In some embodiments, the data channel 16 is a Physical Downlink Shared Channel, PDSCH.

In some embodiments, the method further comprises receiving the demodulation reference signal (Block 1910), receiving the data channel (Block 1920), and demodulating the data channel using the demodulation reference signal as indicated in the signaling (Block 1930).

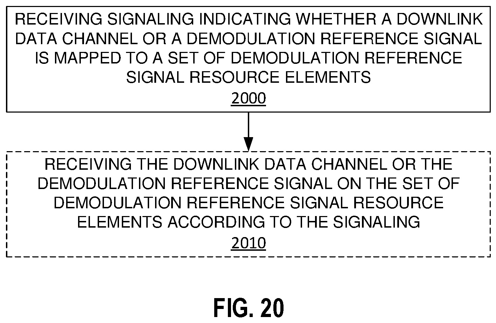

Figure 20 depicts a method performed by a communication device configured for use in a communication network. The method comprises receiving signaling indicating whether a data channel or a demodulation reference signal is mapped to a set of demodulation reference signal resource elements (Block 2000)

In some embodiments, the method further comprises receiving the data channel or the demodulation reference signal on the set of demodulation reference signal resource elements according to the signaling (Block 2010).

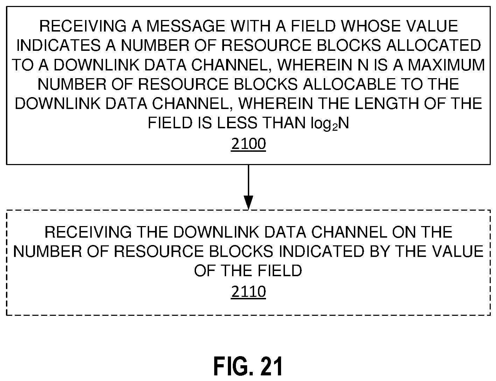

Figure 21 depicts a method performed by a communication device configured for use in a communication network. The method comprises receiving a message with a field whose value indicates a number of resource blocks allocated to a data channel (Block 2100). In some embodiments, N is a maximum number of resource blocks allocable to the data channel. In some embodiments, the length of the field is less than $\log_2 N$

In some embodiments, the number of resource blocks allocated to the data channel is required to be an even number.

In some embodiments, different possible values of the field are mapped to different possible even numbers of resource blocks allocated to the data channel.

In some embodiments, the field indicates the number of physical resource blocks allocated to the data channel in terms of a length of contiguously allocated physical or virtual resource blocks for reception of the data channel.

In some embodiments, the field is a resource indication value, RIV.

In some embodiments, the message is a downlink control information, DCI, message.

In some embodiments, N is a maximum number of resource blocks allocable to the data channel within any given resource block group. In some embodiments, the value of the field indicates a number of resource blocks allocated to a data channel within a certain resource block group.

In some embodiments, the method also comprises receiving the data channel on the number of resource blocks indicated by the value of the field (Block 2110).

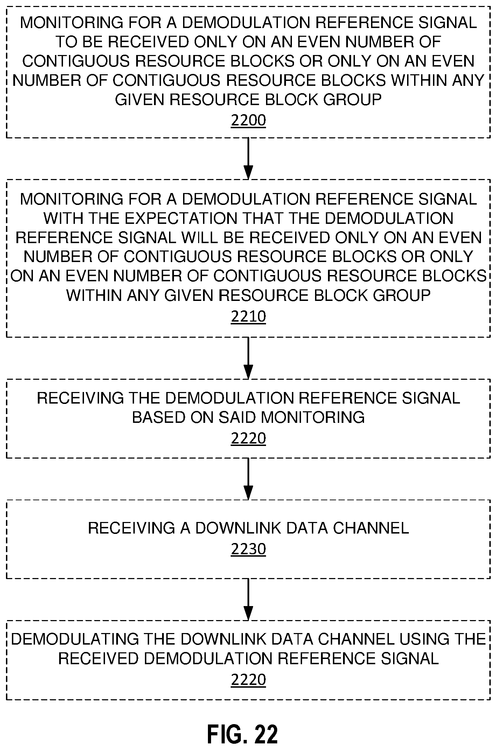

Figure 22 depicts a method performed by a communication device configured for use in a communication network. The method comprises monitoring for a demodulation reference signal to be received only on an even number of contiguous resource blocks or only on an even number of contiguous resource blocks within any given resource block group (Block 2200). Alternatively, the method comprises monitoring for a demodulation reference signal with the expectation that the demodulation reference signal will be received only on an even number of contiguous resource blocks or only on an even number of contiguous resource blocks within any given resource block group (Block 2210).

In some embodiments, said monitoring comprises monitoring for the demodulation reference signal on a set of demodulation reference signal resource elements that excludes any orphaned demodulation reference signal resource elements.

In some embodiments, the method further comprises monitoring for a data channel on orphaned demodulation reference signal resource elements .

In some embodiments, the method further comprises receiving the demodulation reference signal based on said monitoring (Block 2220), receiving a data channel (Block 2230), and demodulating the data channel using the received demodulation reference signal (Block 2240).

In some embodiments, the communication device is not capable of demodulating a data channel using a demodulation reference signal mapped to orphaned demodulation reference signal resource elements. Alternatively, the communication device is not capable of demodulating a data channel using a demodulation reference signal mapped in the frequency domain to a number of demodulation reference signal resource elements that is not a multiple of a length of an orthogonal cover code applied in the frequency domain to the demodulation reference signal. Alternatively, the communication device is not capable of demodulating a data channel using a demodulation reference signal mapped in the frequency domain to an odd number of resource blocks or to a set of resource block groups that includes a resource block group with an odd number of resource blocks. Alternatively, the communication device is not capable of demodulating a data channel using a demodulation reference signal scheduled without restriction on the number of resource elements, resource blocks, or resource block groups to which the demodulation reference signal is mapped.

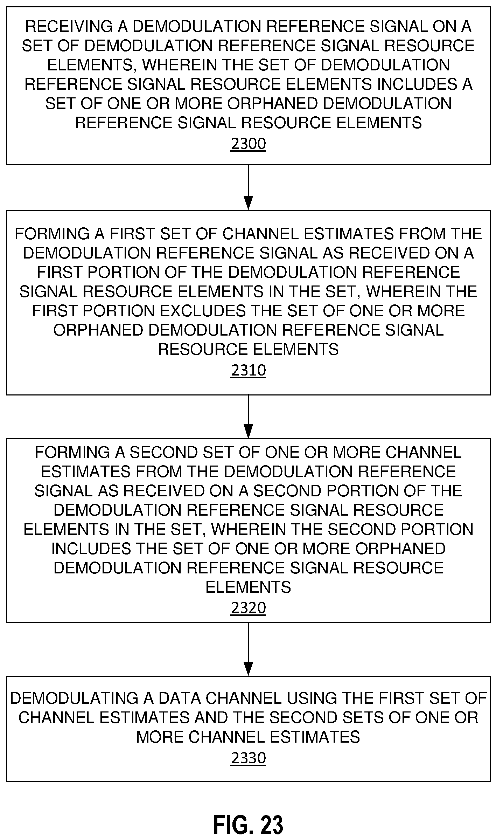

Figure 23 depicts a method performed by a communication device 12 configured for use in a communication network 10. The method comprises receiving a demodulation reference signal 18 on a set 30 of demodulation reference signal resource elements 24 (Block 2300). In some embodiments, the set 30 of demodulation reference signal resource elements 24 includes a set of one or more orphaned demodulation reference signal resource elements 24-O.

The method also comprises forming a first set 32-1 of channel estimates from the demodulation reference signal 18 as received on a first portion 30-1 of the demodulation reference signal resource elements 24 in the set 30 (Block 2310). In some embodiments, the first portion 30-1 excludes the set of one or more orphaned demodulation reference signal resource elements 24-O. The method also comprises forming a second set 32-2 of one or more channel estimates from the demodulation reference signal 18 as received on a second portion 30-2 of the demodulation reference signal resource elements 24 in the set 30 (Block 2320). In some embodiments, the second portion 30-2 includes the set of one or more orphaned demodulation reference signal resource elements 24-O.

The method also comprises demodulating the data channel 16 using the first set 32-1 of channel estimates and the second set 32-2 of one or more channel estimates (Block 2330).

In one or more of these embodiments, forming the first set 32-1 of channel estimates comprises applying an orthogonal cover code 22 to the demodulation reference signal 18 received on the first portion 30-1 of the demodulation reference signal resource elements 24 in the set 30. In some embodiments, forming the second set 32-2 of one or more channel estimates comprises applying a cyclically shifted version of the orthogonal cover code 22 to the demodulation reference signal 18 received on the second portion 30-2 of the demodulation reference signal resource elements 24 in the set 30. In one or more of these embodiments, the cyclically shifted version of the orthogonal cover code 22 is cyclically shifted by a remainder left after dividing a number of demodulation reference signal resource elements 24 to which the demodulation reference signal 18 is mapped by the length of the orthogonal cover code 22.

In some embodiments, demodulating the data channel using the first set 32-1 of channel estimates and the second set 32-2 of one or more channel estimates comprises performing noise and interference suppression 36 for the first set 32-1 of channel estimates to obtain a first set 38-1 of noise-and-interference-suppressed channel estimates, but refraining from performing noise and interference suppression 36 for the second set 32-2 of one or more channel estimates. In some embodiments, demodulating the data channel 16 using the first set 32-1 of channel estimates and the second set 32-2 of one or more channel estimates comprises demodulating the data channel 16 using the first set 38-1 of noise-and-interference-suppressed channel estimates and using the second set 32-2 of one or more channel estimates.

In other embodiments, demodulating the data channel 16 using the first set 32-1 of channel estimates and the second set 32-2 of one or more channel estimates comprises obtaining a third set 32-3 of channel estimates that includes the first set 32-1 of channel estimates, the second set 32-2 of one or more channel estimates, and additional channel estimates 44 interpolated between successive channel estimates in the first set 32-1. In some embodiments, channel estimates in the third set 32-3 are for respective resource elements that are equally spaced in the frequency domain. In some embodiments, demodulating the data channel 16 using the first set 32-1 of channel estimates and the second set 32-2 of one or more channel estimates comprises performing noise and interference suppression 36 for the third set 32-3 of channel estimates to obtain a third set 48 of noise-and-interference-suppressed channel estimates. In some embodiments, demodulating the data channel 16 using the first set 32-1 of channel estimates and the second set 32-2 of one or more channel estimates comprises demodulating the data channel 16 using the third set 48 of noise-and-interference-suppressed channel estimates.

In yet other embodiments, demodulating the data channel 16 using the first and second sets 32-1, 32-2 of channel estimates comprises obtaining a third set 32-3 of channel estimates that includes the first set 32-1 of channel estimates and the second set 32-2 of one or more channel estimates. In some embodiments, demodulating the data channel 16 using the first and second sets 32-1, 32-2 of channel estimates comprises, using an inverse Fourier transform 56 that transforms input samples non-equally spaced in the frequency domain, performing noise and interference suppression 52 for the third set 32-3 of channel estimates to obtain a third set 54 of noise-and-interference-suppressed channel estimates. In some embodiments, demodulating the data channel 16 using the first and second sets 32-1, 32-2 of channel estimates comprises demodulating the data channel 16 using the third set 54 of noise-and-interference-suppressed channel estimates.

In some embodiments, the second set 32-2 of one or more channel estimates includes only one channel estimate. In some embodiments, for example, the second portion 30-2 of the demodulation reference signal resource elements in the set 30 spans only a number of demodulation reference signal resource elements equal to a length of an orthogonal cover code 22 applied in the frequency domain to the demodulation reference signal.

In other embodiments, the second set 32-2 of one or more channel estimates includes multiple channel estimates. In some embodiments, for example, the second portion 30-2 of the demodulation reference signal resource elements in the set 30 spans a number of demodulation reference signal resource elements that is more than a length of an orthogonal cover code 22 applied in the frequency domain to the demodulation reference signal.

In some embodiments, the set 30 of one or more orphaned demodulation reference signal resource elements includes a number of demodulation reference signal resource elements equal to a remainder left after dividing a number of demodulation reference signal resource elements in the set 30 on which the demodulation reference signal is received by the length of an orthogonal cover code 22 applied in the frequency domain to the demodulation reference signal.

In some embodiments, the set 30 of one or more orphaned demodulation reference signal resource elements includes a number of demodulation reference signal resource elements less than the length of an orthogonal cover code 22 applied in the frequency domain to the demodulation reference signal.

In some embodiments, the set 30 of one or more orphaned demodulation reference signal resource elements includes one or more demodulation reference signal resource elements at an edge of a frequency range spanned by the demodulation reference signal.

In some embodiments, the demodulation reference signal 18 is mapped to resource elements in the frequency domain according to a frequency comb pattern.

In some embodiments, the demodulation reference signal 18 is mapped to resource elements in the frequency domain according to a type 1 frequency-domain mapping scheme.

In some embodiments, the data channel 16 is a Physical Downlink Shared Channel, PDSCH.

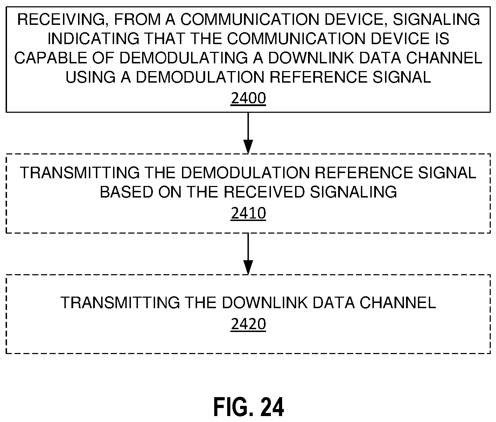

Figure 24 depicts a method performed by a network node configured for use in a communication network. The method comprises receiving, from a communication device, signaling indicating that the communication device is capable of demodulating a data channel using a demodulation reference signal (Block 2400).

More particularly, in some embodiments, the signaling indicates that the communication device is capable of demodulating a data channel using a demodulation reference signal mapped to orphaned demodulation reference signal resource elements. Alternatively or additionally, in some embodiments, the signaling indicates that the communication device is capable of demodulating a data channel using a demodulation reference signal mapped in the frequency domain to a number of demodulation reference signal resource elements that is not a multiple of a length of an orthogonal cover code applied in the frequency domain to the demodulation reference signal. Alternatively or additionally, in some embodiments, the signaling indicates that the communication device is capable of demodulating a data channel using a demodulation reference signal mapped in the frequency domain to an odd number of resource blocks or to a set of resource block groups that includes a resource block group with an odd number of resource blocks. Alternatively or additionally, in some embodiments, the signaling indicates that the communication device is capable of demodulating a data channel using a demodulation reference signal mapped in the frequency domain to an odd number of contiguous resource blocks or to an odd number of contiguous resource blocks within any given resource block group. Alternatively or additionally, in some embodiments, the signaling indicates that the communication device is capable of demodulating a data channel using a demodulation reference signal scheduled without restriction on the number of resource elements, resource blocks, or resource block groups to which the demodulation reference signal is mapped.

In some embodiments, the signaling indicates that the communication device is capable of demodulating the data channel using the demodulation reference signal, as mapped or scheduled, if co-scheduled demodulation reference signal ports belonging to the same code division multiplexing group are super orthogonal to each other.

In some embodiments, the method further comprises, based on receiving the signaling, transmitting the demodulation reference signal on a set of demodulation reference signal resource elements, wherein the set of demodulation reference signal resource elements includes a set of one or more orphaned demodulation reference signal resource elements. In one or more of these embodiments, the set of one or more orphaned demodulation reference signal resource elements includes a number of demodulation reference signal resource elements equal to a remainder left after dividing a number of demodulation reference signal resource elements in the set on which the demodulation reference signal is transmitted by the length of an orthogonal cover code applied in the frequency domain to the demodulation reference signal. In one or more of these embodiments, the set of one or more orphaned demodulation reference signal resource elements includes a number of demodulation reference signal resource elements less than the length of an orthogonal cover code applied in the frequency domain to the demodulation reference signal. In one or more of these embodiments, the set of one or more orphaned demodulation reference signal resource elements includes one or more demodulation reference signal resource elements at an edge of a frequency range spanned by the demodulation reference signal.

In some embodiments, the demodulation reference signal is mapped to resource elements in the frequency domain according to a frequency comb pattern.

In some embodiments, the demodulation reference signal is mapped to resource elements in the frequency domain according to a type 1 frequency-domain mapping scheme.

In some embodiments, the data channel is a Physical Downlink Shared Channel, PDSCH.

In some embodiments, the method further comprises transmitting the demodulation reference signal based on the received signaling (Block 2410). The method may further comprise transmitting the data channel (Block 2420).

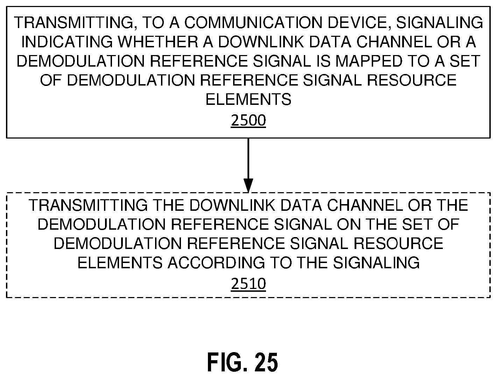

Figure 25 depicts a method performed by a network node configured for use in a communication network. The method comprises transmitting, to a communication device, signaling indicating whether a data channel or a demodulation reference signal is mapped to a set of demodulation reference signal resource elements (Block 2500).

In some embodiments, the method further comprises transmitting the data channel or the demodulation reference signal on the set of demodulation reference signal resource elements according to the signaling (Block 2510).

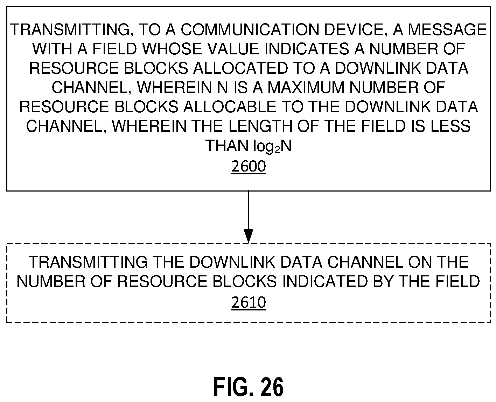

Figure 26 depicts a method performed by a network node configured for use in a communication network. The method comprises transmitting, to a communication device, a message with a field whose value indicates a number of resource blocks allocated to a data channel (Block 2600). In some embodiments, N is a maximum number of resource blocks allocable to the data channel. In some embodiments, the length of the field is less than $\log_2 N$.

In some embodiments, the number of resource blocks allocated to the data channel is required to be an even number.

In some embodiments, different possible values of the field are mapped to different possible even numbers of resource blocks allocated to the data channel.

In some embodiments, the field indicates the number of physical resource blocks allocated to the data channel in terms of a length of contiguously allocated physical or virtual resource blocks for reception of the data channel.

In some embodiments, the field is a resource indication value, RIV.

In some embodiments, the message is a downlink control information, DCI, message.

In some embodiments, N is a maximum number of resource blocks allocable to the data channel within any given resource block group. In some embodiments, the value of the field indicates a number of resource blocks allocated to a data channel within a certain resource block group.

In some embodiments, the method further comprises transmitting the data channel on the number of resource blocks indicated by the field (Block 2610).

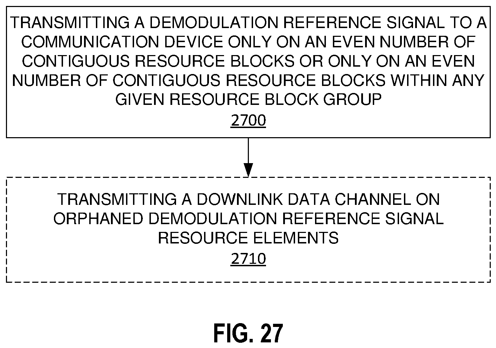

Figure 27 depicts a method performed by a network node configured for use in a communication network. The method comprises transmitting a demodulation reference signal to a communication device only on an even number of contiguous resource blocks or only on an even number of contiguous resource blocks within any given resource block group (Block 2700).

In some embodiments, said transmitting comprises transmitting the demodulation reference signal on a set of demodulation reference signal resource elements that excludes any orphaned demodulation reference signal resource elements.

In some embodiments, the method further comprises transmitting a data channel on orphaned demodulation reference signal resource elements (Block 2710).

In some embodiments, the communication device is not capable of demodulating a data channel using a demodulation reference signal mapped to orphaned demodulation reference signal resource elements. Alternatively, the communication device is not capable of demodulating a data channel using a demodulation reference signal mapped in the frequency domain to a number of demodulation reference signal resource elements that is not a multiple of a length of an orthogonal cover code applied in the frequency domain to the demodulation reference signal. Alternatively, the communication device is not capable of demodulating a data channel using a demodulation reference signal mapped in the frequency domain to an odd number of resource blocks or to a set of resource block groups that includes a resource block group with an odd number of resource blocks. Alternatively, the communication device is not capable of demodulating a data channel using a demodulation reference signal scheduled without restriction on the number of resource elements, resource blocks, or resource block groups to which the demodulation reference signal is mapped.

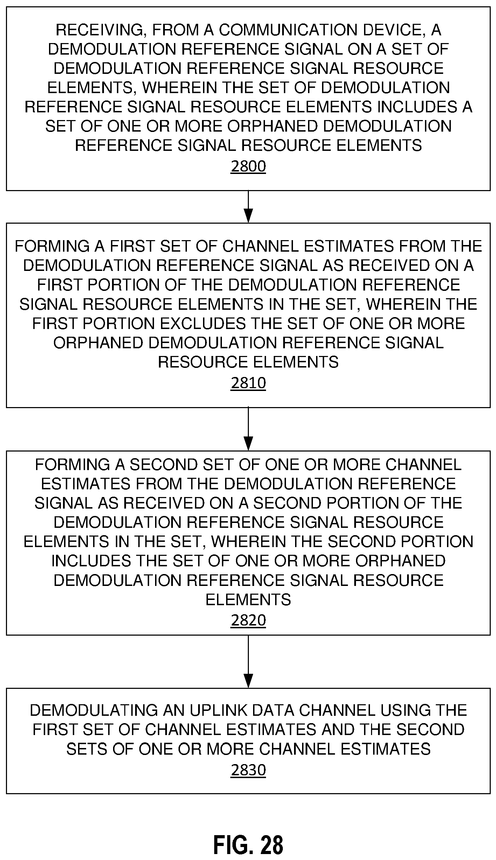

Figure 28 depicts a method performed by a network node configured for use in a communication network. The method comprises receiving, from a communication device, a demodulation reference signal on a set of demodulation reference signal resource elements (Block 2800). In some embodiments, the set of demodulation reference signal resource elements includes a set of one or more orphaned demodulation reference signal resource elements.

The method also comprises forming a first set of channel estimates from the demodulation reference signal as received on a first portion of the demodulation reference signal resource elements in the set (Block 2810). In some embodiments, the first portion excludes the set of one or more orphaned demodulation reference signal resource elements. The method also comprises forming a second set of one or more channel estimates from the demodulation reference signal as received on a second portion of the demodulation reference signal resource elements in the set (Block 2820). In some embodiments, the second portion includes the set of one or more orphaned demodulation reference signal resource elements.

The method also comprises demodulating an uplink data channel using the first set of channel estimates and the second sets of one or more channel estimates (Block 2830).

In some embodiments, forming the first set of channel estimates comprises applying an orthogonal cover code to the demodulation reference signal received on the first portion of the demodulation reference signal resource elements in the set. In some embodiments, forming the second set of one or more channel estimates comprises applying a cyclically shifted version of the orthogonal cover code to the demodulation reference signal received on the second portion of the demodulation reference signal resource elements in the set. In one or more of these embodiments, the cyclically shifted version of the orthogonal cover code is cyclically shifted by a remainder left after dividing a number of demodulation reference signal resource elements to which the demodulation reference signal is mapped by the length of the orthogonal cover code.

In some embodiments, demodulating the uplink data channel using the first set of channel estimates and the second set of one or more channel estimates comprises performing noise and interference suppression for the first set of channel estimates to obtain a first set of noise-and-interference-suppressed channel estimates, but refraining from performing noise and interference suppression for the second set of one or more channel estimates. Demodulating the uplink data channel using the first set of channel estimates and the second set of one or more channel estimates also comprises demodulating the uplink data channel using the first set of noise-and-interference-suppressed channel estimates and using the second set of one or more channel estimates.

In some embodiments, demodulating the uplink data channel using the first set of channel estimates and the second set of one or more channel estimates comprises obtaining a third set of channel estimates that includes the first set of channel estimates, the second set of one or more channel estimates, and additional channel estimates interpolated between successive channel estimates in the first set. In some embodiments, channel estimates in the third set are for respective resource elements that are equally spaced in the frequency domain. Demodulating the uplink data channel using the first set of channel estimates and the second set of one or more channel estimates also comprises performing noise and interference suppression for the third set of channel estimates to obtain a third set of noise-and-interference-suppressed channel estimates. Demodulating the uplink data channel using the first set of channel estimates and the second set of one or more channel estimates also comprises demodulating the uplink data channel using the third set of noise-and-interference-suppressed channel estimates

In some embodiments, demodulating the uplink data channel using the first and second sets of channel estimates comprises obtaining a third set of channel estimates that includes the first set of channel estimates and the second set of one or more channel estimates. Demodulating the uplink data channel using the first and second sets of channel estimates also comprises using an inverse Fourier transform that transforms input samples non-equally spaced in the frequency domain, performing noise and interference suppression for the third set of channel estimates to obtain a third set of noise-and-interference-suppressed channel estimates. Demodulating the uplink data channel using the first and second sets of channel estimates also comprises demodulating the uplink data channel using the third set of noise-and-interference-suppressed channel estimates.

In some embodiments, the second set of one or more channel estimates includes only one channel estimate.

In some embodiments, the second portion of the demodulation reference signal resource elements in the set spans only a number of demodulation reference signal resource elements equal to a length of an orthogonal cover code applied in the frequency domain to the demodulation reference signal.

In some embodiments, the second set of one or more channel estimates includes multiple channel estimates.

In some embodiments, the second portion of the demodulation reference signal resource elements in the set spans a number of demodulation reference signal resource elements that is more than a length of an orthogonal cover code applied in the frequency domain to the demodulation reference signal.

In some embodiments, the set of one or more orphaned demodulation reference signal resource elements includes a number of demodulation reference signal resource elements equal to a remainder left after dividing a number of demodulation reference signal resource elements in the set on which the demodulation reference signal is received by the length of an orthogonal cover code applied in the frequency domain to the demodulation reference signal.

In some embodiments, the set of one or more orphaned demodulation reference signal resource elements includes a number of demodulation reference signal resource elements less than the length of an orthogonal cover code applied in the frequency domain to the demodulation reference signal.

In some embodiments, the set of one or more orphaned demodulation reference signal resource elements includes one or more demodulation reference signal resource elements at an edge of a frequency range spanned by the demodulation reference signal.

In some embodiments, the demodulation reference signal is mapped to resource elements in the frequency domain according to a frequency comb pattern.

In some embodiments, the demodulation reference signal is mapped to resource elements in the frequency domain according to a type 1 frequency-domain mapping scheme.

In some embodiments, the uplink data channel is a Physical Uplink Shared Channel, PUSCH.

Embodiments herein also include corresponding apparatuses. Embodiments herein for instance include a communication device 12 configured to perform any of the steps of any of the embodiments described above for the communication device 12.

Embodiments also include a communication device 12 comprising processing circuitry and power supply circuitry. The processing circuitry is configured to perform any of the steps of any of the embodiments described above for the communication device 12. The power supply circuitry is configured to supply power to the communication device 12.

Embodiments further include a communication device 12 comprising processing circuitry. The processing circuitry is configured to perform any of the steps of any of the embodiments described above for the communication device 12. In some embodiments, the communication device 12 further comprises communication circuitry.

Embodiments further include a communication device 12 comprising processing circuitry and memory. The memory contains instructions executable by the processing circuitry whereby the communication device 12 is configured to perform any of the steps of any of the embodiments described above for the communication device 12.

Embodiments moreover include a user equipment (UE). The UE comprises an antenna configured to send and receive wireless signals. The UE also comprises radio front-end circuitry connected to the antenna and to processing circuitry, and configured to condition signals communicated between the antenna and the processing circuitry. The processing circuitry is configured to perform any of the steps of any of the embodiments described above for the communication device 12. In some embodiments, the UE also comprises an input interface connected to the processing circuitry and configured to allow input of information into the UE to be processed by the processing circuitry. The UE may comprise an output interface connected to the processing circuitry and configured to output information from the UE that has been processed by the processing circuitry. The UE may also comprise a battery connected to the processing circuitry and configured to supply power to the UE.

Embodiments herein also include a network node 14 configured to perform any of the steps of any of the embodiments described above for the network node 14.

Embodiments also include a network node 14 comprising processing circuitry and power supply circuitry. The processing circuitry is configured to perform any of the steps of any of the embodiments described above for the network node 14. The power supply circuitry is configured to supply power to the network node 14.

Embodiments further include a network node 14 comprising processing circuitry. The processing circuitry is configured to perform any of the steps of any of the embodiments described above for the network node 14. In some embodiments, the network node 14 further comprises communication circuitry.

Embodiments further include a network node 14 comprising processing circuitry and memory. The memory contains instructions executable by the processing circuitry whereby the network node 14 is configured to perform any of the steps of any of the embodiments described above for the network node 14.

More particularly, the apparatuses described above may perform the methods herein and any other processing by implementing any functional means, modules, units, or circuitry. In one embodiment, for example, the apparatuses comprise respective circuits or circuitry configured to perform the steps shown in the method figures. The circuits or circuitry in this regard may comprise circuits dedicated to performing certain functional processing and/or one or more microprocessors in conjunction with memory. For instance, the circuitry may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory may include program instructions for executing one or more telecommunications and/or data communications protocols as well as instructions for carrying out one or more of the techniques described herein, in several embodiments. In embodiments that employ memory, the memory stores program code that, when executed by the one or more processors, carries out the techniques described herein.

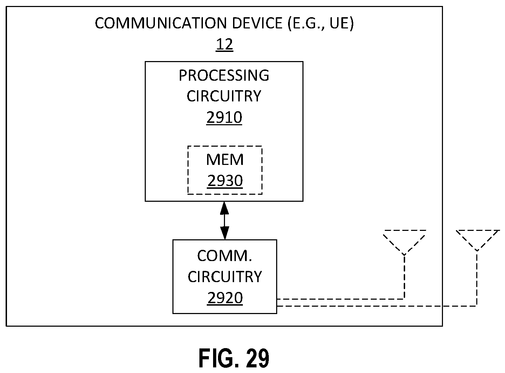

Figure 29 for example illustrates a communication device 12 as implemented in accordance with one or more embodiments. As shown, the communication device 12 includes processing circuitry 2910 and communication circuitry 2920. The communication circuitry 2920 (e.g., radio circuitry) is configured to transmit and/or receive information to and/or from one or more other nodes, e.g., via any communication technology. Such communication may occur via one or more antennas that are either internal or external to the wireless communication device 2900. The processing circuitry 2910 is configured to perform processing described above, e.g., in any of Figures 19-23, such as by executing instructions stored in memory 2930. The processing circuitry 2910 in this regard may implement certain functional means, units, or modules.

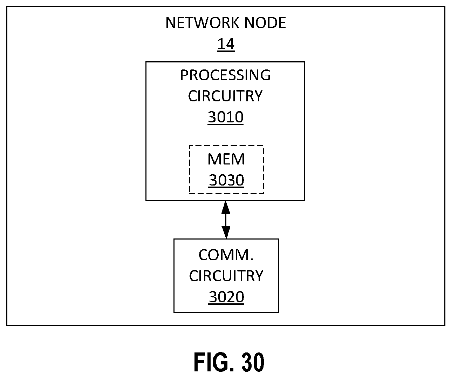

Figure 30 illustrates a network node 14 as implemented in accordance with one or more embodiments. As shown, the network node 14 includes processing circuitry 3010 and communication circuitry 3020. The communication circuitry 3020 is configured to transmit and/or receive information to and/or from one or more other nodes, e.g., via any communication technology. The processing circuitry 3010 is configured to perform processing described above, e.g., in any of Figures 24-28, such as by executing instructions stored in memory 3030. The processing circuitry 3010 in this regard may implement certain functional means, units, or modules.

Those skilled in the art will also appreciate that embodiments herein further include corresponding computer programs.

A computer program comprises instructions which, when executed on at least one processor of an apparatus, cause the apparatus to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of an apparatus, cause the apparatus to perform as described above.

Embodiments further include a computer program product comprising program code portions for performing the steps of any of the embodiments herein when the computer program product is executed by a computing device. This computer program product may be stored on a computer readable recording medium.

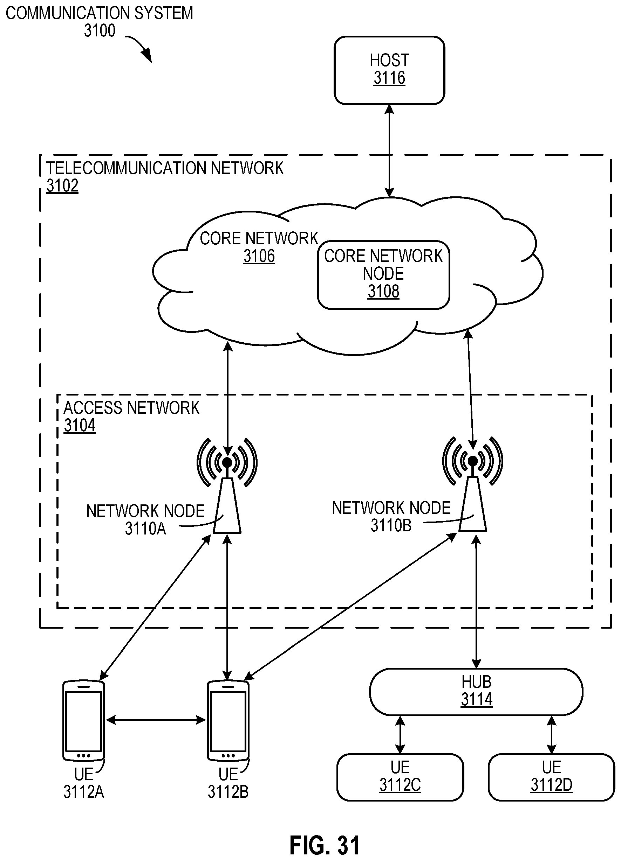

Figure 31 shows an example of a communication system 3100 in accordance with some embodiments.

In the example, the communication system 3100 includes a telecommunication network 3102 that includes an access network 3104, such as a radio access network (RAN), and a core network 3106, which includes one or more core network nodes 3108. The access network 3104 includes one or more access network nodes, such as network nodes 3110a and 3110b (one or more of which may be generally referred to as network nodes 3110), or any other similar 3rd Generation Partnership Project (3GPP) access node or non-3GPP access point. The network nodes 3110 facilitate direct or indirect connection of user equipment (UE), such as by connecting UEs 3112a, 3112b, 3112c, and 3112d (one or more of which may be generally referred to as UEs 3112) to the core network 3106 over one or more wireless connections.

Example wireless communications over a wireless connection include transmitting and/or receiving wireless signals using electromagnetic waves, radio waves, infrared waves, and/or other types of signals suitable for conveying information without the use of wires, cables, or other material conductors. Moreover, in different embodiments, the communication system 3100 may include any number of wired or wireless networks, network nodes, UEs, and/or any other components or systems that may facilitate or participate in the communication of data and/or signals whether via wired or wireless connections. The communication system 3100 may include and/or interface with any type of communication, telecommunication, data, cellular, radio network, and/or other similar type of system.

The UEs 3112 may be any of a wide variety of communication devices, including wireless devices arranged, configured, and/or operable to communicate wirelessly with the network nodes 3110 and other communication devices. Similarly, the network nodes 3110 are arranged, capable, configured, and/or operable to communicate directly or indirectly with the UEs 3112 and/or with other network nodes or equipment in the telecommunication network 3102 to enable and/or provide network access, such as wireless network access, and/or to perform other functions, such as administration in the telecommunication network 3102.

In the depicted example, the core network 3106 connects the network nodes 3110 to one or more hosts, such as host 3116. These connections may be direct or indirect via one or more intermediary networks or devices. In other examples, network nodes may be directly coupled to hosts. The core network 3106 includes one more core network nodes (e.g., core network node 3108) that are structured with hardware and software components. Features of these components may be substantially similar to those described with respect to the UEs, network nodes, and/or hosts, such that the descriptions thereof are generally applicable to the corresponding components of the core network node 3108. Example core network nodes include functions of one or more of a Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or a User Plane Function (UPF).

The host 3116 may be under the ownership or control of a service provider other than an operator or provider of the access network 3104 and/or the telecommunication network 3102, and may be operated by the service provider or on behalf of the service provider. The host 3116 may host a variety of applications to provide one or more service. Examples of such applications include live and pre-recorded audio/video content, data collection services such as retrieving and compiling data on various ambient conditions detected by a plurality of UEs, analytics functionality, social media, functions for controlling or otherwise interacting with remote devices, functions for an alarm and surveillance center, or any other such function performed by a server.

As a whole, the communication system 3100 of Figure 31 enables connectivity between the UEs, network nodes, and hosts. In that sense, the communication system may be configured to operate according to predefined rules or procedures, such as specific standards that include, but are not limited to: Global System for Mobile Communications (GSM); Universal Mobile Telecommunications System (UMTS); Long Term Evolution (LTE), and/or other suitable 2G, 3G, 4G, 5G standards, or any applicable future generation standard (e.g., 6G); wireless local area network (WLAN) standards, such as the Institute of Electrical and Electronics Engineers (IEEE) 802.11 standards (WiFi); and/or any other appropriate wireless communication standard, such as the Worldwide Interoperability for Microwave Access (WiMax), Bluetooth, Z-Wave, Near Field Communication (NFC) ZigBee, LiFi, and/or any low-power wide-area network (LPWAN) standards such as LoRa and Sigfox.

In some examples, the telecommunication network 3102 is a cellular network that implements 3GPP standardized features. Accordingly, the telecommunications network 3102 may support network slicing to provide different logical networks to different devices that are connected to the telecommunication network 3102. For example, the telecommunications network 3102 may provide Ultra Reliable Low Latency Communication (URLLC) services to some UEs, while providing Enhanced Mobile Broadband (eMBB) services to other UEs, and/or Massive Machine Type Communication (mMTC)/Massive IoT services to yet further UEs.

In some examples, the UEs 3112 are configured to transmit and/or receive information without direct human interaction. For instance, a UE may be designed to transmit information to the access network 3104 on a predetermined schedule, when triggered by an internal or external event, or in response to requests from the access network 3104. Additionally, a UE may be configured for operating in single- or multi-RAT or multi-standard mode. For example, a UE may operate with any one or combination of Wi-Fi, NR (New Radio) and LTE, i.e. being configured for multi-radio dual connectivity (MR-DC), such as E-UTRAN (Evolved-UMTS Terrestrial Radio Access Network) New Radio - Dual Connectivity (EN-DC).

In the example, the hub 3114 communicates with the access network 3104 to facilitate indirect communication between one or more UEs (e.g., UE 3112c and/or 3112d) and network nodes (e.g., network node 3110b). In some examples, the hub 3114 may be a controller, router, content source and analytics, or any of the other communication devices described herein regarding UEs. For example, the hub 3114 may be a broadband router enabling access to the core network 3106 for the UEs. As another example, the hub 3114 may be a controller that sends commands or instructions to one or more actuators in the UEs. Commands or instructions may be received from the UEs, network nodes 3110, or by executable code, script, process, or other instructions in the hub 3114. As another example, the hub 3114 may be a data collector that acts as temporary storage for UE data and, in some embodiments, may perform analysis or other processing of the data. As another example, the hub 3114 may be a content source. For example, for a UE that is a VR headset, display, loudspeaker or other media delivery device, the hub 3114 may retrieve VR assets, video, audio, or other media or data related to sensory information via a network node, which the hub 3114 then provides to the UE either directly, after performing local processing, and/or after adding additional local content. In still another example, the hub 3114 acts as a proxy server or orchestrator for the UEs, in particular in if one or more of the UEs are low energy IoT devices.

The hub 3114 may have a constant/persistent or intermittent connection to the network node 3110b. The hub 3114 may also allow for a different communication scheme and/or schedule between the hub 3114 and UEs (e.g., UE 3112c and/or 3112d), and between the hub 3114 and the core network 3106. In other examples, the hub 3114 is connected to the core network 3106 and/or one or more UEs via a wired connection. Moreover, the hub 3114 may be configured to connect to an M2M service provider over the access network 3104 and/or to another UE over a direct connection. In some scenarios, UEs may establish a wireless connection with the network nodes 3110 while still connected via the hub 3114 via a wired or wireless connection. In some embodiments, the hub 3114 may be a dedicated hub - that is, a hub whose primary function is to route communications to/from the UEs from/to the network node 3110b. In other embodiments, the hub 3114 may be a non-dedicated hub - that is, a device which is capable of operating to route communications between the UEs and network node 3110b, but which is additionally capable of operating as a communication start and/or end point for certain data channels.

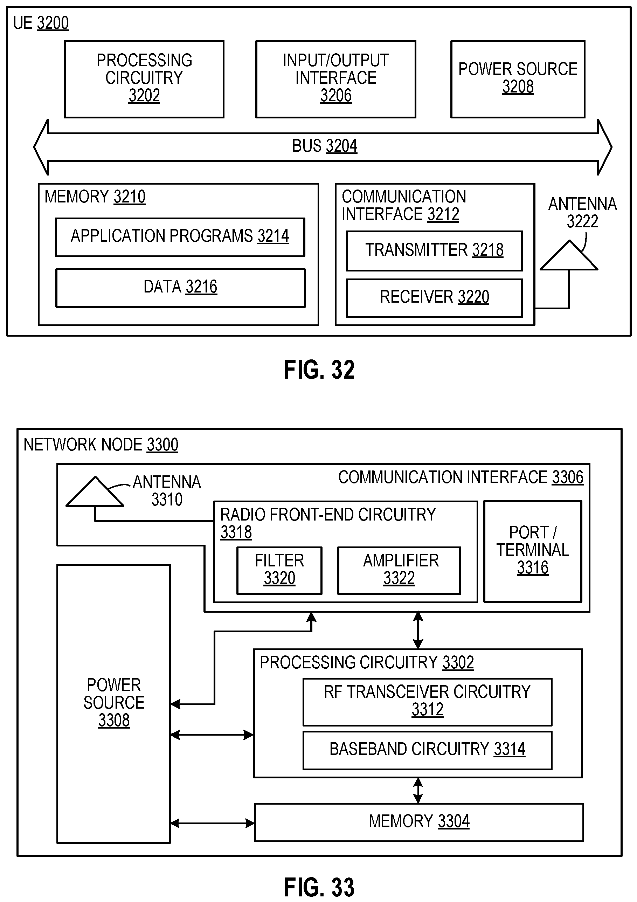

Figure 32 shows a UE 3200 in accordance with some embodiments. As used herein, a UE refers to a device capable, configured, arranged and/or operable to communicate wirelessly with network nodes and/or other UEs. Examples of a UE include, but are not limited to, a smart phone, mobile phone, cell phone, voice over IP (VoIP) phone, wireless local loop phone, desktop computer, personal digital assistant (PDA), wireless cameras, gaming console or device, music storage device, playback appliance, wearable terminal device, wireless endpoint, mobile station, tablet, laptop, laptop-embedded equipment (LEE), laptop-mounted equipment (LME), smart device, wireless customer-premise equipment (CPE), vehicle-mounted or vehicle embedded/integrated wireless device, etc. Other examples include any UE identified by the 3rd Generation Partnership Project (3GPP), including a narrow band internet of things (NB-IoT) UE, a machine type communication (MTC) UE, and/or an enhanced MTC (eMTC) UE.

A UE may support device-to-device (D2D) communication, for example by implementing a 3GPP standard for sidelink communication, Dedicated Short-Range Communication (DSRC), vehicle-to-vehicle (V2V), vehicle-to-infrastructure (V2I), or vehicle-to-everything (V2X). In other examples, a UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter).

The UE 3200 includes processing circuitry 3202 that is operatively coupled via a bus 3204 to an input/output interface 3206, a power source 3208, a memory 3210, a communication interface 3212, and/or any other component, or any combination thereof. Certain UEs may utilize all or a subset of the components shown in Figure 32. The level of integration between the components may vary from one UE to another UE. Further, certain UEs may contain multiple instances of a component, such as multiple processors, memories, transceivers, transmitters, receivers, etc.

The processing circuitry 3202 is configured to process instructions and data and may be configured to implement any sequential state machine operative to execute instructions stored as machine-readable computer programs in the memory 3210. The processing circuitry 3202 may be implemented as one or more hardware-implemented state machines (e.g., in discrete logic, field-programmable gate arrays (FPGAs), application specific integrated circuits (ASICs), etc.); programmable logic together with appropriate firmware; one or more stored computer programs, general-purpose processors, such as a microprocessor or digital signal processor (DSP), together with appropriate software; or any combination of the above. For example, the processing circuitry 3202 may include multiple central processing units (CPUs).

In the example, the input/output interface 3206 may be configured to provide an interface or interfaces to an input device, output device, or one or more input and/or output devices. Examples of an output device include a speaker, a sound card, a video card, a display, a monitor, a printer, an actuator, an emitter, a smartcard, another output device, or any combination thereof. An input device may allow a user to capture information into the UE 3200. Examples of an input device include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, a biometric sensor, etc., or any combination thereof. An output device may use the same type of interface port as an input device. For example, a Universal Serial Bus (USB) port may be used to provide an input device and an output device.

In some embodiments, the power source 3208 is structured as a battery or battery pack. Other types of power sources, such as an external power source (e.g., an electricity outlet), photovoltaic device, or power cell, may be used. The power source 3208 may further include power circuitry for delivering power from the power source 3208 itself, and/or an external power source, to the various parts of the UE 3200 via input circuitry or an interface such as an electrical power cable. Delivering power may be, for example, for charging of the power source 3208. Power circuitry may perform any formatting, converting, or other modification to the power from the power source 3208 to make the power suitable for the respective components of the UE 3200 to which power is supplied.

The memory 3210 may be or be configured to include memory such as random access memory (RAM), read-only memory (ROM), programmable read-only memory (PROM), erasable programmable read-only memory (EPROM), electrically erasable programmable read-only memory (EEPROM), magnetic disks, optical disks, hard disks, removable cartridges, flash drives, and so forth. In one example, the memory 3210 includes one or more application programs 3214, such as an operating system, web browser application, a widget, gadget engine, or other application, and corresponding data 3216. The memory 3210 may store, for use by the UE 3200, any of a variety of various operating systems or combinations of operating systems.

The memory 3210 may be configured to include a number of physical drive units, such as redundant array of independent disks (RAID), flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as tamper resistant module in the form of a universal integrated circuit card (UICC) including one or more subscriber identity modules (SIMs), such as a USIM and/or ISIM, other memory, or any combination thereof. The UICC may for example be an embedded UICC (eUICC), integrated UICC (iUICC) or a removable UICC commonly known as 'SIM card.' The memory 3210 may allow the UE 3200 to access instructions, application programs and the like, stored on transitory or non-transitory memory media, to off-load data, or to upload data. An article of manufacture, such as one utilizing a communication system may be tangibly embodied as or in the memory 3210, which may be or comprise a device-readable storage medium.

The processing circuitry 3202 may be configured to communicate with an access network or other network using the communication interface 3212. The communication interface 3212 may comprise one or more communication subsystems and may include or be communicatively coupled to an antenna 3222. The communication interface 3212 may include one or more transceivers used to communicate, such as by communicating with one or more remote transceivers of another device capable of wireless communication (e.g., another UE or a network node in an access network). Each transceiver may include a transmitter 3218 and/or a receiver 3220 appropriate to provide network communications (e.g., optical, electrical, frequency allocations, and so forth). Moreover, the transmitter 3218 and receiver 3220 may be coupled to one or more antennas (e.g., antenna 3222) and may share circuit components, software or firmware, or alternatively be implemented separately.

In the illustrated embodiment, communication functions of the communication interface 3212 may include cellular communication, Wi-Fi communication, LPWAN communication, data communication, voice communication, multimedia communication, short-range communications such as Bluetooth, near-field communication, location-based communication such as the use of the global positioning system (GPS) to determine a location, another like communication function, or any combination thereof. Communications may be implemented in according to one or more communication protocols and/or standards, such as IEEE 802.11, Code Division Multiplexing Access (CDMA), Wideband Code Division Multiple Access (WCDMA), GSM, LTE, New Radio (NR), UMTS, WiMax, Ethernet, transmission control protocol/internet protocol (TCP/IP), synchronous optical networking (SONET), Asynchronous Transfer Mode (ATM), QUIC, Hypertext Transfer Protocol (HTTP), and so forth.

Regardless of the type of sensor, a UE may provide an output of data captured by its sensors, through its communication interface 3212, via a wireless connection to a network node. Data captured by sensors of a UE can be communicated through a wireless connection to a network node via another UE. The output may be periodic (e.g., once every 15 minutes if it reports the sensed temperature), random (e.g., to even out the load from reporting from several sensors), in response to a triggering event (e.g., when moisture is detected an alert is sent), in response to a request (e.g., a user initiated request), or a continuous stream (e.g., a live video feed of a patient).

As another example, a UE comprises an actuator, a motor, or a switch, related to a communication interface configured to receive wireless input from a network node via a wireless connection. In response to the received wireless input the states of the actuator, the motor, or the switch may change. For example, the UE may comprise a motor that adjusts the control surfaces or rotors of a drone in flight according to the received input or to a robotic arm performing a medical procedure according to the received input.

A UE, when in the form of an Internet of Things (IoT) device, may be a device for use in one or more application domains, these domains comprising, but not limited to, city wearable technology, extended industrial application and healthcare. Non-limiting examples of such an IoT device are a device which is or which is embedded in: a connected refrigerator or freezer, a TV, a connected lighting device, an electricity meter, a robot vacuum cleaner, a voice controlled smart speaker, a home security camera, a motion detector, a thermostat, a smoke detector, a door/window sensor, a flood/moisture sensor, an electrical door lock, a connected doorbell, an air conditioning system like a heat pump, an autonomous vehicle, a surveillance system, a weather monitoring device, a vehicle parking monitoring device, an electric vehicle charging station, a smart watch, a fitness tracker, a head-mounted display for Augmented Reality (AR) or Virtual Reality (VR), a wearable for tactile augmentation or sensory enhancement, a water sprinkler, an animal- or item-tracking device, a sensor for monitoring a plant or animal, an industrial robot, an Unmanned Aerial Vehicle (UAV), and any kind of medical device, like a heart rate monitor or a remote controlled surgical robot. A UE in the form of an IoT device comprises circuitry and/or software in dependence of the intended application of the IoT device in addition to other components as described in relation to the UE 3200 shown in Figure 32.

As yet another specific example, in an IoT scenario, a UE may represent a machine or other device that performs monitoring and/or measurements, and transmits the results of such monitoring and/or measurements to another UE and/or a network node. The UE may in this case be an M2M device, which may in a 3GPP context be referred to as an MTC device. As one particular example, the UE may implement the 3GPP NB-IoT standard. In other scenarios, a UE may represent a vehicle, such as a car, a bus, a truck, a ship and an airplane, or other equipment that is capable of monitoring and/or reporting on its operational status or other functions associated with its operation.

In practice, any number of UEs may be used together with respect to a single use case. For example, a first UE might be or be integrated in a drone and provide the drone's speed information (obtained through a speed sensor) to a second UE that is a remote controller operating the drone. When the user makes changes from the remote controller, the first UE may adjust the throttle on the drone (e.g. by controlling an actuator) to increase or decrease the drone's speed. The first and/or the second UE can also include more than one of the functionalities described above. For example, a UE might comprise the sensor and the actuator, and handle communication of data for both the speed sensor and the actuators.

Figure 33 shows a network node 3300 in accordance with some embodiments. As used herein, network node refers to equipment capable, configured, arranged and/or operable to communicate directly or indirectly with a UE and/or with other network nodes or equipment, in a telecommunication network. Examples of network nodes include, but are not limited to, access points (APs) (e.g., radio access points), base stations (BSs) (e.g., radio base stations, Node Bs, evolved Node Bs (eNBs) and NR NodeBs (gNBs)).

Base stations may be categorized based on the amount of coverage they provide (or, stated differently, their transmit power level) and so, depending on the provided amount of coverage, may be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS).

Other examples of network nodes include multiple transmission point (multi-TRP) 5G access nodes, multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), Operation and Maintenance (O&M) nodes, Operations Support System (OSS) nodes, Self-Organizing Network (SON) nodes, positioning nodes (e.g., Evolved Serving Mobile Location Centers (E-SMLCs)), and/or Minimization of Drive Tests (MDTs).

The network node 3300 includes a processing circuitry 3302, a memory 3304, a communication interface 3306, and a power source 3308. The network node 3300 may be composed of multiple physically separate components (e.g., a NodeB component and a RNC component, or a BTS component and a BSC component, etc.), which may each have their own respective components. In certain scenarios in which the network node 3300 comprises multiple separate components (e.g., BTS and BSC components), one or more of the separate components may be shared among several network nodes. For example, a single RNC may control multiple NodeBs. In such a scenario, each unique NodeB and RNC pair, may in some instances be considered a single separate network node. In some embodiments, the network node 3300 may be configured to support multiple radio access technologies (RATs). In such embodiments, some components may be duplicated (e.g., separate memory 3304 for different RATs) and some components may be reused (e.g., a same antenna 3310 may be shared by different RATs). The network node 3300 may also include multiple sets of the various illustrated components for different wireless technologies integrated into network node 3300, for example GSM, WCDMA, LTE, NR, WiFi, Zigbee, Z-wave, LoRaWAN, Radio Frequency Identification (RFID) or Bluetooth wireless technologies. These wireless technologies may be integrated into the same or different chip or set of chips and other components within network node 3300.

The processing circuitry 3302 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 3300 components, such as the memory 3304, to provide network node 3300 functionality.

In some embodiments, the processing circuitry 3302 includes a system on a chip (SOC). In some embodiments, the processing circuitry 3302 includes one or more of radio frequency (RF) transceiver circuitry 3312 and baseband processing circuitry 3314. In some embodiments, the radio frequency (RF) transceiver circuitry 3312 and the baseband processing circuitry 3314 may be on separate chips (or sets of chips), boards, or units, such as radio units and digital units. In alternative embodiments, part or all of RF transceiver circuitry 3312 and baseband processing circuitry 3314 may be on the same chip or set of chips, boards, or units.

The memory 3304 may comprise any form of volatile or non-volatile computer-readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device-readable and/or computer-executable memory devices that store information, data, and/or instructions that may be used by the processing circuitry 3302. The memory 3304 may store any suitable instructions, data, or information, including a computer program, software, an application including one or more of logic, rules, code, tables, and/or other instructions capable of being executed by the processing circuitry 3302 and utilized by the network node 3300. The memory 3304 may be used to store any calculations made by the processing circuitry 3302 and/or any data received via the communication interface 3306. In some embodiments, the processing circuitry 3302 and memory 3304 is integrated.

The communication interface 3306 is used in wired or wireless communication of signaling and/or data between a network node, access network, and/or UE. As illustrated, the communication interface 3306 comprises port(s)/terminal(s) 3316 to send and receive data, for example to and from a network over a wired connection. The communication interface 3306 also includes radio front-end circuitry 3318 that may be coupled to, or in certain embodiments a part of, the antenna 3310. Radio front-end circuitry 3318 comprises filters 3320 and amplifiers 3322. The radio front-end circuitry 3318 may be connected to an antenna 3310 and processing circuitry 3302. The radio front-end circuitry may be configured to condition signals communicated between antenna 3310 and processing circuitry 3302. The radio front-end circuitry 3318 may receive digital data that is to be sent out to other network nodes or UEs via a wireless connection. The radio front-end circuitry 3318 may convert the digital data into a radio signal having the appropriate channel and bandwidth parameters using a combination of filters 3320 and/or amplifiers 3322. The radio signal may then be transmitted via the antenna 3310.

Similarly, when receiving data, the antenna 3310 may collect radio signals which are then converted into digital data by the radio front-end circuitry 3318. The digital data may be passed to the processing circuitry 3302. In other embodiments, the communication interface may comprise different components and/or different combinations of components.

In certain alternative embodiments, the network node 3300 does not include separate radio front-end circuitry 3318, instead, the processing circuitry 3302 includes radio front-end circuitry and is connected to the antenna 3310. Similarly, in some embodiments, all or some of the RF transceiver circuitry 3312 is part of the communication interface 3306. In still other embodiments, the communication interface 3306 includes one or more ports or terminals 3316, the radio front-end circuitry 3318, and the RF transceiver circuitry 3312, as part of a radio unit (not shown), and the communication interface 3306 communicates with the baseband processing circuitry 3314, which is part of a digital unit (not shown).

The antenna 3310 may include one or more antennas, or antenna arrays, configured to send and/or receive wireless signals. The antenna 3310 may be coupled to the radio front-end circuitry 3318 and may be any type of antenna capable of transmitting and receiving data and/or signals wirelessly. In certain embodiments, the antenna 3310 is separate from the network node 3300 and connectable to the network node 3300 through an interface or port.

The antenna 3310, communication interface 3306, and/or the processing circuitry 3302 may be configured to perform any receiving operations and/or certain obtaining operations described herein as being performed by the network node. Any information, data and/or signals may be received from a UE, another network node and/or any other network equipment. Similarly, the antenna 3310, the communication interface 3306, and/or the processing circuitry 3302 may be configured to perform any transmitting operations described herein as being performed by the network node. Any information, data and/or signals may be transmitted to a UE, another network node and/or any other network equipment.

The power source 3308 provides power to the various components of network node 3300 in a form suitable for the respective components (e.g., at a voltage and current level needed for each respective component). The power source 3308 may further comprise, or be coupled to, power management circuitry to supply the components of the network node 3300 with power for performing the functionality described herein. For example, the network node 3300 may be connectable to an external power source (e.g., the power grid, an electricity outlet) via an input circuitry or interface such as an electrical cable, whereby the external power source supplies power to power circuitry of the power source 3308. As a further example, the power source 3308 may comprise a source of power in the form of a battery or battery pack which is connected to, or integrated in, power circuitry. The battery may provide backup power should the external power source fail.

Embodiments of the network node 3300 may include additional components beyond those shown in Figure 33 for providing certain aspects of the network node's functionality, including any of the functionality described herein and/or any functionality necessary to support the subject matter described herein. For example, the network node 3300 may include user interface equipment to allow input of information into the network node 3300 and to allow output of information from the network node 3300. This may allow a user to perform diagnostic, maintenance, repair, and other administrative functions for the network node 3300.

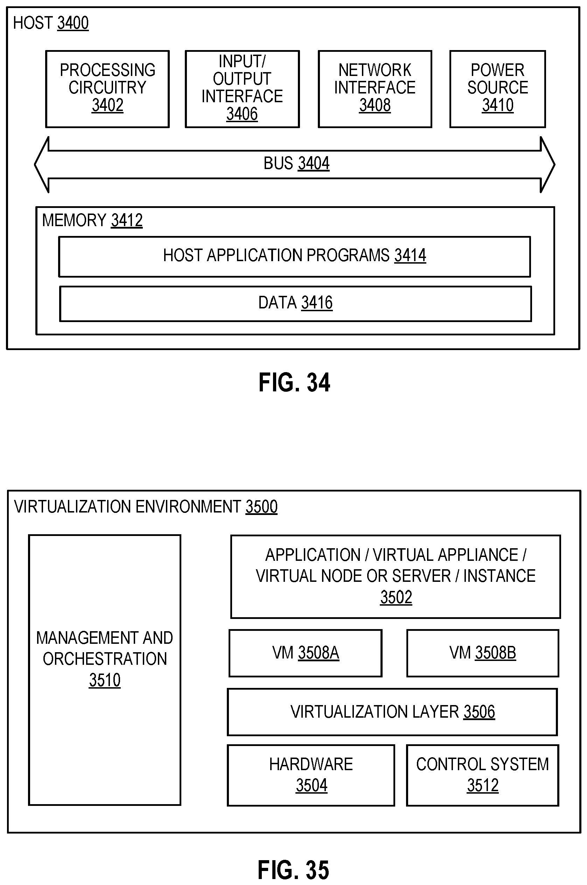

Figure 34 is a block diagram of a host 3400, which may be an embodiment of the host 3116 of Figure 31, in accordance with various aspects described herein. As used herein, the host 3400 may be or comprise various combinations hardware and/or software, including a standalone server, a blade server, a cloud-implemented server, a distributed server, a virtual machine, container, or processing resources in a server farm. The host 3400 may provide one or more services to one or more UEs.

The host 3400 includes processing circuitry 3402 that is operatively coupled via a bus 3404 to an input/output interface 3406, a network interface 3408, a power source 3410, and a memory 3412. Other components may be included in other embodiments. Features of these components may be substantially similar to those described with respect to the devices of previous figures, such as Figures 32 and 33, such that the descriptions thereof are generally applicable to the corresponding components of host 3400.

The memory 3412 may include one or more computer programs including one or more host application programs 3414 and data 3416, which may include user data, e.g., data generated by a UE for the host 3400 or data generated by the host 3400 for a UE. Embodiments of the host 3400 may utilize only a subset or all of the components shown. The host application programs 3414 may be implemented in a container-based architecture and may provide support for video codecs (e.g., Versatile Video Coding (VVC), High Efficiency Video Coding (HEVC), Advanced Video Coding (AVC), MPEG, VP9) and audio codecs (e.g., FLAC, Advanced Audio Coding (AAC), MPEG, G.711), including transcoding for multiple different classes, types, or implementations of UEs (e.g., handsets, desktop computers, wearable display systems, heads-up display systems). The host application programs 3414 may also provide for user authentication and licensing checks and may periodically report health, routes, and content availability to a central node, such as a device in or on the edge of a core network. Accordingly, the host 3400 may select and/or indicate a different host for over-the-top services for a UE. The host application programs 3414 may support various protocols, such as the HTTP Live Streaming (HLS) protocol, Real-Time Messaging Protocol (RTMP), Real-Time Streaming Protocol (RTSP), Dynamic Adaptive Streaming over HTTP (MPEG-DASH), etc.

Figure 35 is a block diagram illustrating a virtualization environment 3500 in which functions implemented by some embodiments may be virtualized. In the present context, virtualizing means creating virtual versions of apparatuses or devices which may include virtualizing hardware platforms, storage devices and networking resources. As used herein, virtualization can be applied to any device described herein, or components thereof, and relates to an implementation in which at least a portion of the functionality is implemented as one or more virtual components. Some or all of the functions described herein may be implemented as virtual components executed by one or more virtual machines (VMs) implemented in one or more virtual environments 3500 hosted by one or more of hardware nodes, such as a hardware computing device that operates as a network node, UE, core network node, or host. Further, in embodiments in which the virtual node does not require radio connectivity (e.g., a core network node or host), then the node may be entirely virtualized.

Applications 3502 (which may alternatively be called software instances, virtual appliances, network functions, virtual nodes, virtual network functions, etc.) are run in the virtualization environment Q400 to implement some of the features, functions, and/or benefits of some of the embodiments disclosed herein.

Hardware 3504 includes processing circuitry, memory that stores software and/or instructions executable by hardware processing circuitry, and/or other hardware devices as described herein, such as a network interface, input/output interface, and so forth. Software may be executed by the processing circuitry to instantiate one or more virtualization layers 3506 (also referred to as hypervisors or virtual machine monitors (VMMs)), provide VMs 3508a and 3508b (one or more of which may be generally referred to as VMs 3508), and/or perform any of the functions, features and/or benefits described in relation with some embodiments described herein. The virtualization layer 3506 may present a virtual operating platform that appears like networking hardware to the VMs 3508.

The VMs 3508 comprise virtual processing, virtual memory, virtual networking or interface and virtual storage, and may be run by a corresponding virtualization layer 3506. Different embodiments of the instance of a virtual appliance 3502 may be implemented on one or more of VMs 3508, and the implementations may be made in different ways. Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, a VM 3508 may be a software implementation of a physical machine that runs programs as if they were executing on a physical, non-virtualized machine. Each of the VMs 3508, and that part of hardware 3504 that executes that VM, be it hardware dedicated to that VM and/or hardware shared by that VM with others of the VMs, forms separate virtual network elements. Still in the context of NFV, a virtual network function is responsible for handling specific network functions that run in one or more VMs 3508 on top of the hardware 3504 and corresponds to the application 3502.

Hardware 3504 may be implemented in a standalone network node with generic or specific components. Hardware 3504 may implement some functions via virtualization. Alternatively, hardware 3504 may be part of a larger cluster of hardware (e.g. such as in a data center or CPE) where many hardware nodes work together and are managed via management and orchestration 3510, which, among others, oversees lifecycle management of applications 3502. In some embodiments, hardware 3504 is coupled to one or more radio units that each include one or more transmitters and one or more receivers that may be coupled to one or more antennas. Radio units may communicate directly with other hardware nodes via one or more appropriate network interfaces and may be used in combination with the virtual components to provide a virtual node with radio capabilities, such as a radio access node or a base station. In some embodiments, some signaling can be provided with the use of a control system 3512 which may alternatively be used for communication between hardware nodes and radio units.

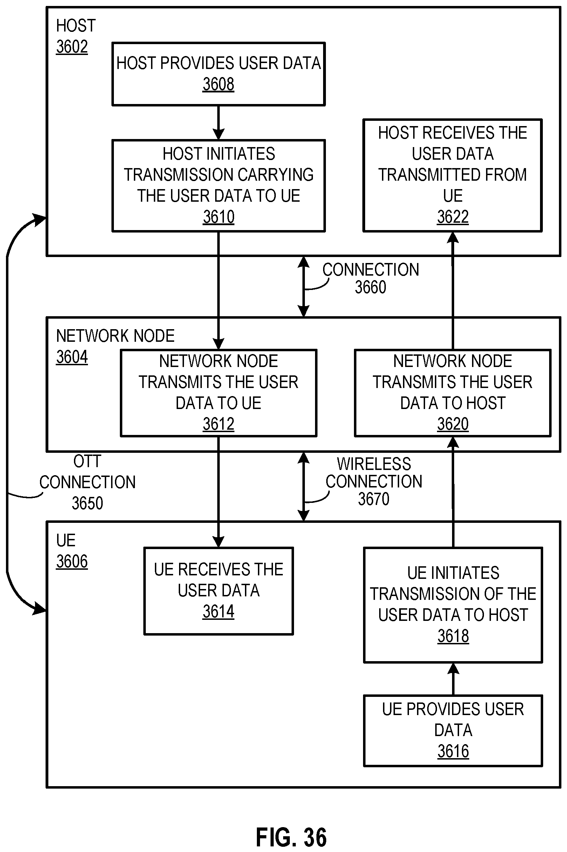

Figure 36 shows a communication diagram of a host 3602 communicating via a network node 3604 with a UE 3606 over a partially wireless connection in accordance with some embodiments. Example implementations, in accordance with various embodiments, of the UE (such as a UE 3112a of Figure 31 and/or UE 3200 of Figure 32), network node (such as network node 3110a of Figure 31 and/or network node 3300 of Figure 33), and host (such as host 3116 of Figure 31 and/or host 3400 of Figure 34) discussed in the preceding paragraphs will now be described with reference to Figure 36.

Like host 3400, embodiments of host 3602 include hardware, such as a communication interface, processing circuitry, and memory. The host 3602 also includes software, which is stored in or accessible by the host 3602 and executable by the processing circuitry. The software includes a host application that may be operable to provide a service to a remote user, such as the UE 3606 connecting via an over-the-top (OTT) connection 3650 extending between the UE 3606 and host 3602. In providing the service to the remote user, a host application may provide user data which is transmitted using the OTT connection 3650.

The network node 3604 includes hardware enabling it to communicate with the host 3602 and UE 3606. The connection 3660 may be direct or pass through a core network (like core network 3106 of Figure 31) and/or one or more other intermediate networks, such as one or more public, private, or hosted networks. For example, an intermediate network may be a backbone network or the Internet.

The UE 3606 includes hardware and software, which is stored in or accessible by UE 3606 and executable by the UE's processing circuitry. The software includes a client application, such as a web browser or operator-specific "app" that may be operable to provide a service to a human or non-human user via UE 3606 with the support of the host 3602. In the host 3602, an executing host application may communicate with the executing client application via the OTT connection 3650 terminating at the UE 3606 and host 3602. In providing the service to the user, the UE's client application may receive request data from the host's host application and provide user data in response to the request data. The OTT connection 3650 may transfer both the request data and the user data. The UE's client application may interact with the user to generate the user data that it provides to the host application through the OTT connection 3650.

The OTT connection 3650 may extend via a connection 3660 between the host 3602 and the network node 3604 and via a wireless connection 3670 between the network node 3604 and the UE 3606 to provide the connection between the host 3602 and the UE 3606. The connection 3660 and wireless connection 3670, over which the OTT connection 3650 may be provided, have been drawn abstractly to illustrate the communication between the host 3602 and the UE 3606 via the network node 3604, without explicit reference to any intermediary devices and the precise routing of messages via these devices.

As an example of transmitting data via the OTT connection 3650, in step 3608, the host 3602 provides user data, which may be performed by executing a host application. In some embodiments, the user data is associated with a particular human user interacting with the UE 3606. In other embodiments, the user data is associated with a UE 3606 that shares data with the host 3602 without explicit human interaction. In step 3610, the host 3602 initiates a transmission carrying the user data towards the UE 3606. The host 3602 may initiate the transmission responsive to a request transmitted by the UE 3606. The request may be caused by human interaction with the UE 3606 or by operation of the client application executing on the UE 3606. The transmission may pass via the network node 3604, in accordance with the teachings of the embodiments described throughout this disclosure. Accordingly, in step 3612, the network node 3604 transmits to the UE 3606 the user data that was carried in the transmission that the host 3602 initiated, in accordance with the teachings of the embodiments described throughout this disclosure. In step 3614, the UE 3606 receives the user data carried in the transmission, which may be performed by a client application executed on the UE 3606 associated with the host application executed by the host 3602.

In some examples, the UE 3606 executes a client application which provides user data to the host 3602. The user data may be provided in reaction or response to the data received from the host 3602. Accordingly, in step 3616, the UE 3606 may provide user data, which may be performed by executing the client application. In providing the user data, the client application may further consider user input received from the user via an input/output interface of the UE 3606. Regardless of the specific manner in which the user data was provided, the UE 3606 initiates, in step 3618, transmission of the user data towards the host 3602 via the network node 3604. In step 3620, in accordance with the teachings of the embodiments described throughout this disclosure, the network node 3604 receives user data from the UE 3606 and initiates transmission of the received user data towards the host 3602. In step 3622, the host 3602 receives the user data carried in the transmission initiated by the UE 3606.

One or more of the various embodiments improve the performance of OTT services provided to the UE 3606 using the OTT connection 3650, in which the wireless connection 3670 forms the last segment.

In an example scenario, factory status information may be collected and analyzed by the host 3602. As another example, the host 3602 may process audio and video data which may have been retrieved from a UE for use in creating maps. As another example, the host 3602 may collect and analyze real-time data to assist in controlling vehicle congestion (e.g., controlling traffic lights). As another example, the host 3602 may store surveillance video uploaded by a UE. As another example, the host 3602 may store or control access to media content such as video, audio, VR or AR which it can broadcast, multicast or unicast to UEs. As other examples, the host 3602 may be used for energy pricing, remote control of non-time critical electrical load to balance power generation needs, location services, presentation services (such as compiling diagrams etc. from data collected from remote devices), or any other function of collecting, retrieving, storing, analyzing and/or transmitting data.

In some examples, a measurement procedure may be provided for the purpose of monitoring data rate, latency and other factors on which the one or more embodiments improve. There may further be an optional network functionality for reconfiguring the OTT connection 3650 between the host 3602 and UE 3606, in response to variations in the measurement results. The measurement procedure and/or the network functionality for reconfiguring the OTT connection may be implemented in software and hardware of the host 3602 and/or UE 3606. In some embodiments, sensors (not shown) may be deployed in or in association with other devices through which the OTT connection 3650 passes; the sensors may participate in the measurement procedure by supplying values of the monitored quantities exemplified above, or supplying values of other physical quantities from which software may compute or estimate the monitored quantities. The reconfiguring of the OTT connection 3650 may include message format, retransmission settings, preferred routing etc.; the reconfiguring need not directly alter the operation of the network node 3604. Such procedures and functionalities may be known and practiced in the art. In certain embodiments, measurements may involve proprietary UE signaling that facilitates measurements of throughput, propagation times, latency and the like, by the host 3602. The measurements may be implemented in that software causes messages to be transmitted, in particular empty or 'dummy' messages, using the OTT connection 3650 while monitoring propagation times, errors, etc.

Although the computing devices described herein (e.g., UEs, network nodes, hosts) may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Determining, calculating, obtaining or similar operations described herein may be performed by processing circuitry, which may process information by, for example, converting the obtained information into other information, comparing the obtained information or converted information to information stored in the network node, and/or performing one or more operations based on the obtained information or converted information, and as a result of said processing making a determination. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

**Claims**

1. A method performed by a communication device (12) configured for use in a communication network (10), the method comprising:
   transmitting (1900) signaling (20) indicating whether the communication device (12) is capable of demodulating a data channel (16) using a demodulation reference signal (18) scheduled without restricting a number of resource elements, resource blocks, or resource block groups to which the demodulation reference signal (18) is mapped to being an even number of contiguous resource blocks or an even number of contiguous resource blocks within any given resource block group in the frequency domain.

2. The method of claim 1, wherein the signaling (20) indicates that the communication device (12) is capable of demodulating the data channel (16) using a demodulation reference signal (18) scheduled without restricting the number of resource elements, resource blocks, or resource block groups to which the demodulation reference signal (18) is mapped to being a multiple of a length of a frequency-domain orthogonal cover code applied to the demodulation reference signal (18).

3. The method of any of claims 1-2, wherein the signaling (20) indicates that the communication device (12) is capable of demodulating the data channel (16) using a demodulation reference signal (18) that is separated from one or more other demodulation reference signals using a frequency-domain orthogonal cover code of a certain length and that is scheduled without restriction on the number of resource elements, resource blocks, or resource block groups to which the demodulation reference signal (18) is mapped.

4. The method of claim 3, wherein the certain length is 4.

5. The method of any of claims 1-4, wherein the signaling (20) indicates that the communication device (12) is capable of demodulating the data channel (16) using the demodulation reference signal (18), as scheduled without restriction on the number of resource elements, resource blocks, or resource block groups to which the demodulation reference signal (18) is mapped, if co-scheduled demodulation reference signal ports belonging to the same code division multiplexing group are super orthogonal to each other.

6. The method of any of claims 1-5, wherein the signaling (20) indicates that the communication device (12) is capable of demodulating the data channel (16) using a demodulation reference signal (18) scheduled without restriction on a number of resource elements, resource blocks, or resource block groups to which the demodulation reference signal

(18) is mapped, by indicating that the communication device (12) is capable of demodulating the data channel (16) using a demodulation reference signal (18):

mapped to orphaned demodulation reference signal resource elements;
mapped in the frequency domain to a number of demodulation reference signal resource elements that is not a multiple of a length of an orthogonal cover code applied in the frequency domain to the demodulation reference signal (18);
mapped in the frequency domain to an odd number of resource blocks or to a set of resource block groups that includes a resource block group with an odd number of resource blocks; or
mapped in the frequency domain to an odd number of contiguous resource blocks or to an odd number of contiguous resource blocks within any given resource block group.

7. A method performed by a network node (14) configured for use in a communication network (10), the method comprising:
monitoring for signaling (20) from a communication device (12) indicating whether the communication device (12) is capable of demodulating a data channel (16) using a demodulation reference signal (18) scheduled without restricting the number of resource elements, resource blocks, or resource block groups to which the demodulation reference signal (18) is mapped to being an even number of contiguous resource blocks or an even number of contiguous resource blocks within any given resource block group in the frequency domain.

8. The method of claim 7, wherein said monitoring comprises monitoring for signaling (20) indicating that the communication device (12) is capable of demodulating the data channel (16) using a demodulation reference signal (18) scheduled without restricting the number of resource elements, resource blocks, or resource block groups to which the demodulation reference signal (18) is mapped to being a multiple of a length of a frequency-domain orthogonal cover code applied to the demodulation reference signal (18).

9. The method of any of claims 7-8, wherein said monitoring comprises monitoring for signaling (20) indicating that the communication device (12) is capable of demodulating the data channel (16) using a demodulation reference signal (18) that is separated from one or more other demodulation reference signals using a frequency-domain orthogonal cover code of a certain length and that is scheduled without restriction on the number of resource elements, resource blocks, or resource block groups to which the demodulation reference signal (18) is mapped.

10. The method of claim 9, wherein the certain length is 4.

11. The method of any of claims 7-10, wherein said monitoring comprises monitoring for signaling (20) indicating that the communication device (12) is capable of demodulating the data channel (16) using the demodulation reference signal (18), as scheduled without restriction on the number of resource elements, resource blocks, or resource block groups to which the demodulation reference signal (18) is mapped, if co-scheduled demodulation reference signal ports belonging to the same code division multiplexing group are super orthogonal to each other.

12. A communication device (12) configured for use in a communication network (10), the communication device (12) configured to:
transmit signaling (20) indicating whether the communication device (12) is capable of demodulating a data channel (16) using a demodulation reference signal (18) scheduled without restricting on a number of resource elements, resource blocks, or resource block groups to which the demodulation reference signal (18) is mapped to being an even number of contiguous resource blocks or an even number of contiguous resource blocks within any given resource block group in the frequency domain.

13. The communication device (12) of claim 12, configured to perform the method of any of claims 2-6.

14. A network node (14) configured for use in a communication network (10), the network node (14) configured to:
monitor for signaling (20) from a communication device (12) indicating whether the communication device (12) is capable of demodulating a data channel (16) using a demodulation reference signal (18) scheduled without restricting on the number of resource elements, resource blocks, or resource block groups to which the demodulation reference signal (18) is mapped to being an even number of contiguous resource blocks or an even number of contiguous resource blocks within any given resource block group in the frequency domain.

15. The network node (14) of claim 14, configured to perform the method of any of claims 8-11.

**Patentansprüche**

1. Verfahren, durchgeführt von einem für den Gebrauch in einem Kommunikationsnetzwerk (10) konfigurierten Kommunikationsgerät (12), wobei das Verfahren Folgendes umfasst:

   Senden (1900) einer Signalisierung (20), welche anzeigt ob das Kommunikationsgerät (12) den Datenkanal (16) mittels geplantem Demodulationsreferenzsignal (18) demodulieren kann ohne Einschränkung der Anzahl der, dem Demodulierungsreferenzsignal (18) zugeordneten, Ressourcenelemente, Ressourcenblöcke oder Ressourcenblockgruppen auf eine gerade Anzahl an angrenzenden Ressourcenblöcken oder auf eine gerade Anzahl an angrenzenden Ressourcenblöcken innerhalb einer gegebenen Ressourcenblockgruppe in der Frequenzdomäne.

2. Verfahren nach Anspruch 1, wobei die Signalisierung (20) anzeigt, dass das Kommunikationsgerät (12) den Datenkanal (16) mittels geplantem Demodulierungsreferenzsignal (18) demodulieren kann ohne Einschränkung der Anzahl der, dem Demodulierungsreferenzsignal (18) zugeordneten, Ressourcenelemente, Ressourcenblöcke oder Ressourcenblockgruppen auf ein Vielfaches einer Länge eines auf das Demodulierungsreferenzsignal (18) angewendeten orthogonalen Deckungscodes einer Frequenzdomäne.

3. Verfahren nach einem der Ansprüche 1-2, wobei die Signalisierung (20) anzeigt, dass das Kommunikationsgerät (12) den Datenkanal (16) demodulieren kann mithilfe eines, von einem oder mehreren anderen Demodulierungsreferenzsignalen separaten, geplanten Demodulierungsreferenzsignals (18) unter Verwendung eines orthogonalen Deckungscodes von bestimmter Länge einer Frequenzdomäne ohne Einschränkung der Anzahl der, dem Demodulierungsreferenzsignal (18) zugeordneten, Ressourcenelemente, Ressourcenblöcke oder Ressourcenblockgruppen.

4. Verfahren nach Anspruch 3, wobei die bestimmte Länge auf 4 festgelegt ist.

5. Verfahren nach einem der Ansprüche 1-4, wobei die Signalisierung (20) anzeigt, dass das Kommunikationsgerät (12) den Datenkanal (16) mittels geplantem Demodulierungsreferenzsignal (18) demodulieren kann ohne Einschränkung der Anzahl der, dem Demodulierungsreferenzsignal (18) zugeordneten, Ressourcenelemente, Ressourcenblöcke oder Ressourcenblockgruppen, sofern zeitgleich geplante Demodulierungsreferenzsignalschnittstellen derselben Code-Divisions-Multiplexing-Gruppe superorthogonal zueinander sind.

6. Verfahren nach einem der Ansprüche 1-5, wobei die Signalisierung (20) anzeigt, dass das Kommunikationsgerät (12) den Datenkanal (16) mittels geplantem Demodulierungsreferenzsignals (18) demodulieren kann ohne Einschränkung der Anzahl der, dem Demodulierungsreferenzsignal (18) zugeordneten, Ressourcenelemente, Ressourcenblöcke, oder Ressourcenblockgruppen, wobei angezeigt wird, dass das Kommunikationsgerät (12) den Datenkanal (16) mittels Demodulierungsreferenzsignals (18) demodulieren kann:

   Zugeordnet zu ungenutzten Demodulierungsreferenzsignalressourcenelementen;
   Zugeordnet in der Frequenzdomäne zu einer Anzahl an Demodulierungsreferenzsignalressourcenelementen, welche nicht ein Vielfaches einer Länge eines, in der Frequenzdomäne auf das Demodulierungsfrequenzsignal (18) angewendeten, orthogonalen Deckungscodes;
   Zugeordnet in der Frequenzdomäne zu einer ungeraden Anzahl an Ressourcenblöcken oder zu einer festgelegten Anzahl an Ressourcenblockgruppen inklusive einer Ressourcenblockgruppe mit einer ungeraden Anzahl an Ressourcenblöcken; oder
   Zugeordnet in der Frequenzdomäne zu einer ungeraden Anzahl an angrenzenden Ressourcenblöcken oder zu einer ungeraden Anzahl an angrenzenden Ressourcenblöcken innerhalb einer gegebenen Ressourcenblockgruppe.

7. Verfahren, durchgeführt von einem für den Gebrauch in einem Kommunikationsnetzwerk (10) konfigurierten Netzwerkknoten (14), wobei das Verfahren Folgendes umfasst:

   Überwachung von Signalisierung (20) ausgehend von einem Kommunikationsgerät (12), welche anzeigt, ob das Kommunikationsgerät (12) den Datenkanal (16) mittels geplantem Demodulierungsreferenzsignals (18) demodulieren kann ohne Einschränkung der Anzahl der, dem Demodulierungsreferenzsignal (18) zugeordneten, Ressourcenelemente, Ressourcenblöcke oder Ressourcenblockgruppen auf eine gerade Anzahl an angrenzenden Ressourcenblöcken oder auf eine gerade Anzahl an angrenzenden Ressourcenblöcken innerhalb einer gegebenen Ressourcenblockgruppe in der Frequenzdomäne.

8. Verfahren nach Anspruch 7, wobei besagte Überwachung das Überwachen der Signalisierung (20) umfasst, welche anzeigt, dass das Kommunikationsgerät (12) den Datenkanal (16) mittels geplantem Demodulierungsreferenzsignals (18) demodulieren kann, ohne Einschränkung der Anzahl der, dem Demodulierungsreferenzsignal (18) zugeordneten, Ressourcenelemente, Ressourcenblöcke, oder Ressourcenblockgruppen auf ein Vielfaches einer Länge eines, auf das Demodulierungsreferenzsignal (18) angewendeten, orthogonalen Deckungscodes einer Frequenzdomäne.

9. Verfahren nach einem der Ansprüche 7-8, wobei besagte Überwachung das Überwachen der Signalisierung (20) umfasst, welche anzeigt, dass das Kommunikationsgerät (12) den Datenkanal (16) mittels eines, von einem oder mehreren Demodulierungsreferenzsignalen separatem, Demodulierungsreferenzsignals (18) demodulieren kann, wobei ein orthogonaler Deckungscode einer bestimmten Länge in einer Frequenzdomäne angewandt wird und welcher geplant ist ohne Einschränkung der Anzahl der, dem Demodulierungsreferenzsignal (18) zugeordneten, Ressourcenelemente, Ressourcenblöcke oder Ressourcenblockgruppen.

10. Verfahren nach Anspruch 9, wobei die bestimmte Länge auf 4 festgelegt ist.

11. Verfahren nach einem der Ansprüche 7-10, wobei besagte Überwachung das Überwachen der Signalisierung (20) umfasst, welche anzeigt, dass das Kommunikationsgerät (12) den Datenkanal (16) mittels Demodulierungsreferenzsignal (18) wie geplant demodulieren kann ohne Einschränkung der Anzahl der, dem Demodulierungsreferenzsignal (18) zugeordneten, Ressourcenelemente, Ressourcenblöcke oder Ressourcenblockgruppen sofern zeitgleich geplante Demodulierungsreferenzsignalschnittstellen derselben Code-Divisions-Multiplexing-Gruppe superorthogonal zueinander sind.

12. Ein für den Gebrauch im Kommunikationsnetzwerk konfiguriertes Kommunikationsgerät (12), wobei das Kommunikationsgerät (12) zu Folgendem konfiguriert ist:
Senden der Signalisierung (20), welche anzeigt, ob das Kommunikationsgerät (12) den Datenkanal (16) mittels geplantem Demodulierungsreferenzsignal (18) demodulieren kann ohne Einschränkung der Anzahl der, dem Demodulierungsreferenzsignal (18) zugeordneten, Ressourcenelemente, Ressourcenblöcke oder Ressourcenblockgruppen auf eine gerade Anzahl an angrenzenden Ressourcenblöcken oder auf eine gerade Anzahl an angrenzenden Ressourcenblöcken innerhalb einer gegebenen Ressourcenblockgruppe in der Frequenzdomäne.

13. Das Kommunikationsgerät (12) nach Anspruch 12, welches konfiguriert ist, das Verfahren nach einem der Ansprüche 2-6 durchzuführen.

14. Ein für den Gebrauch in einem Kommunikationsnetzwerk konfigurierter Netzwerkknoten (14), wobei der Netzwerkknoten (14) zu Folgendem konfiguriert ist:
Überwachen der Signalisierung (20) ausgehend von einem Kommunikationsgerät (12), welche anzeigt ob das Kommunikationsgerät (12) den Datenkanal (16) mittels eines geplanten Demodulierungsreferenzsignals (18) demodulieren kann ohne Einschränkung der Anzahl der, dem Demodulierungsreferenzsignal (18) zugeordneten, Ressourcenelemente, Ressourcenblöcke oder Ressourcenblockgruppen auf eine gerade Anzahl an angrenzenden Ressourcenblöcken oder auf eine gerade Anzahl an angrenzenden Ressourcenblöcken innerhalb einer gegebenen Ressourcenblockgruppe in der Frequenzdomäne.

15. Der Netzwerkknoten (14) nach Anspruch 14, welcher konfiguriert ist, das Verfahren nach einem der Ansprüche 8-11 durchzuführen.

**Revendications**

1. Procédé mis en œuvre par un dispositif de communication (12) configuré pour être utilisé dans un réseau de communication (10), le procédé comprenant :
la transmission (1900) d'une signalisation (20) indiquant si le dispositif de communication (12) est capable de démoduler un canal de données (16) à l'aide d'un signal de référence de démodulation (18) programmé sans restreindre un nombre d'éléments de ressources, des blocs de ressources ou des groupes de blocs de ressources auxquels le signal de référence de démodulation (18) est mappé pour être un nombre pair de blocs de ressources contigus ou un nombre pair de blocs de ressources contigus au sein d'un groupe de blocs de ressources donné dans le domaine fréquentiel.

2. Procédé selon la revendication 1, dans lequel la signalisation (20) indique que le dispositif de communication (12) est capable de démoduler le canal de données (16) à l'aide d'un signal de référence de démodulation (18) programmé sans limiter le nombre d'éléments de ressources, de blocs de ressources ou de groupes de blocs de ressources auxquels le signal de référence de démodulation (18) est mappé pour être un multiple d'une longueur d'un code de couverture orthogonal dans le domaine fréquentiel appliqué au signal de référence de démodulation (18).

3. Procédé selon l'une quelconque des revendications 1 à 2, dans lequel la signalisation (20) indique que le dispositif de communication (12) est capable de démoduler le canal de données (16) à l'aide d'un signal de référence de démodulation (18) qui est séparé d'un ou plusieurs autres signaux de référence de démodulation à l'aide d'un code de couverture orthogonal dans le domaine fréquentiel d'une certaine longueur et qui est programmé sans restriction sur le nombre d'éléments de ressources, de blocs de ressources ou groupes de blocs de ressources auxquels le signal de référence de démodulation (18) est mappé.

4. Procédé selon la revendication 3, dans lequel la longueur est de 4.

5. Procédé selon l'une quelconque des revendications 1 à 4, dans lequel la signalisation (20) indique que le dispositif de communication (12) est capable de démoduler le canal de données (16) à l'aide du signal de référence de démodulation (18), programmé sans restriction sur le nombre d'éléments de ressources, de blocs de ressources ou de groupes de blocs de ressources auxquels le signal de référence de démodulation (18) est mappé, si les ports de signal de référence de démodulation co-programmés appartenant au même groupe de multiplexage par répartition de code sont super orthogonaux les uns par rapport aux autres.

6. Procédé selon l'une quelconque des revendications 1 à 5, dans lequel la signalisation (20) indique que le dispositif de communication (12) est capable de démoduler le canal de données (16) à l'aide d'un signal de référence de démodulation (18) programmé sans restriction sur le nombre d'éléments de ressources, de blocs de ressources ou de groupes de blocs de ressources auxquels le signal de référence de démodulation (18) est mappé, en indiquant que le dispositif de communication (12) est capable de démoduler le canal de données (16) à l'aide d'un signal de référence de démodulation (18) :

mappé à des éléments de ressource de signal de référence de démodulation orphelins;
mappé dans le domaine fréquentiel à un nombre d'éléments de ressources de signal de référence de démodulation qui n'est pas un multiple d'une longueur d'un code de couverture orthogonal appliqué dans le domaine fréquentiel au signal de référence de démodulation (18) ;
mappé dans le domaine fréquentiel à un nombre impair de blocs de ressources ou à un ensemble de groupes de blocs de ressources qui comprend un groupe de blocs de ressources avec un nombre impair de blocs de ressources ; ou
mappé dans le domaine fréquentiel à un nombre impair de blocs de ressources contigus ou à un nombre impair de blocs de ressources contigus au sein d'un groupe de blocs de ressources donné.

7. Procédé mis en œuvre par un nœud de réseau (14) configuré pour être utilisé dans un réseau de communication (10), le procédé comprenant :
la surveillance d'une signalisation (20) provenant d'un dispositif de communication (12) indiquant si le dispositif de communication (12) est capable de démoduler un canal de données (16) à l'aide d'un signal de référence de démodulation (18) programmé sans restreindre le nombre d'éléments de ressources, des blocs de ressources ou des groupes de blocs de ressources auxquels le signal de référence de démodulation (18) est mappé pour être un nombre pair de blocs de ressources contigus ou un nombre pair de blocs de ressources contigus au sein d'un groupe de blocs de ressources donné dans le domaine fréquentiel.

8. Procédé selon la revendication 7, dans lequel ladite surveillance comprend la surveillance d'une signalisation (20) indiquant que le dispositif de communication (12) est capable de démoduler le canal de données (16) à l'aide d'un signal de référence de démodulation (18) programmé sans restreindre le nombre d'éléments de ressources, de blocs de ressources ou de groupes de blocs de ressources auxquels le signal de référence de démodulation (18) est mappé pour être un multiple d'une longueur d'un code de couverture orthogonal dans le domaine fréquentiel appliqué au signal de référence de démodulation (18).

9. Procédé selon l'une quelconque des revendications 7 à 8, dans lequel ladite surveillance comprend la surveillance d'une signalisation (20) indiquant que le dispositif de communication (12) est capable de démoduler le canal de données (16) à l'aide d'un signal de référence de démodulation (18) qui est séparé d'un ou plusieurs autres signaux de référence de démodulation à l'aide d'un code de couverture orthogonal dans le domaine fréquentiel d'une certaine longueur et qui est programmé sans restriction sur le nombre d'éléments de ressources, de blocs de ressources ou groupes de blocs de ressources auxquels le signal de référence de démodulation (18) est mappé.

10. Procédé selon la revendication 9, dans lequel la longueur est de 4.

11. Procédé selon l'une quelconque des revendications 7 à 10, dans lequel ladite surveillance comprend la surveillance d'une signalisation (20) indiquant que le dispositif de communication (12) est capable de démoduler le canal de données (16) à l'aide du signal de référence de démodulation (18), programmeé sans restriction sur le nombre d'éléments de ressources, de blocs de ressources ou de groupes de blocs de ressources auxquels le signal de référence de démodulation (18) est mappé, si les ports de signal de référence de démodulation co-programmés appartenant au même groupe de multiplexage par répartition de code sont super orthogonaux les uns par rapport aux autres.

12. Dispositif de communication (12) configuré pour être utilisé dans un réseau de communication (10), le dispositif de communication (12) étant configuré pour :
transmettre une signalisation (20) indiquant si le dispositif de communication (12) est capable de démoduler un canal de données (16) à l'aide d'un signal de référence de démodulation (18) programmé sans restriction sur un nombre d'éléments de ressources, blocs de ressources ou groupes de blocs de ressources auxquels le signal de référence de démodulation (18) est mappé pour être un nombre pair de blocs de ressources contigus ou un nombre pair de blocs de ressources contigus dans au sein d'un groupe de blocs de ressources donné dans le domaine fréquentiel.

13. Le dispositif de communication (12) selon la revendication 12, configuré pour exécuter le procédé selon l'une quelconque des revendications 2 à 6.

14. Nœud de réseau (14) configuré pour être utilisé dans un réseau de communication (10), le nœud de réseau (14) étant configuré pour :
surveiller la signalisation (20) provenant d'un dispositif de communication (12) indiquant si le dispositif de communication (12) est capable de démoduler un canal de données (16) à l'aide d'un signal de référence de démodulation (18) programmé sans restriction sur le nombre d'éléments de ressources, des blocs de ressources ou des groupes de blocs de ressources auxquels le signal de référence de démodulation (18) est mappé pour être un nombre pair de blocs de ressources contigus ou un nombre pair de blocs de ressources contigus au sein d'un groupe de blocs de ressources donné dans le domaine fréquentiel.

15. Le noeud de réseau (14) selon la revendication 14, configuré pour exécuter le procédé selon l'une quelconque des revendications 8 à 11.

FIG. 1

- NON-ORPHANED DMRS RES 24-N
- ORPHANED DMRS RES 24-O

CAPABILITY SIGNALING 20

NETWORK NODE 14

COMMUNICATION NETWORK 10

FREQUENCY

TIME

OCC 22

12

16

18

24

EP 4 505 655 B1

FIG. 2

FIG. 3

DEMODULATOR
34

SET OF CHANNEL ESTIMATE(S) 32-2

SET OF CHANNEL ESTIMATES 32-1

INTERPOLATION 42

ADDITIONAL CHANNEL ESTIMATES 44

COMBINER 46

SET OF CHANNEL ESTIMATES 32-3

NOISE AND INTERFERENCE SUPPRESSION 36

SET OF NOISE-AND-INTERFERENCE-SUPPRESSED CHANNEL ESTIMATE(S) 48

DEMODULATION 40

DEMODULATED DATA CHANNEL 16D

**FIG. 4**

FIG. 5

(a) type-1 single-symbol DMRS      (b) type-1 double-symbol DMRS

**FIG. 6A**

(c) type-2 single-symbol DMRS          (d) type-2 double-symbol DMRS

# FIG. 6B

EP 4 505 655 B1

(a) type-1 single-symbol, two additional DMRS

(b) type-1 double-symbol, two additional DMRS

**FIG. 7**

| CRB28 |
| CRB27 |
| CRB26 |
| CRB25 |
| CRB24 |
| CRB23 |
| CRB22 |
| CRB21 |
| CRB20 |
| CRB19 |
| CRB18 |
| CRB17 |
| CRB16 |
| CRB15 |
| CRB14 |
| CRB13 |
| CRB12 |
| CRB11 |
| CRB10 |
| CRB9 |
| CRB8 |
| CRB7 |
| CRB6 |
| CRB5 |
| CRB4 |
| CRB3 |
| CRB2 |
| CRB1 |
| CRB0 |

Point A →

| PRB11 |
| PRB10 |
| PRB9 |
| PRB8 |
| PRB7 |
| PRB6 |
| PRB5 |
| PRB4 |
| PRB3 |
| PRB2 |
| PRB1 |
| PRB0 |

| RBG6 |
| RGB5 |
| RGB4 |
| RGB3 |
| RGB2 |
| RGB1 |
| RGB0 |

BWP start = 7, BWP size = 12        RGB, P = 2

# FIG. 8

FIG. 9

FIG. 10

FIG. 11

**FIG. 12**

FIG. 13

**FIG. 14**

**FIG. 15**

FIG. 16

**FIG. 17**

FIG. 18

TRANSMITTING SIGNALING INDICATING THAT THE
COMMUNICATION DEVICE IS CAPABLE OF DEMODULATING A
DOWNLINK DATA CHANNEL USING A DEMODULATION
REFERENCE SIGNAL
1900

RECEIVING THE DEMODULATION REFERENCE SIGNAL
1910

RECEIVING THE DOWNLINK DATA CHANNEL
1920

DEMODULATING THE DOWNLINK DATA CHANNEL USING THE
DEMODULATION REFERENCE SIGNAL AS INDICATED IN THE
SIGNALING
1930

FIG. 19

RECEIVING SIGNALING INDICATING WHETHER A DOWNLINK
DATA CHANNEL OR A DEMODULATION REFERENCE SIGNAL
IS MAPPED TO A SET OF DEMODULATION REFERENCE
SIGNAL RESOURCE ELEMENTS
2000

RECEIVING THE DOWNLINK DATA CHANNEL OR THE
DEMODULATION REFERENCE SIGNAL ON THE SET OF
DEMODULATION REFERENCE SIGNAL RESOURCE
ELEMENTS ACCORDING TO THE SIGNALING
2010

**FIG. 20**

RECEIVING A MESSAGE WITH A FIELD WHOSE VALUE INDICATES A NUMBER OF RESOURCE BLOCKS ALLOCATED TO A DOWNLINK DATA CHANNEL, WHEREIN N IS A MAXIMUM NUMBER OF RESOURCE BLOCKS ALLOCABLE TO THE DOWNLINK DATA CHANNEL, WHEREIN THE LENGTH OF THE FIELD IS LESS THAN $\log_2 N$
2100

RECEIVING THE DOWNLINK DATA CHANNEL ON THE NUMBER OF RESOURCE BLOCKS INDICATED BY THE VALUE OF THE FIELD
2110

## FIG. 21

MONITORING FOR A DEMODULATION REFERENCE SIGNAL
TO BE RECEIVED ONLY ON AN EVEN NUMBER OF
CONTIGUOUS RESOURCE BLOCKS OR ONLY ON AN EVEN
NUMBER OF CONTIGUOUS RESOURCE BLOCKS WITHIN ANY
GIVEN RESOURCE BLOCK GROUP
2200

MONITORING FOR A DEMODULATION REFERENCE SIGNAL
WITH THE EXPECTATION THAT THE DEMODULATION
REFERENCE SIGNAL WILL BE RECEIVED ONLY ON AN EVEN
NUMBER OF CONTIGUOUS RESOURCE BLOCKS OR ONLY
ON AN EVEN NUMBER OF CONTIGUOUS RESOURCE BLOCKS
WITHIN ANY GIVEN RESOURCE BLOCK GROUP
2210

RECEIVING THE DEMODULATION REFERENCE SIGNAL
BASED ON SAID MONITORING
2220

RECEIVING A DOWNLINK DATA CHANNEL
2230

DEMODULATING THE DOWNLINK DATA CHANNEL USING THE
RECEIVED DEMODULATION REFERENCE SIGNAL
2220

FIG. 22

RECEIVING A DEMODULATION REFERENCE SIGNAL ON A SET OF DEMODULATION REFERENCE SIGNAL RESOURCE ELEMENTS, WHEREIN THE SET OF DEMODULATION REFERENCE SIGNAL RESOURCE ELEMENTS INCLUDES A SET OF ONE OR MORE ORPHANED DEMODULATION REFERENCE SIGNAL RESOURCE ELEMENTS
2300

FORMING A FIRST SET OF CHANNEL ESTIMATES FROM THE DEMODULATION REFERENCE SIGNAL AS RECEIVED ON A FIRST PORTION OF THE DEMODULATION REFERENCE SIGNAL RESOURCE ELEMENTS IN THE SET, WHEREIN THE FIRST PORTION EXCLUDES THE SET OF ONE OR MORE ORPHANED DEMODULATION REFERENCE SIGNAL RESOURCE ELEMENTS
2310

FORMING A SECOND SET OF ONE OR MORE CHANNEL ESTIMATES FROM THE DEMODULATION REFERENCE SIGNAL AS RECEIVED ON A SECOND PORTION OF THE DEMODULATION REFERENCE SIGNAL RESOURCE ELEMENTS IN THE SET, WHEREIN THE SECOND PORTION INCLUDES THE SET OF ONE OR MORE ORPHANED DEMODULATION REFERENCE SIGNAL RESOURCE ELEMENTS
2320

DEMODULATING A DATA CHANNEL USING THE FIRST SET OF CHANNEL ESTIMATES AND THE SECOND SETS OF ONE OR MORE CHANNEL ESTIMATES
2330

# FIG. 23

RECEIVING, FROM A COMMUNICATION DEVICE, SIGNALING
INDICATING THAT THE COMMUNICATION DEVICE IS
CAPABLE OF DEMODULATING A DOWNLINK DATA CHANNEL
USING A DEMODULATION REFERENCE SIGNAL
2400

TRANSMITTING THE DEMODULATION REFERENCE SIGNAL
BASED ON THE RECEIVED SIGNALING
2410

TRANSMITTING THE DOWNLINK DATA CHANNEL
2420

## FIG. 24

TRANSMITTING, TO A COMMUNICATION DEVICE, SIGNALING
INDICATING WHETHER A DOWNLINK DATA CHANNEL OR A
DEMODULATION REFERENCE SIGNAL IS MAPPED TO A SET
OF DEMODULATION REFERENCE SIGNAL RESOURCE
ELEMENTS
2500

TRANSMITTING THE DOWNLINK DATA CHANNEL OR THE
DEMODULATION REFERENCE SIGNAL ON THE SET OF
DEMODULATION REFERENCE SIGNAL RESOURCE
ELEMENTS ACCORDING TO THE SIGNALING
2510

**FIG. 25**

TRANSMITTING, TO A COMMUNICATION DEVICE, A MESSAGE WITH A FIELD WHOSE VALUE INDICATES A NUMBER OF RESOURCE BLOCKS ALLOCATED TO A DOWNLINK DATA CHANNEL, WHEREIN N IS A MAXIMUM NUMBER OF RESOURCE BLOCKS ALLOCABLE TO THE DOWNLINK DATA CHANNEL, WHEREIN THE LENGTH OF THE FIELD IS LESS THAN $\log_2 N$
2600

TRANSMITTING THE DOWNLINK DATA CHANNEL ON THE NUMBER OF RESOURCE BLOCKS INDICATED BY THE FIELD
2610

FIG. 26

TRANSMITTING A DEMODULATION REFERENCE SIGNAL TO A COMMUNICATION DEVICE ONLY ON AN EVEN NUMBER OF CONTIGUOUS RESOURCE BLOCKS OR ONLY ON AN EVEN NUMBER OF CONTIGUOUS RESOURCE BLOCKS WITHIN ANY GIVEN RESOURCE BLOCK GROUP
2700

TRANSMITTING A DOWNLINK DATA CHANNEL ON ORPHANED DEMODULATION REFERENCE SIGNAL RESOURCE ELEMENTS
2710

FIG. 27

RECEIVING, FROM A COMMUNICATION DEVICE, A
DEMODULATION REFERENCE SIGNAL ON A SET OF
DEMODULATION REFERENCE SIGNAL RESOURCE
ELEMENTS, WHEREIN THE SET OF DEMODULATION
REFERENCE SIGNAL RESOURCE ELEMENTS INCLUDES A
SET OF ONE OR MORE ORPHANED DEMODULATION
REFERENCE SIGNAL RESOURCE ELEMENTS
2800

FORMING A FIRST SET OF CHANNEL ESTIMATES FROM THE
DEMODULATION REFERENCE SIGNAL AS RECEIVED ON A
FIRST PORTION OF THE DEMODULATION REFERENCE
SIGNAL RESOURCE ELEMENTS IN THE SET, WHEREIN THE
FIRST PORTION EXCLUDES THE SET OF ONE OR MORE
ORPHANED DEMODULATION REFERENCE SIGNAL
RESOURCE ELEMENTS
2810

FORMING A SECOND SET OF ONE OR MORE CHANNEL
ESTIMATES FROM THE DEMODULATION REFERENCE
SIGNAL AS RECEIVED ON A SECOND PORTION OF THE
DEMODULATION REFERENCE SIGNAL RESOURCE
ELEMENTS IN THE SET, WHEREIN THE SECOND PORTION
INCLUDES THE SET OF ONE OR MORE ORPHANED
DEMODULATION REFERENCE SIGNAL RESOURCE
ELEMENTS
2820

DEMODULATING AN UPLINK DATA CHANNEL USING THE
FIRST SET OF CHANNEL ESTIMATES AND THE SECOND
SETS OF ONE OR MORE CHANNEL ESTIMATES
2830

## FIG. 28

COMMUNICATION DEVICE (E.G., UE)
12

PROCESSING
CIRCUITRY
2910

MEM
2930

COMM.
CIRCUITRY
2920

**FIG. 29**

NETWORK NODE
14

PROCESSING
CIRCUITRY
3010

MEM
3030

COMM.
CIRCUITRY
3020

**FIG. 30**

COMMUNICATION SYSTEM
3100

HOST
3116

TELECOMMUNICATION NETWORK
3102

CORE NETWORK
3106

CORE NETWORK
NODE
3108

ACCESS NETWORK
3104

NETWORK NODE
3110A

NETWORK NODE
3110B

UE
3112A

UE
3112B

HUB
3114

UE
3112C

UE
3112D

FIG. 31

UE 3200

| PROCESSING CIRCUITRY 3202 | INPUT/OUTPUT INTERFACE 3206 | POWER SOURCE 3208 |

BUS 3204

MEMORY 3210

APPLICATION PROGRAMS 3214

DATA 3216

COMMUNICATION INTERFACE 3212

TRANSMITTER 3218

RECEIVER 3220

ANTENNA 3222

**FIG. 32**

NETWORK NODE 3300

ANTENNA 3310

COMMUNICATION INTERFACE 3306

RADIO FRONT-END CIRCUITRY 3318

FILTER 3320

AMPLIFIER 3322

PORT / TERMINAL 3316

POWER SOURCE 3308

PROCESSING CIRCUITRY 3302

RF TRANSCEIVER CIRCUITRY 3312

BASEBAND CIRCUITRY 3314

MEMORY 3304

**FIG. 33**

HOST 3400

| PROCESSING CIRCUITRY 3402 | INPUT/ OUTPUT INTERFACE 3406 | NETWORK INTERFACE 3408 | POWER SOURCE 3410 |

BUS 3404

MEMORY 3412

HOST APPLICATION PROGRAMS 3414

DATA 3416

**FIG. 34**

VIRTUALIZATION ENVIRONMENT 3500

MANAGEMENT AND ORCHESTRATION 3510

APPLICATION / VIRTUAL APPLIANCE / VIRTUAL NODE OR SERVER / INSTANCE 3502

VM 3508A

VM 3508B

VIRTUALIZATION LAYER 3506

HARDWARE 3504

CONTROL SYSTEM 3512

**FIG. 35**

**FIG. 36**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021045101 A1